# EUROPEAN PATENT APPLICATION

(11) **EP 4 322 687 A1**
(43) Date of publication of application: **14.02.2024**
(21) Application number: 22784575.7
(22) Date of filing: 29.03.2022
(51) Int. Cl.: H04W 76/10, H04W 48/18, H04W 88/02

(54) **USER EQUIPMENT (UE) AND COMMUNICATION CONTROL METHOD**

(30) Priority: 09.04.2021 JP 2021066220
(71) Applicant: Sharp Kabushiki Kaisha, Sakai-shi Osaka 590-8522 (JP)
(72) Inventor: IZUMI, Masaki, Osaka 590-8522 (JP); KAWASAKI, Yudai, Osaka 590-8522 (JP); ARAMOTO, Masafumi, Osaka 590-8522 (JP)
(74) Representative: Müller Hoffmann & Partner
(86) International application number: PCT/JP2022/015408
(87) International publication number: WO 2022/215591

(57) **Abstract**

Although a user equipment (UE) needs to connect to and register with a non-public network (NPN) in a 5G system (5GS), the UE does not hold information regarding the NPN, and network selection to be performed and a connection mode of the UE are unclear in a case that the LTE connects to and registers with an ON. Communication means for providing NPN information to a UE in a case that the UE needs to connect to and register with an NPN in the 5G system (5GS) is implemented and means for determining network selection to be performed and a connection mode of the UE in a case that the UE connects to and registers with an ON is provided.

## Description

### Technical Field

The present disclosure relates to a user equipment (UE) and a communication control method.

### Background Art

The 3rd Generation Partnership Project (3GPP) has started to study system architectures for 5G systems (5GS) which are next-generation, i.e., 5th generation (5G), mobile communication systems and has discussed support for new procedures and new functions (see Non-Patent Literature 1, Non-Patent Literature 2, Non-Patent Literature 3, and Non-Patent Literature 4).

For example, optimization and diversification of communication procedures for supporting continuous mobile communication services associated with a wide variety of services and optimization of system architectures in accordance with the optimization and diversification of communication procedures have been mentioned as requirements.

### Citation List

### Non-Patent Literature

Non-Patent Literature 1: 3GPP TS 23.501 v17.0.0 (2021-03); Technical Specification Group Services and System Aspects; System Architecture for the 5G system; Stage 2 (Release 17)
Non-Patent Literature 2: 3GPP TS 23.502 v17.0.0 (2021-03); Technical Specification Group Services and System Aspects; Procedures for the 5G system; Stage 2 (Release 17)
Non-Patent Literature 3: 3GPP TS 24.501 v17.2.0 (2021-04); Technical Specification Group Core Network and Terminals; Non-Access-Stratum (NAS) protocol for 5G system (5GS); Stage 3 (Release 17)
Non-Patent Literature 4: 3GPP TR 23.700-07 v1.0.0 (2020-09); Technical Specification Group Services and System Aspects; Study on enhanced support of non-public networks (Release 17)

### Summary of the Invention

### Technical Problem

A 5G core network (5GCN), which is a new core network, has been studied in the 5G system (5GS) in order to provide a wide variety of services. Provision of a private network that specific users can use for specific purposes such as a non-public network (NPN) defined separately from a public land mobile network (PLMN) which is a public network and functions for realizing a private network have also been studied in the 5GS. Communication means between a UE and an onboarding network (ON) has also been studied as communication means for providing NPN information to a UE in a case that the UE needs to connect to and register with an NPN.

However, network selection to be performed in a case that a UE selects an ON is unclear. A connection mode of a LTE in a case that the LTE connects to an ON is also unclear.

An aspect of the present invention has been made in view of the above circumstances and it is an object of the present invention to provide a method of determining network selection to be performed and a connection mode of a UE in a case that the UE needs to connect to and register with an ON in the 5GS.

### Means for Solving the Problem

A user equipment (UE) of an aspect of the present invention includes a controller, wherein the controller is configured to select a stand-alone non-public network (SNPN) for an onboarding service in a case of operating in an SNPN access mode and perform a registration procedure for an onboarding service.

A communication control method of an aspect of the present invention is a communication control method performed by a user equipment (UE), the communication control method including selecting a stand-alone non-public network (SNPN) for an onboarding service in a case of operating in an SNPN access mode and performing a registration procedure for an onboarding service.

### Advantageous Effects of Invention

According to an aspect of the present invention, it is possible to determine network selection to be performed and a connection mode of a LTE in a case that the LTE needs to connect to and register with an ON in the 5GS while the UE does not hold information regarding an NPN.

### Brief Description of Drawings

FIG. 1 is a diagram explaining an outline of a mobile communication system (EPS/5GS).
FIG. 2 is a diagram explaining a detailed configuration of a mobile communication system (EPS/5GS).
FIG. 3 is a diagram explaining a device configuration of a LTE.
FIG. 4 is a diagram illustrating a configuration of an access network apparatus (gNB) in the 5GS.
FIG. 5 is a diagram explaining a configuration of a core network apparatus (AMF/SMF/LTPF) in the 5GS.
FIG. 6 is a diagram explaining a first procedure.
FIG. 7 is a diagram explaining a registration procedure.
FIG. 8 is a diagram explaining a PDU session establishment procedure.
FIG. 9 is a diagram explaining a network-initiated deregistration procedure.
FIG. 10 is a diagram explaining a UE-initiated deregistration procedure.

### Description of Embodiments

The best mode for carrying out an aspect of the present invention will be described with reference to the drawings.

### 1. Outline of System

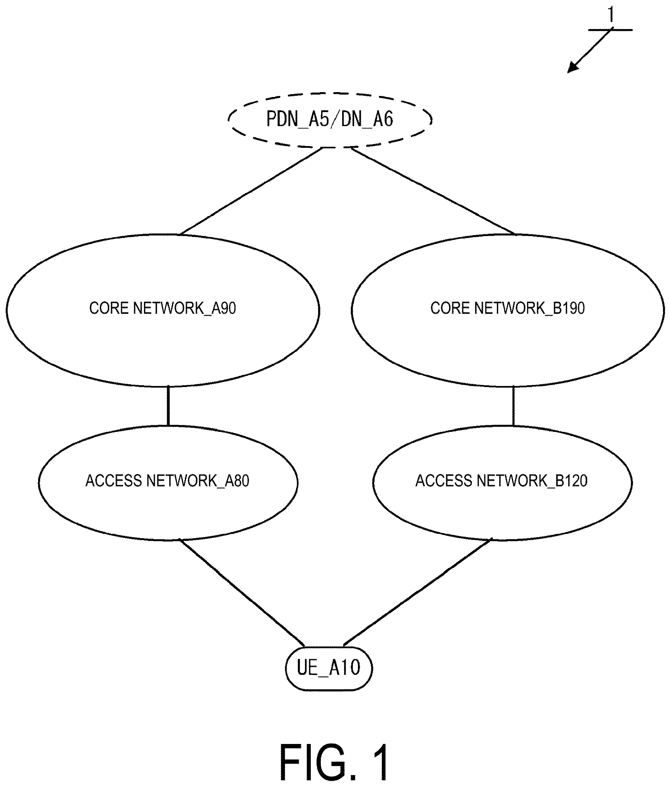

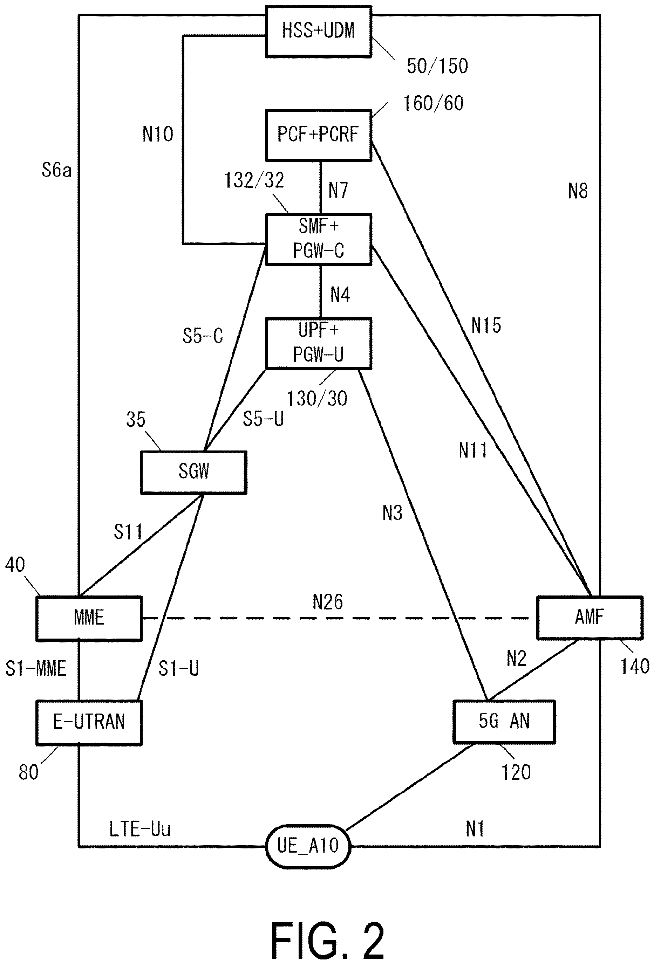

First, FIG. 1 is a diagram illustrating an outline of a mobile communication system 1 used in each embodiment and FIG. 2 is a diagram illustrating a detailed configuration of the mobile communication system 1.

As illustrated in FIG. 1, the mobile communication system 1 includes a UE_A 10, an access network_A 80, a core network_A 90, a packet data network (PDN)_A 5, an access network_B 120, a core network_B 190, and a data network (DN)_A 6.

In the following description, these apparatuses/functions may be referred to as a UE, an access network_A, a core network_A, a PDN, an access network_B, a core network_B, a DN, and the like without the reference numerals.

FIG. 2 illustrates apparatuses/functions such as a UE_A 10, an E-UTRAN 80, an MME 40, an SGW 35, a PGW-U 30, a PGW-C 32, a PCRF 60, an HSS 50, a 5G AN 120, an AMF 140, a UPF 130, an SMF 132, a PCF 160, and UDM 150 and interfaces that connect these apparatuses/functions to each other.

In the following description, these apparatuses/functions may be referred to as a UE, an E-UTRAN, an MME, an SGW, a PGW-U, a PGW-C, a PCRF, an HSS, a 5G AN, an AMF, a UPF, an SMF, a PCF, UDM, and the like without the reference numerals.

An evolved packet system (EPS) which is a 4G system includes an access network_A and a core network_A and may further include a LTE and/or a PDN. A 5G system (5GS) which is a 5G system also includes a UE, an access network_B, and a core network_B and may further include a DN.

The UE is an apparatus capable of connecting to a network service via 3GPP access (also referred to as a 3GPP access network or a 3GPP AN) and/or non-3GPP access (also referred to as a non-3GPP access network or a non-3GPP AN). The UE may be a terminal apparatus capable of performing wireless communication such as a mobile phone or a smartphone or may be a terminal apparatus capable of connecting to both an EPS and a 5GS. The UE may include a universal integrated circuit card (UICC) and an embedded UICC (eUICC). The UE may also be expressed as a user equipment or may be expressed as a terminal apparatus.

The access network_A corresponds to an evolved universal terrestrial radio access network (E-UTRAN) and/or a wireless LAN access network. One or more evolved node Bs (eNBs) 45 are deployed in the E-UTRAN. In the following description, the eNB 45 may also be referred to as an eNB without the reference numeral. In a case that there are a plurality of eNBs, the eNBs are connected to each other, for example, via an X2 interface. One or more access points are deployed in a wireless LAN access network.

The access network_B corresponds to a 5G access network (5G AN). The 5G AN includes an NG radio access network (NG-RAN) and/or a non-3GPP access network. One or more gNBs (NR node Bs) 122 are deployed in the NG-RAN. In the following description, the gNB 122 may also be referred to as an eNB without the reference numeral. The gNB is a node that provides new radio (NR) user and control planes to the UE and is connected to a 5GCN via an NG interface (including an N2 interface or an N3 interface). That is, the gNB is a base station apparatus which is newly designed for a 5GS and has different functions from a base station apparatus (eNB) used in an EPS which is a 4G system. In a case that there are a plurality of gNBs, the gNBs are connected to each other, for example, via an Xn interface.

Hereinafter, an E-UTRAN and an NG-RAN may also be referred to as 3GPP access. A wireless LAN access network and a non-3GPP AN may also be referred to as non-3GPP access. Nodes deployed in the access network_B may also be collectively referred to as an NG-RAN node.

Hereinafter, an access network_A, an access network_B, an apparatus included in the access network_A, and/or an apparatus included in the access network_B may also be expressed as an access network or an access network apparatus.

A RAN may also be expressed as an access network. Conversely, an access network may be referred to as a RAN.

The core network _A corresponds to an evolved packet core (EPC). For example, a mobile management entity (MME), a serving gateway (SGW), a packet data network gateway (PGW)-U, a PGW-C, a policy and charging rules function (PCRF), and a home subscriber server (HSS) are deployed in the EPC.

The core network_B corresponds to a 5G core network (5GCN). For example, an access and mobility management function (AMF), a user plane function (UPF), a session management function (SMF), a policy control function (PCF), unified data management (UDM), and the like are deployed in the 5GCN. Here, the 5GCN may be referred to as a 5GC.

Hereinafter, the core network_A and/or the core network_B, an apparatus included in the core network_A, and/or an apparatus included in the core network_B may also be referred to as a core network or a core network apparatus.

The core network (the core network_A and/or the core network_B) may be an IP mobile communication network operated by a mobile network operator (MNO) that connects an access network (the access network_A and/or the access network_B) and a PDN and/or a DN to each other, may be a core network for a mobile network operator that operates and manages the mobile communication system 1, or may be a core network for a virtual mobile communication operator or a virtual mobile communication service operator such as a mobile virtual network operator (MVNO) and a mobile virtual network enabler (MVNE).

Although FIG. 1 illustrates a case where a PDN and a DN are the same, the PDN and the DN may differ from each other. The PDN may be a data network (DN) for providing a communication service to a UE. The DN may also be configured as a packet data service network or configured for each service. The PDN may include communication terminals connected thereto. Thus, connection to the PDN may be connection to a communication terminal or a server apparatus deployed in the PDN. Transmission and/or reception of user data to and/or from the PDN may be transmission and/or reception of user data to and/or from a communication terminal or a server apparatus deployed in the PDN. The PDN may also be expressed as a DN and the DN may also be expressed as a PDN.

Hereinafter, at least a part of an access network_A, a core network_A, a PDN, an access network_B, a core network_B, and a DN, and/or one or more apparatuses included in the networks may also be referred to as a network or a network apparatus. That is, in a case that it is said that a network and/or a network apparatus transmits and/or receives a message and/or performs a procedure, this means that at least a part of an access network_A, a core network_A, a PDN, an access network_B, a core network_B, and a DN, and/or one or more apparatuses included in the networks transmits and/or receives a message and/or performs a procedure.

The LTE can be connected to an access network. The UE can also be connected to a core network via an access network. The UE can also be connected to a PDN or a DN via an access network and a core network. That is, the UE can transmit and/or receive (communicate) user data to and/or from a PDN or a DN. Not only internet protocol (IP) communication but also non-IP communication may be used in a case that user data is transmitted and/or received.

Here, IP communication is data communication using an IP and data is transmitted and/or received by IP packets. Each IP packet includes an IP header and a payload. The payload may include data transmitted and/or received by apparatuses/functions included in an EPS and apparatuses/functions included in the 5GS. Non-IP communication is data communication that does not use an IP and data is transmitted and/or received in a different format from the structure of IP packets. Non-IP communication may be, for example, data communication implemented through the transmission and/or reception of application data that is given no IP headers, or other headers such as MAC headers and Ethernet (registered trademark) frame headers may be given to transmit and/or receive user data transmitted and/or received by a UE.

### 2. Configurations of Apparatuses

Next, configurations of apparatuses (a UE, an access network apparatus, and/or a core network apparatus) used in each embodiment will be described using the drawings. Each apparatus may also be configured as physical hardware, may be configured as logical (virtual) hardware constructed on general-purpose hardware, or may be configured as software. At least some (including all) of the functions of each apparatus may also be configured as physical hardware, logical hardware, or software.

Storage units (a storage unit_A 340, a storage unit_A 440, a storage unit_B 540, a storage unit_A 640, or a storage unit_B 740) in the apparatuses/functions that will be described below each include, for example, a semiconductor memory, a solid state drive (SSD), or a hard disk drive (HDD). Each storage unit can store not only information originally configured at a time when shipped but also various information transmitted and/or received between apparatuses/functions (e.g., a UE, an access network apparatus, a core network apparatus, a PDN, and/or a DN) other than its own apparatus/function. Each storage unit can also store identification information, control information, flags, parameters, and the like included in a control message that is transmitted and/or received in various communication procedures that will be described later. Each storage unit may also store such information for each UE. In a case that the 5GS and the EPS interwork with each other, each storage unit can store a control message and user data transmitted and/or received between apparatuses/functions included in the 5GS and/or the EPS. In this case, each storage unit can store not only information transmitted and/or received via an N26 interface but also information transmitted and/or received without passing through an N26 interface.

### 2.1. Device Configuration of LTE

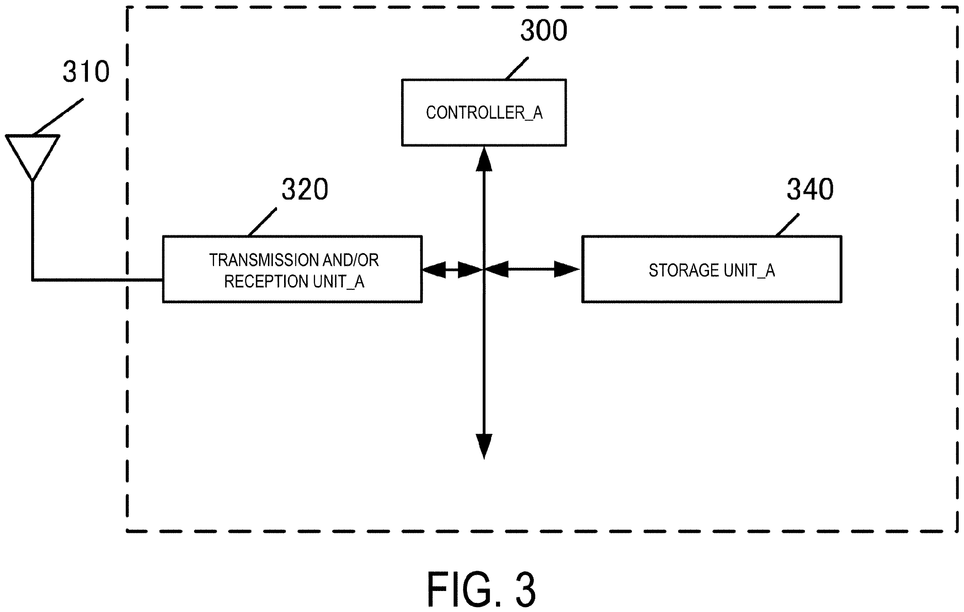

First, an example of a device configuration of the user equipment (UE) will be described using FIG. 3. The LTE includes a controller_A 300, an antenna 310, a transmission and/or reception unit_A 320, and a storage unit_A 340. The controller_A 300, the transmission and/or reception unit_A 320, and the storage unit_A 340 are connected to each other via a bus. The transmission and/or reception unit_A 320 is connected to the antenna 310.

The controller_A 300 is a function unit that controls all operations/functions of the UE. The controller_A 300 implements various processing of the UE by reading and executing various programs stored in the storage unit_A 340 as necessary.

The transmission and/or reception unit_A 320 is a function unit for wirelessly communicating with a base station apparatus (an eNB or gNB) in an access network via the antenna. That is, the LTE can transmit and/or receive user data and/or control information to and/or from the access network apparatus, the core network apparatus, the PDN, and/or the DN using the transmission and/or reception unit_A 320.

Referring to FIG. 2 in detail, the LTE can communicate with a base station apparatus (eNB) in the E-UTRAN via an LTE-Uu interface using the transmission and/or reception unit_A 320. The UE can also communicate with a base station apparatus (gNB) in the 5G AN using the transmission and/or reception unit_A 320. The LTE can also transmit and/or receive a non-access-stratum (NAS) message to and/or from an AMF via an N1 interface using the transmission and/or reception unit_A 320. However, the N1 interface is a logical interface and thus communication between the UE and the AMF is actually performed via the 5G AN.

The storage unit_A 340 is a function unit for storing programs, user data, control information, and the like that are necessary for operations of the UE.

### 2.2. Device Configuration of gNB

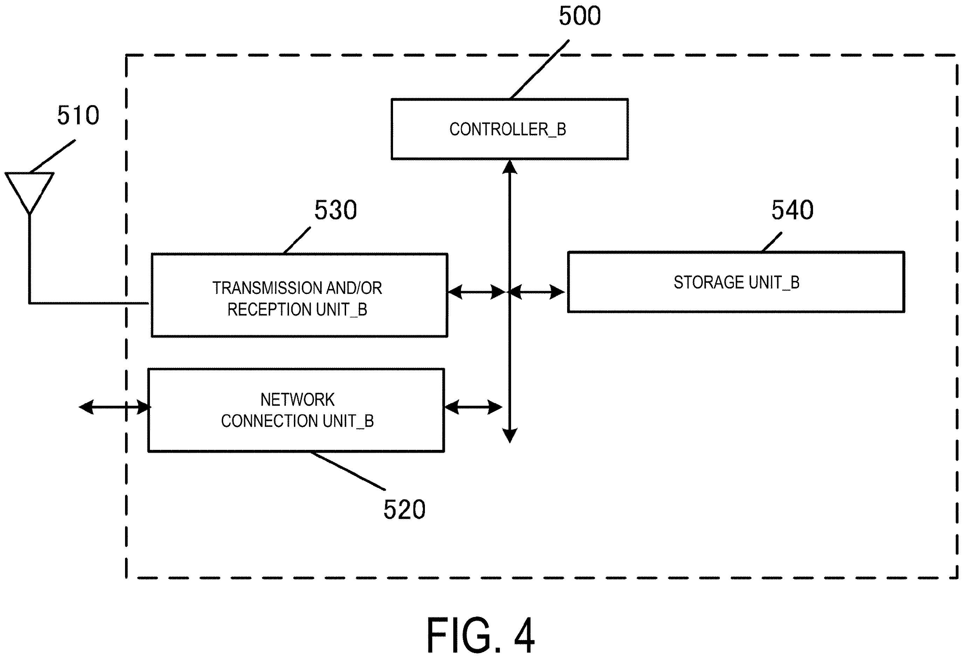

Next, an example of a device configuration of the gNB will be described using FIG. 4. The gNB includes a controller_B 500, an antenna 510, a network connection unit_B 520, a transmission and/or reception unit_B 530, and a storage unit_B 540. The controller_B 500, the network connection unit_B 520, the transmission and/or reception unit_B 530, and the storage unit_B 540 are connected to each other via a bus. The transmission and/or reception unit_B 530 is connected to the antenna 510.

The controller_B 500 is a function unit that controls all operations/functions of the gNB. The controller_B 500 implements various processing of the gNB by reading and executing various programs stored in the storage unit_B 540 as necessary.

The network connection unit_B 520 is a function unit for the gNB to communicate with the AMF and/or the UPF. That is, the gNB can transmit and/or receive user data and/or control information to and/or from the AMF and/or the UPF using the network connection unit_B 520.

The transmission and/or reception unit_B 530 is a function unit for wirelessly communicating with the LTE via the antenna 510. That is, the gNB can transmit and/or receive user data and/or control information to and/or from the LTE using the transmission and/or reception unit_B 530.

Referring to FIG. 2 in detail, the gNB present in the 5G AN can communicate with the AMF via the N2 interface and communicate with the UPF via the N3 interface using the network connection unit_B 520. The gNB can also communicate with the UE using the transmission and/or reception unit_B 530.

The storage unit_B 540 is a function unit for storing programs, user data, control information, and the like that are necessary for operations of the gNB.

### 2.3. Device Configuration of AMF

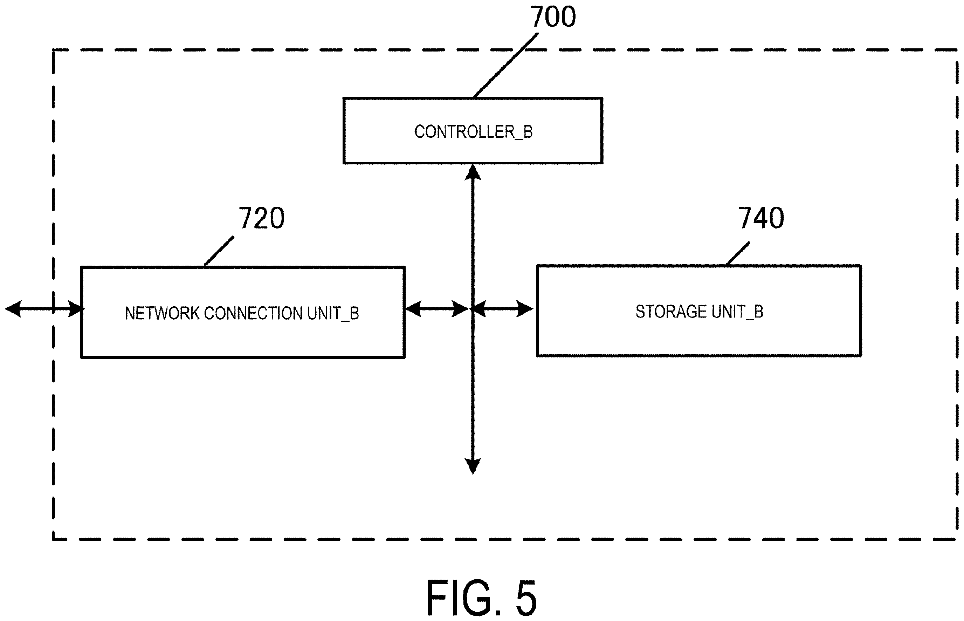

Next, an example of a device configuration of the AMF will be described using FIG. 5. The AMF includes a controller_B 700, a network connection unit_B 720, and a storage unit_B 740. The controller_B 700, the network connection unit_B 720, and the storage unit_B 740 are connected to each other via a bus. The AMF may be a node that handles a control plane.

The controller_B 700 is a function unit that controls all operations/functions of the AMF. The controller_B 700 implements various processing of the AMF by reading and executing various programs stored in the storage unit_B 740 as necessary.

The network connection unit_B 720 is a function unit for the AMF to connect to the base station apparatus (gNB), the SMF, the PCF, the UDM, and/or the SCEF in the 5G AN. That is, the AMF can transmit and/or receive user data and/or control information to and/or from the base station apparatus (gNB), the SMF, the PCF, the UDM, and/or the SCEF in the 5G AN using the network connection unit_B 720.

Referring to FIG. 2 in detail, the AMF present in the 5GCN can communicate with the gNB via the N2 interface, communicate with the UDM via an N8 interface, communicate with the SMF via an N11 interface, and communicate with the PCF via an N15 interface using the network connection unit_A 620. The AMF can also transmit and/or receive a NAS message to and/or from the LTE via the N1 interface using the network connection unit_A 620. However, communication between the UE and the AMF is actually performed via the 5G AN because the N1 interface is a logical interface. In a case that the N26 interface is supported, the AMF can communicate with the MME via the N26 interface using the network connection unit_A 620.

The storage unit_B 740 is a function unit for storing programs, user data, control information, and the like that are necessary for operations of the AMF.

The AMF also has a function of exchanging a control message with the RAN using the N2 interface, a function of exchanging a NAS message with the UE using the N1 interface, a function of performing encryption and integrity protection of a NAS message, a registration management (an RM) function, a connection management (CM) function, a reachability management function, a mobility management function of the UE or the like, a function of transferring a session management (SM) message between the UE and the SMF, an access authentication or access authorization function, security anchor (SEA) functionality, a security context management (SCM) function, a function of supporting the N2 interface for a non-3GPP interworking function (N3IWF), a function of supporting the transmission and/or reception of a NAS signal to and/or from the UE via the N3IWF, a function of authenticating the UE connected via the N3IWF, and the like.

In the registration management, an RM state of each UE is managed. The RM state may be synchronized between the UE and the AMF. The RM state includes a deregistered state (an RM-DEREGISTERED state) and a registered state (an RM-REGISTERED state). In the RM-DEREGISTERED state, the UE has not registered with a network and thus the AMF is in a state in which it cannot reach the UE because a UE context in the AMF does not have valid positional information and routing information for the UE. In the RM-REGISTERED state, the UE has registered with a network and thus the UE can receive services that require registration with the network. The RM state may also be expressed as a 5GMM state. In this case, the RM-DEREGISTERED state may be expressed as a 5GMM-DEREGISTERED state and the RM-REGISTERED state may be expressed as a 5GMM-REGISTERED state.

In other words, the 5GMM-REGISTERED state may be a state in which each apparatus has established a 5GMM context or may be a state in which each apparatus has established a PDU session context. In a case that each apparatus is in a 5GMM-REGISTERED state, the UE_A 10 may initiate transmission and/or reception of user data or a control message or may respond to paging. In a case that each apparatus is in a 5GMM-REGISTERED state, the UE_A 10 may further perform registration procedures other than the registration procedure for initial registration and/or a service request procedure.

The 5GMM-DEREGISTERED state may also be a state in which each apparatus has not established a 5GMM context, may be a state in which the network has not identified positional information of the UE_A 10, or may be a state in which the network cannot reach the UE_A 10. In a case that each apparatus is in a 5GMM-DEREGISTERED state, the UE_A 10 may initiate a registration procedure or may establish a 5GMM context by performing a registration procedure.

In the connection management, a CM state of each UE is managed. The CM state may be synchronized between the LTE and the AMF. The CM state includes a non-connected state (CM-IDLE state) and a connected state (CM-CONNECTED state). In the CM-IDLE state, the UE is in an RM-REGISTERED state but does not have a NAS signaling connection that is established with the AMF via the N1 interface. In the CM-IDLE state, the UE does not have a connection of the N2 interface (an N2 connection) and a connection of the N3 interface (an N3 connection). On the other hand, in the CM-CONNECTED state, the UE has a NAS signaling connection that is established with the AMF via the N1 interface. In the CM-CONNECTED state, the UE may also have a connection of the N2 interface (an N2 connection) and/or a connection of the N3 interface (an N3 connection).

In the connection management, a CM state over 3GPP access and a CM state over non-3GPP access may be separately managed. In this case, the CM state over 3GPP access may include a non-connected state over 3GPP access (a CM-IDLE state over 3GPP access) and a connected state over 3GPP access (a CM-CONNECTED state over 3GPP access). The CM state over non-3GPP access may include a non-connected state over non-3GPP access (a CM-IDLE state over non-3GPP access) and a connected state over non-3GPP access (a CM-CONNECTED state over non-3GPP access). The non-connected state may be expressed as an idle mode and the connected state mode may be expressed as a connected mode.

The CM state may also be expressed as a 5GMM mode. In this case, the non-connected state may be expressed as a 5GMM non-connected mode (a 5GMM-IDLE mode) and the connected state may be expressed as a 5GMM connected mode (a 5GMM-CONNECTED mode). The non-connected state over 3GPP access may be expressed as a 5GMM non-connected mode over 3GPP access (a 5GMM-IDLE mode over 3GPP access) and the connected state over 3GPP access may be expressed as a 5GMM connected mode over 3GPP access (a 5GMM-CONNECTED mode over 3GPP access). The non-connected state over non-3GPP access may be expressed as a 5GMM non-connected mode over non-3GPP access (a 5GMM-IDLE mode over non-3GPP access) and the connected state over non-3GPP access may be expressed as a 5GMM connected mode over non-3GPP access (a 5GMM-CONNECTED mode over non-3GPP access). The 5GMM non-connected mode may be expressed as an idle mode and the 5GMM connected mode may be expressed as a connected mode.

One or more AMFs may be deployed within the core network _B. Each AMF may be an NF that manages one or more network slice instances (NSIs). Each AMF may also be a common CP function (a common control plane network function (CPNF)) which is shared among a plurality of NSIs.

The N3IWF is an apparatus and/or a function that is deployed between the non-3GPP access and the 5GCN in a case that the UE is connected to the 5GS via the non-3GPP access.

### 2.4. Device Configuration of SMF

Next, an example of a device configuration of the SMF will be described using FIG. 5. The SMF includes a controller_B 700, a network connection unit_B 720, and a storage unit_B 740. The controller_B 700, the network connection unit_B 720, and the storage unit_B 740 are connected to each other via a bus. The SMF may be a node that handles a control plane.

The controller _B 700 is a function unit that controls all operations/functions of the SMF. The controller _B 700 implements various processing of the SMF by reading and executing various programs stored in the storage unit_B 740 as necessary.

The network connection unit_B 720 is a function unit for the SMF to connect to the AMF, the UPF, the PCF, and/or the UDM. That is, the SMF can transmit and/or receive user data and/or control information to and/or from the AMF, the UPF, the PCF, and/or the UDM using the network connection unit_B 720.

Referring to FIG. 2 in detail, the SMF present in the 5GCN can communicate with the AMF via the N11 interface, communicate with the UPF via an N4 interface, communicate with the PCF via an N7 interface, and communicate with the UDM via an N10 interface using the network connection unit_A 620.

The storage unit_B 740 is a function unit for storing programs, user data, control information, and the like that are necessary for operations of the SMF.

The SMF has a session management function for establishment, modification, release, and the like of PDU sessions, a function of allocating and managing IP addresses to UEs, a UPF selection and control function, a UPF configuration function for routing traffic to an appropriate destination (transmission destination), a function of transmitting and/or receiving an SM portion of a NAS message, a function of providing a notification that downlink data has arrived (a downlink data notification), a function of providing SM information specific to an AN (for each AN) that is transmitted to the AN via the AMF through the N2 interface, a function of determining a session and service continuity mode (an SSC mode) for a session, a roaming function, and the like.

### 2.5. Device Configuration of UPF

Next, an example of a device configuration of the UPF will be described using FIG. 5. The UPF includes a controller B 700, a network connection unit_B 720, and a storage unit_B 740. The controller_B 700, the network connection unit_B 720, and the storage unit_B 740 are connected to each other via a bus. The UPF may be a node that handles a control plane.

The controller_B 700 is a function unit that controls all operations/functions of the UPF. The controller_B 700 implements various processing of the UPF by reading and executing various programs stored in the storage unit_B 740 as necessary.

The network connection unit_B 720 is a function unit for the UPF to connect to the base station apparatus (gNB), the SMF, and/or the DN in the 5G AN. That is, the UPF can transmit and/or receive user data and/or control information to and/or from the base station apparatus (gNB), the SMF, and/or the DN in the 5G AN using the network connection unit_B 720.

Referring to FIG. 2 in detail, the UPF present in the 5GCN can communicate with the gNB via the N3 interface, communicate with the SMF via the N4 interface, communicate with the DN via an N6 interface, and communicate with another UPF via an N9 interface using the network connection unit_A 620.

The storage unit_B 740 is a function unit for storing programs, user data, control information, and the like that are necessary for operations of the UPF.

The UPF has the function of an anchor point for intra-RAT mobility or inter-RAT mobility, the function of an external PDU session point for mutual connection to the DN (i.e., a function of transferring user data as a gateway between the DN and the core network_B), a function of routing and transferring packets, an uplink classifier (UL CL) function that supports the routing of a plurality of traffic flows to one DN, a branching point function that supports a multi-homed PDU session, a quality of service (QoS) processing function for a user plane, an uplink traffic verification function, a function of triggering downlink packet buffering and downlink data notification, and the like.

The UPF may also be a gateway for IP communication and/or non-IP communication. The UPF may also have a function of transferring IP communications or have a function of performing conversion between non-IP communication and IP communication. A plurality of gateways that are further deployed may be gateways that connect the core network _B and a single DN. The UPF may also have connectivity with other NFs or may be connected to the apparatuses via the other NFs.

A user plane is user data transmitted and/or received between the UE and a network. A user plane may be transmitted and/or received using a PDN connection or a PDU session. In a case of the EPS, a user plane may be transmitted and/or received using an LTE-Uu interface, an S1-U interface, an S5 interface, an S8 interface, and/or an SGi interface. In a case of the 5GS, a user plane may be transmitted and/or received via an interface between the UE and the NG RAN, the N3 interface, the N9 interface, and/or the N6 interface. Hereinafter, a user plane may be expressed as a U-plane.

A control plane is a control message transmitted and/or received to perform LTE communication control and the like. A control plane may be transmitted and/or received using a non-access-stratum (NAS) signaling connection between the UE and the MME. In a case of the EPS, a control plane may be transmitted and/or received using the LTE-Uu interface and an S1-MME interface. In a case of the 5GS, a control plane may be transmitted and/or received using an interface between the UE and the NG RAN and the N2 interface. Hereinafter, a control plane may be expressed as a control plane or may be expressed as a C-plane.

The U-plane (user plane (UP)) may also be a communication path for transmitting and/or receiving user data and may include a plurality of bearers. The C-plane (control plane (CP)) may also be a communication path for transmitting and/or receiving a control message and may include a plurality of bearers.

### 2.6. Description of Other Apparatuses and/or Functions

Next, other apparatuses and/or functions will be described.

The PCF has a function such as a function of providing policy rules.

The UDM includes an authentication credential processing function, a user identification processing function, an access authentication function, a registration/mobility management function, a subscriber information management function, and the like.

The PCRF is connected to the PGW and/or the PDN and has a function such as a function of performing QoS management for data delivery. The PCRF performs, for example, QoS management for a communication path between the UE_A 10 and the PDN. The PCRF may also be an apparatus that creates and/or manages a policy and charging control (PCC) rule and/or a routing rule that each apparatus uses in a case of transmitting and/or receiving user data.

The HSS is connected to the MME and/or the SCEF and has a function such as a function of managing subscriber information. The subscriber information of the HSS is referred to, for example, in a case of access control of the MME. The HSS may also be connected to a location management apparatus different from the MME.

The SCEF is connected to the DN and/or the PDN, the MME, and the HSS and has a function such as the function of a relay apparatus that transfers user data as a gateway for connecting the DN and/or the PDN and the core network_A. The SCEF may also be a gateway for non-IP communication. The SCEF may also have a function of performing conversion between non-IP communication and IP communication. A plurality of such gateways may also be deployed in the core network_A. The SCEF may be constructed outside or inside the core network.

### 3. Description of Terms, Identification Information, and Procedures Used in Embodiments

Terms, identification information, and procedures, at least one of which will be used in the embodiments, will be described in advance.

### 3.1. Description of Terms and Identification Information Used in Embodiments

First, highly technical terms and identification information used in procedures which will be used in the embodiments will be described in advance.

A network refers to at least a part of the access network_B, the core network_B, and the DN. One or more apparatuses included in at least a part of the access network_B, the core network_B, and the DN may be referred to as a network or a network apparatus. That is, in a case that it is said that a network transmits and/or receives a message and performs processing, this may mean that an apparatus (a network apparatus and/or a control apparatus) in a network transmits and/or receives a message and performs processing. Conversely, in a case that it is said that an apparatus in a network transmits and/or receives a message and performs processing, this may mean that a network transmits and/or receives a message and performs processing.

A network may also refer to a Public Land Mobile Network (PLMN) or refer to an NPN that will be described later. In a case that it is stated that the UE performs a network selection, this may indicate that the UE performs a PLMN selection or may indicate that the UE performs an SNPN selection.

A registered PLMN is a PLMN with which the UE has registered.

An equivalent PLMN is a PLMN that is treated the same as an arbitrary PLMN in a network. For example, an equivalent PLMN may be one or more PLMNs that are treated the same as a registered PLMN.

A Session Management (SM) message (also referred to as a non-access-stratum (NAS) SM message) may be a NAS message used in a procedure for SM or may be a control message transmitted and/or received between the UE_A 10 and the SMF_A 230 via the AMF_A 240. The SM message may include a PDU session establishment request message, a PDU session establishment accept message, a PDU session complete message, a PDU session reject message, a PDU session change request message, a PDU session change accept message, a PDU session change response message, and the like. The procedure for SM may include a PDU session establishment procedure.

A 5G system (5GS) service may be a connection service provided using the core network _B 190. The 5GS service may also be a service different from an EPS service or may be a service similar to an EPS service.

A non-5GS service may be a service other than the 5GS service and may include an EPS service and/or a non-EPS service.

A single registration mode is a mode in which the UE_A 10 maintains a common registered state for the 5GMM state and an EMM state in a case that the UE_A 10 can use an N1 mode and an S1 mode.

A dual registration mode is a mode in which the UE_A 10 maintains a registered state independently for the 5GMM state and the EMM state in a case that the UE_A 10 can use the N1 mode and the S 1 mode. In a case of the dual registration mode, the UE_A 10 may have registered with a network in only the N1 mode (i.e., registered with only the 5GC), may have registered with a network only in the S1 mode (registered with only the EPC), or may have registered with a network in both the N1 mode and the S 1 mode (registered with both the 5GC and the EPC).

A UE that supports both the 5GC and the EPC NAS can operate in the single registration mode or the dual registration mode in order to perform interworking between the 5GS and the EPC.

The S 1 mode is a mode in which the UE_A 10 is allowed to access the EPC via the E-UTRAN. In other words, the S 1 mode may be a mode in which a message is transmitted and/or received using an S 1 interface. The S 1 interface may include an S 1-MME interface and an S 1-U interface.

The N1 mode is a mode in which the UE_A 10 is allowed to access the 5GC via the 5G access network. In other words, the N1 mode may be a mode in which a message is transmitted and/or received using an N1 interface.

An access point name (APN) may be identification information identifying a core network and/or an external network such as a PDN. The APN can also be used as information for selecting a gateway such as a PGW_A 30/UPF_A 235 for connecting to the core network A_90.

A packet data network (PDN) type indicates the type of PDN connection and includes IPv4, IPv6, IPv4v6, and non-IP. In a case that IPv4 is specified, it indicates that data is transmitted and/or received using IPv4. In a case that IPv6 is specified, it indicates that data is transmitted and/or received using IPv6. In a case that IPv4v6 is specified, it indicates that data is transmitted and/or received using IPv4 or IPv6. In a case that non-IP is specified, it indicates that communication is performed using a communication method other than the IP, rather than using the IP.

A protocol data unit/packet data unit (PDU) session can be defined as a relationship between the DN that provides a PDU connectivity service and the UE, but may also be connectivity established between the UE and an external gateway. In the 5GS, the UE establishes a PDU session via the access network B and the core network B and can thereby transmit and/or receive user data to and/or from the DN using the PDU session. Here, the external gateway may be a UPF, an SCEF, or the like. The LTE can transmit and/or receive user data to and/or from an apparatus deployed in the DN such as an application server using a PDU session.

Each of the apparatuses (the UE, the access network apparatus, and/or the core network apparatus) may manage each PDU session in association with one or more pieces of identification information. Such identification information may include one or more of a DNN, a QoS rule, a PDU session type, application identification information, NSI identification information, access network identification information, and an SSC mode and may further include other information. In a case that a plurality of PDU sessions are established, the content of pieces of identification information associated with the PDU sessions may be the same or different.

The data network name (DNN) may be identification information identifying a core network and/or an external network such as a DN. The DNN can also be used as information for selecting a gateway such as the PGW_A 30/ UPF_A 235 for connecting to the core network B 190. The DNN may also correspond to an access point name (APN).

A protocol data unit/packet data unit (PDU) session type indicates the type of a PDU session and includes IPv4, IPv6, Ethernet, and Unstructured. In a case that IPv4 is specified, it indicates that data is transmitted and/or received using IPv4. In a case that IPv6 is specified, it indicates that data is transmitted and/or received using IPv6. In a case that Ethernet is specified, it indicates that Ethernet frames are transmitted and/or received. Alternatively, Ethernet may indicate that communication using the IP is not performed. In a case that Unstructured is specified, it indicates that data is transmitted and/or received to and/or from an application server in the DN or the like using a point-to-point (P2P) tunneling technique. For example, a UDP/IP encapsulation technique may be used as the P2P tunneling technique. The PDU session type may also include the IP in addition to the above. The IP can be specified in a case that the LTE can use both IPv4 and IPv6.

A network slice (NS) is a logical network that provides specific network capabilities and network characteristics. The LTE and/or the network can support network slicing (NW slicing (NS)) in the 5GS.

A network slice instance (NSI) includes a set of an instance of a network function (NF) and necessary resources and forms a network slice to be allocated. Here, the NF is a processing function of a network and is adopted or defined in 3GPP. An NSI is an instance of one or more NSs configured in the core network _B. An NSI may include a virtual network function (NF) generated using a network slice template (NST). Here, an NST is associated with a resource request to provide a requested communication service and capabilities and is a logical expression of one or more NFs. That is, an NSI may be a collection of a plurality of NFs in the core network_B 190. An NSI may also be a logical network configured to divide delivered user data depending on a service or the like. An NS may include one or more NFs. NFs included in an NS may or may not be apparatuses shared with another NS. A LTE and/or an apparatus in a network can be allocated to one or more NSs based on an NSSAI, an S-NSSAI, a LTE usage type, registration information such as one or more NSI IDs, and/or an APN. The UE usage type is a parameter value which is included in registration information of the UE and used to identify the NSI. The UE usage type may be stored in the HSS. The AMF may select an SMF and a UPF based on the UE usage type.

Single network slice selection assistance information (S-NSSAI) is information identifying an NS. The S-NSSAI may include only a slice/service type (SST) or may include both an SST and a slice differentiator (SD). Here, the SST is information indicating operations of the NS expected in terms of functions and services. The SD may be information for interpolating an SST in a case of selecting one NSI out of a plurality of NSIs indicated by the SST. The S-NSSAI may be information specific to each PLMN or may be standard information common to PLMNs. The network may store one or more pieces of S-NSSAI in the registration information of the LTE as a default piece(s) of S-NSSAI. In a case that an S-NSSAI is a default S-NSSAI and the UE does not transmit, to the network, a valid S-NSSAI in a registration request message, the network may provide an NS relating to the UE.

The network slice selection assistance information (NSSAI) is a set of pieces of S-NSSAI. Each piece of S-NSSAI included in the NSSAI is information for assisting the access network or the core network in selecting an NSI. The UE may store NSSAI that a network allows for each PLMN. The NSSAI may be information used to select an AMF.

The session and service continuity (SSC) mode indicates a mode of session and service continuity supported by the 5G system (5GS) and/or each apparatus in the 5G system. More specifically, the SSC mode may be a mode indicating a type of session and service continuity supported by a PDU session established between the UE_A 10 and the UPF. The SSC mode may also be a mode indicating a type of session and service continuity configured for each PDU session. The SSC mode may include three modes: SSC mode 1, SSC mode 2, and SSC mode 3. An SSC mode associated with a PDU session may not be changed while the PDU session continues.

A radio resource control (RRC) connection is a connection established between a UE and a base station apparatus in an access network. More specifically, an RRC connection is a connection established at a Uu reference point between a UE and a base station apparatus in an access network. An RRC connection may include radio bearers. An RRC connection may be a connection established over 3GPP access. An RRC connection may also be a connection that is established in an RRC layer below a NAS layer. An RRC connection may also be a connection that is established and/or released by transmitting and/or receiving an RRC message in the RRC layer. An RRC connection may also be a connection that is suspended by transmitting and/or receiving an RRC message in the RRC layer.

A 5GMM-CONNECTED mode with an RRC inactive indication is a state indicating that the state of the NAS layer is a connected state even though the RRC layer is in an inactive state. In other words, a 5GMM-CONNECTED mode with an RRC inactive indication is a state in which a radio bearer is released while a NAS signaling connection and/or the context of a NAS signaling connection is maintained.

The 5GMM-CONNECTED mode with an RRC inactive indication may also be a state in which an RRC connection is suspended. More specifically, the 5GMM-CONNECTED mode with an RRC inactive indication may be a state in which an RRC connection is suspended although the state of the NAS layer is a connected state. In other words, the 5GMM-CONNECTED mode with an RRC inactive indication may be a state in which an RRC connection is suspended while a NAS signaling connection and/or the context of a NAS signaling connection is maintained.

Here, the UE may transition from the 5GMM-CONNECTED mode to the 5GMM-CONNECTED mode with an RRC inactive indication based on reception of information indicating that an RRC connection has been suspended from the lower layer. The UE may also transition only the state of 3GPP access from the 5GMM-CONNECTED mode to the 5GMM-CONNECTED mode with an RRC inactive indication based on reception of the information indicating that an RRC connection has been suspended from the lower layer. The information indicating that an RRC connection has been suspended may be an indication that an RRC connection has been suspended.

Supporting the 5GMM-CONNECTED mode with an RRC inactive indication may mean supporting that the state of the NAS layer is maintained in a connected state even in a case that a notification indicating that the RRC layer has been deactivated has been received from the lower layer. Using the 5GMM-CONNECTED mode with an RRC inactive indication may mean maintaining the state of the NAS layer in a connected state even in a case that a notification indicating that the RRC layer has been deactivated has been received from the lower layer.

A PDU session with suspended user-plane resources is a PDU session for which user-plane resources have been established or re-established and a radio bearer has been suspended. Here, the time when a radio bearer is suspended may be the time when the UE transitions to the 5GMM-CONNECTED mode with an RRC inactive indication. The radio bearer may be a data radio bearer.

A non-access stratum (NAS) signaling connection is connectivity between a UE and a core network. More specifically, a NAS signaling connection is N1 mode connectivity between a UE and an AMF.

A NAS signaling connection may also be connectivity via 3GPP access and connectivity via non-3GPP access.

Specifically, in a case that a NAS signaling connection is connectivity via 3GPP access, the NAS signaling connection may include an RRC connection via a Uu reference point and an NG connection via an N2 reference point.

Conversely, in a case that a NAS signaling connection is connectivity via 3GPP access, the NAS signaling connection may include an IPsec tunnel via an NWu reference point and an NG connection via an N2 reference point.

Here, the Uu reference point may be a reference point between a UE and a gNB. The NWu reference point may be a reference point between a UE and an N3IWF. The N2 reference point may be a reference point between a gNB or N3IWF and an AMF.

The NAS signaling connection may also be expressed as a NAS signaling connection. The NAS signaling connection may also be expressed as an N1 NAS signaling connection.

An always-on PDU session is a PDU session for which user plane resources need to be activated each time a LTE transitions from a 5GMM-IDLE state to a 5GMM-CONNECTED state. The UE can request a core network and/or a core network apparatus to establish a PDU session as an always-on PDU session based on an instruction from a higher layer. The core network and/or core network apparatus determines whether a PDU session can be established as an always-on PDU session. Here, the 5GMM-IDLE state may be a CM-IDLE state. The 5GMM-CONNECTED state may be a CM-CONNECTED state. The core network apparatus that determines whether a PDU session can be established as an always-on PDU session may be an SMF.

A tracking area is one or more ranges managed by the core network which can be represented by location information of the UE_A 10. A tracking area may include a plurality of cells. A tracking area may also be a range in which control messages such as paging are broadcast or a range in which the UE_A 10 can move without performing a handover procedure. A tracking area may be a routing area or a location area or may be any area similar to these. Hereinafter, a tracking area may also be a tracking area (TA).

A TA list is a list including one or more TAs that the network has assigned to the UE_A 10. The UE_A 10 may be able to move without performing a tracking area update procedure while moving within one or more TAs included in the TA list. In other words, a TA list for the UE_A 10 may be a group of pieces of information indicating areas in which the UE_A 10 can move without performing a tracking area update procedure. A TA list may be expressed as a TAI list including one or more tracking area identity (TAIs) and hereinafter a TAI list may refer to a TA list.

A local area data network (LADN) is a DN to which a LTE can connect only at a specific location and which provides connectivity to a specific DNN (i.e., LADN DNN). A LADN may be a DN to which a LTE can connect at a specific location using a PDU session associated with a specific DNN. An LADN may also be a DN to which a UE can connect at a specific location using a PDU session associated with a combination of a specific DNN and specific S-NSSAI.

A PDU session for an LADN is a PDU session associated with a DNN associated with the LADN. A PDU session for an LADN may be a PDU session established for the LADN. In other words, a PDU session for an LADN may be a PDU session established between a UE and the LADN or a PDU session used for user data communication between a UE and the LADN. A PDU session for an LADN may also be a PDU session that can be established only in an LADN service area. In other words, a UE may be able to establish a PDU session for an LADN using a specific DNN at a specific location. In other words, a UE may be able to establish a PDU session for an LADN using a combination of a specific DNN and specific S-NSSAI at a specific location.

A PLMN selection process may be a process for selecting a PLMN. A PLMN selection process may also be a process for a LTE to select a PLMN. A PLMN selection process may also be a process performed in a case that a LTE connects to a PLMN. A PLMN selection process may be referred to as PLMN selection or a PLMN selection procedure. PLMN selection may be referred to as a PLMN selection process or a PLNN selection procedure. A PLNN selection procedure may be referred to as a PLMN selection process or PLMN selection.

A UE not operating in an SNPN access mode or an SNPN access operation mode may perform a PLMN selection process. A UE operating in the SNPN access mode or the SNPN access operation mode may not perform a PLMN selection process. A PLMN selection procedure may be performed without registration. In other words, a PLMN selection procedure may be performed in a case that a LTE has not completed registration with the network. A PLMN selection process may have an automatic PLMN selection mode and a manual PLMN selection mode.

A Non-Public Network (NPN) is a private network that is not intended for general use but is used by specific users for specific purposes such as the private use of a company or the like. There are two types of NPNs: a Stand-alone Non-Public Network (SNPN) and a Public network integrated NPN. In a case that an NPN is described below, this may mean both an SNPN and a Public network integrated NPN.

An SNPN is a network that is operated by an NPN operator and not affected by function units provided by a PLMN. In other words, an SNPN is an NPN-only network independent of publicly available PLMNs. An SNPN may be a network identified by an SNPN identity (SNPN ID). An SNPN ID may be information that is a combination of a PLMN ID and a network identifier (NID). A PLMN ID used for an SNPN ID may be information reserved for a private network, and for example, an MCC included in the PLMN ID may be 999. In a case that a UE has registered with an SNPN, the registered SNPN may be referred to as a registered SNPN or a RSNPN (registered SNPN).

A network identifier (NID) is information identifying a network. An SNPN may be identified by a combination of a PLMN ID and an NID. An NID may be information that is unique within an SNPN or globally unique information.

A public network integrated NPN is a network that is implemented using function units of a PLMN. In other words, a public network integrated NPN is an NPN that is virtually implemented within a PLMN. A public network integrated NPN is also an NPN that can be created via a PLMN. A public network integrated NPN may also be implemented using the functionality of a network slice. Specifically, a public network integrated NPN may be a network that can be implemented using a network slice allocated for an NPN. In this case, the public network integrated NPN may be identified by S-NSSAI or by a combination of S-NSSAI and a CAG ID.

A public network integrated NPN may also be implemented using a DN. Specifically, a public network integrated NPN may be a network that can be implemented using a DN for an NPN. In this case, the public network integrated NPN may be identified by a DNN or by a combination of a DNN and a CAG ID.

A closed access groups (CAG) ID is information identifying a group of subscribers allowed to connect to one or more cells associated with a CAG. A CAG may be a group identified by a CAG ID. A CAG is a group used in a case that a public network integrated NPN is implemented using a network slice. A CAG may be used to prevent LTEs not allowed by an NPN from attempting to access a network slice allocated for the NPN. A CAG ID is information that is unique within a PLMN.

An SNPN-enabled UE is a UE configured to use an SNPN. An SNPN-enabled UE may store at least one piece of information regarding an SNPN. In other words, configuration information of an SNPN-enabled LTE may include information indicating that an SNPN is available. An SNPN-enabled UE may also support an SNPN access mode or an SNPN access operation mode. In other words, an SNPN-enabled UE may operate in the SNPN access mode or the SNPN access operation mode.

The SNPN access mode is a mode in which an SNPN has been selected. The SNPN access mode may be a mode in which a UE has registered with an SNPN. The SNPN access mode may also be a mode in which a LTE has been connected to an SNPN. In other words, a LTE operating in the SNPN access mode may select only an SNPN in a case of network selection. More specifically, a LTE operating in the SNPN access mode may select only an SNPN via a Uu interface in a case of network selection. In other words, a UE operating in the SNPN access mode may select an SNPN without selecting a PLMN in a case of network selection. Here, a UE operating in the SNPN access mode may be referred to as a UE in the SNPN access mode. A UE in the SNPN access mode may also be an SNPN-enabled UE.

The SNPN access operation mode is the SNPN access mode or a mode of connecting to an SNPN via non-3GPP access. Here, "non-3GPP access" in an SNPN may refer to a case where a UE is connected to an SNPN via a PLMN. The UE may also operate in the SNPN access operation mode in a case that the UE operates in the SNPN access mode. The UE may also not operate in the SNPN access operation mode in a case that the UE does not operate in the SNPN access mode. A UE in the SNPN access mode may also be a UE in the SNPN access operation mode.

An SNPN selection process may be a process for selecting an SNPN. An SNPN selection process may also be a process for a LTE to select an SNPN. An SNPN selection process may also be a process performed in a case that a LTE connects to an SNPN. An SNPN selection process may be referred to as SNPN selection or an SNPN selection procedure. SNPN selection may be referred to as an SNPN selection process or an SNPN selection procedure. An SNPN selection procedure may be referred to as an SNPN selection process or SNPN selection.

A UE operating in the SNPN access mode or the SNPN access operation mode may perform an SNPN selection process. A UE not operating in the SNPN access mode or the SNPN access operation mode may not perform an SNPN selection process. An SNPN selection process may have an automatic SNPN selection mode and a manual SNPN selection mode. An SNPN selection procedure may be performed without registration. In other words, an SNPN selection procedure may be performed in a case that a LTE has not completed registration with the network.

An equivalent SNPN (equivalent PLMN) may be an SNPN that is treated the same as an arbitrary SNPN. For example, an equivalent SNPN may be one or more SNPNs that are treated the same as a registered SNPN.

An equivalent SNPN may refer to a PLMN that is treated the same as an arbitrary SNPN. For example, an equivalent SNPN may be one or more PLMNs treated the same as a registered SNPN.

An equivalent SNPN may also be one or more SNPNs or PLMNs identified by the same PLMN ID as an arbitrary SNPN. For example, an equivalent SNPN may be one or more SNPNs or PLMNs identified by the same PLMN ID as a registered SNPN. An equivalent SNPN may also be a PLMN identified by the same PLMN ID as a registered SNPN and a PLMN equivalent to the PLMN.

Default UE credentials are information that a LTE holds before an actual onboarding procedure. The default UE credentials may be information used to uniquely identify the UE. The default UE credentials may also be information used to prove the security of the UE.

A default credential server (DCS) is a server that can authenticate a UE using default UE credentials. A default credential server may also be a server capable of providing a UE authentication function using default UE credentials to other apparatuses or entities.

NPN credentials are information that the UE uses for authentication to access an NPN. NPN credentials may be 3GPP credentials or non-3GPP credentials.

An onboarding network (ON) is a network that provides a UE with initial registration and/or access for onboarding purposes. In other words, a UE may register with and/or access an onboarding network to perform onboarding.

Here, the onboarding network may be realized by a PLMN. The onboarding network may also be realized by an SNPN.

A provisioning server is a server that provides subscription data to authenticated and/or authorized LTEs. The provisioning server may be a server that provides subscription data and other configuration information to authenticated and/or authorized UEs.

The provisioning server may also be a server present in an onboarding network. The provisioning server may also be a server present in an PLMN. The provisioning server may also be a server present in an SNPN. The provisioning server may also be a server present in a core network. The provisioning server may also be a server present in an external DN.

A subscription owner (SO) is an entity that stores subscription data and/or other configuration information and provides the subscription data and/or other configuration information to a UE via a PS domain as a result of a UE onboarding procedure. In other words, a subscription owner may be an entity that stores subscription data and/or other configuration information and provides the subscription data and/or other configuration information to a UE in a UE onboarding procedure.

UE onboarding is the provision of information necessary for a UE to gain access and connectivity to an approved NPN to the UE or an internal entity of the network.

In other words, UE onboarding may be the provision of information to a UE or an internal entity of the network. Here, the information may be information necessary for the UE to establish access and connectivity to the NPN. The access and connectivity to the NPN may be that which has been authenticated. The information may also be SNPN information.

In other words, in a case that a LTE attempts to establish access and connectivity to an NPN, the LTE may acquire information necessary to establish access and connectivity to the NPN by performing UE onboarding. The LTE may also perform a procedure for establishing access and connectivity to the NPN after performing UE onboarding.

UE onboarding may be referred to as a LTE onboarding procedure. UE onboarding may also be referred to as an onboarding service. UE onboarding may also be referred to as onboarding.

In other words, in a case that a UE onboarding procedure is mentioned, this may mean UE onboarding. In a case that an onboarding service is mentioned, this may also mean UE onboarding. In a case that onboarding is mentioned, this may also mean LTE onboarding.

SNPN information is information necessary for a UE to establish access and connectivity to an SNPN. The SNPN information may be information that the UE uses to perform a procedure for establishing access and connectivity to the SNPN. SNPN information may also be subscription data and/or other configuration information. SNPN information may also be NPN credentials. SNPN information may also be referred to as NPN information.

The UE may acquire SNPN information from the network in UE onboarding. More specifically, the UE may acquire SNPN information from the provisioning server or the subscription owner in LTE onboarding.

In other words, the network may provide SNPN information to the UE in UE onboarding. More specifically, the provisioning server or the subscription owner may provide SNPN information to the LTE in UE onboarding.

A procedure of providing SNPN information is a procedure for the network to provide SNPN information to a LTE. In other words, the procedure of providing SNPN information is a procedure for a UE to acquire SNPN information from the network. The procedure of providing SNPN information may also be a procedure for performing UE onboarding.

The network may provide SNPN information to the LTE in the procedure of providing SNPN information. More specifically, the provisioning server or the subscription owner may provide SNPN information to the LTE in the procedure of providing SNPN information.

The UE may also acquire SNPN information from the network in the procedure of providing SNPN information. More specifically, the LTE may acquire SNPN information from the provisioning server or the subscription owner in the procedure of providing SNPN information.

The LTE may also release a first list based on completion of a procedure of providing SNPN information. In other words, the UE may release a first list based on completion of acquiring SNPN information.

More specifically, in a case that a UE holds a first list, the UE may release the first list based on completion of a procedure of providing SNPN information. In other words, in a case that a LTE holds a first list, the LTE may release the first list based on completion of acquiring SNPN information.

Conversely, the UE may release a first list in a deregistration procedure performed upon completion of a procedure of providing SNPN information. More specifically, in a case that a LTE holds a first list, the LTE may release the first list in a deregistration procedure performed upon completion of a procedure of providing SNPN information.

Here, the procedure of providing SNPN information may include a procedure of providing SNPN information via a user plane and a procedure of providing SNPN information via a control plane.

A procedure of providing SNPN information via a user plane is a procedure for the network to provide SNPN information to a UE via a user plane. In other words, a procedure of providing SNPN information via a user plane is a procedure for a UE to acquire SNPN information from the network via a user plane.

Specifically, a procedure of providing SNPN information via a user plane is a procedure of providing SNPN information from the network to a LTE using a PDU session after establishing the PDU session between the LTE and the network.

Here, in a case of using a procedure of providing SNPN information via a user plane, the network may provide SNPN information to a LTE by establishing a PDU session with the LTE and transmitting the SNPN information to the LTE over the PDU session. In other words, in a case of using a procedure of providing SNPN information via a user plane, a UE may acquire SNPN information by establishing a PDU session with the network and receiving the SNPN information from the network over the PDU session.

A PDU session used to provide SNPN information may be a PDU session used for providing SNPN information. In other words, a PDU session used to provide SNPN information may be a PDU session for providing SNPN information.

A procedure of providing SNPN information via a control plane is a procedure for the network to provide SNPN information to a LTE via a control plane. In other words, a procedure of providing SNPN information via a control plane is a procedure for a LTE to acquire SNPN information from the network via a control plane.

Specifically, a procedure of providing SNPN information via a control plane is a procedure of providing SNPN information from the network to a LTE using a control message transmitted and/or received on a control plane.

Here, in a case of using a procedure of providing SNPN information via a control plane, SNPN information may be provided to a LTE by transmitting a LTE route selection policy (URSP) including the SNPN information to the LTE. In a case of using a procedure of providing SNPN information via a control plane, SNPN information may also be provided to a LTE by transmitting protocol configuration options (PCOs) or extended protocol configuration options (ePCOs) including the SNPN information to the UE.

In other words, in a case of using a procedure of providing SNPN information via a control plane, a UE may acquire SNPN information by receiving the SNPN information included in a URSP from the network. In a case of using a procedure of providing SNPN information via a control plane, a UE may acquire SNPN information by receiving the SNPN information included in PCOs or ePCOs from the network.

The URSP may be an information element included in a UE policy management command message (MANAGE UE POLICY COMMAND message). The PCOs may be an information element included in a session management message (SM message). The ePCOs may also be an information element included in a session management message (SM message).

The UE policy management command message may be a control message transmitted and/or received between a PCF and a LTE. The SM message may be a control message transmitted and/or received between a UE and an SMF. The SM message includes a PDU SESSION ESTABLISHMENT ACCEPT message, a PDU SESSION CHANGE COMMAND message, a PDU SESSION RELEASE COMMAND message, and the like.

The first list is a list including information identifying one or more networks to which no onboarding service is available. The first list may be a list including information identifying one or more networks. In other words, the first list may be a set of information identifying one or more networks.

Here, a network identified by the information identifying a network may be a network to which no onboarding service is available. A network identified by the information identifying a network may also be a network that does not support an onboarding service. A network identified by the information identifying a network may also be a public land mobile network (PLMN) or a stand-alone non-public network (SNPN).

Information identifying a network may also be information identifying a PLMN or information identifying an SNPN. In other words, the information identifying a network may be a PLMN ID and/or an SNPN ID. The information identifying a network may also be a PLMN identity and/or an SNPN identity.

The first list may also be managed until SNPN information is provided to the UE. In other words, the first list may be released based on provision of SNPN information to the UE. The first list may also be released based on performing of a deregistration procedure.

The first list may also be released upon power off and/or removal of a SIM. The first list may also be released based on expiration of a timer.

The first list may also be managed for each access. Specifically, the first list may be managed separately into a list for 3GPP access and a list for non-3GPP access.

A PDU session for an onboarding service is a PDU session established for an onboarding service. A PDU session for an onboarding service may be a PDU session established to perform a procedure of providing SNPN information.

A PDU session for an onboarding service may also be a PDU session used for an onboarding service. A PDU session for an onboarding service may also be a PDU session used in a procedure of providing SNPN information.

A PDU session for an onboarding service may also be a PDU session established in a network for use in onboarding services. Here, the network for use in onboarding may be an SNPN or a PLMN.

A PDU session for an onboarding service may also be a PDU session established in a state in which a registration procedure for an onboarding service is completed. A PDU session for an onboarding service may also be a PDU session established in a state in which registration with which only an onboarding service is available is completed.

Each apparatus may also establish a PDU session for an onboarding service to perform an onboarding service. Each apparatus may also establish a PDU session for an onboarding service to perform a procedure of providing SNPN information.

Each apparatus may also perform an onboarding service using a PDU session for an onboarding service. Each apparatus may also perform a procedure of providing SNPN information using a PDU session for an onboarding service.

Here, a PDU session for an onboarding service may be realized by an always-on PDU session. In other words, a PDU session for an onboarding service may be established as an always-on PDU session.

Establishing a PDU session for an onboarding service may also mean establishing an always-on PDU session. In other words, establishing an always-on PDU session may mean establishing a PDU session that handles a QoS flow for onboarding services.

An onboarding network access mode may be a mode in which an onboarding network has been selected. The onboarding network access mode may be a mode in which a UE has registered with an onboarding network. The onboarding network access mode may also be a mode in which a UE has been connected to an onboarding network. In other words, a LTE operating in the onboarding network access mode may select only an onboarding network in a case of network selection. Here, a LTE operating in the onboarding network access mode may be referred to as a UE in the onboarding network access mode. A UE in the onboarding network access mode may also be an onboarding network-enabled UE.

An onboarding network access operation mode may be the onboarding network access mode or a mode of connecting to an onboarding network via non-3GPP access. Here, "non-3GPP access" in an onboarding network may refer to a case where a UE is connected to an onboarding network via a PLMN. The UE may also operate in the onboarding network access operation mode in a case that the UE operates in the onboarding network access mode. The UE may also not operate in the onboarding network access operation mode in a case that the UE does not operate in the onboarding network access mode. A UE in the onboarding network access mode may also be a UE in the onboarding network access operation mode.

An onboarding network selection process may be a process for selecting an onboarding network. An onboarding network selection process may also be a process for a UE to select an onboarding network. An onboarding network selection process may also be a process performed in a case that a LTE connects to an onboarding network. An onboarding network selection process may be referred to as onboarding network selection or an onboarding network selection procedure. Onboarding network selection may be referred to as an onboarding network selection process or an onboarding network selection procedure. An onboarding network selection procedure may be referred to as an onboarding network selection process or onboarding network selection. An onboarding network selection process may also be referred to as an ON selection process.

A LTE operating in the onboarding network access mode or the onboarding network access operation mode may perform an onboarding network selection process. In other words, a LTE may operate in the onboarding network access mode or the onboarding network access operation mode in a case that an onboarding network selection process is performed.

A UE operating in the SNPN access mode or the SNPN access operation mode may perform an onboarding network selection process. In other words, a UE may operate in the SNPN access mode or the SNPN access operation mode in a case that an onboarding network selection process is performed.

A UE not operating in the SNPN access mode or the SNPN access operation mode may perform an onboarding network selection process. In other words, a LTE may not operate in the SNPN access mode or the SNPN access operation mode in a case that an onboarding network selection process is performed.

An onboarding network selection procedure may be performed without registration. In other words, an onboarding network selection procedure may be performed in a case that a LTE has not completed registration with the network. An onboarding network selection process may have an automatic onboarding network selection mode and a manual onboarding network selection mode.

First identification information is information indicating only an onboarding service. The first identification information may also be information indicating a request for only an onboarding service. The first identification information may also be information indicating a request for registration with which only an onboarding service is available. The first identification information may be realized by a request type configured with an onboarding service.

The first identification information may also be information indicating whether the UE supports registration with which only an onboarding service is available. The first identification information may be information indicating that the UE supports registration with which only an onboarding service is available or information indicating that the UE does not support registration with which only an onboarding service is available. The first identification information may also be realized by a bit indicating whether the LTE supports registration with which only an onboarding service is available. Here, the bit indicating whether the UE supports registration with which only an onboarding service is available may be a bit included in a 5GMM capability information element indicating UE capabilities in 5G.

The first identification information may also be default UE credentials. The first identification information may also be information identifying a LTE. The first identification information may also be information identifying a default credential server. The first identification information may also be information identifying a network to which the UE requests to connect.

The first identification information may also be information selected or determined based on LTE configuration, LTE status, a user policy, and/or a request from an application.

Second identification information is information indicating the type of a procedure of providing SNPN information supported by the LTE. The second identification information may be information indicating that the UE supports acquiring SNPN information via a user plane (UP) or may be information indicating that the LTE supports acquiring SNPN information via a control plane (CP). The second identification information may be realized by a bit indicating the type of a procedure of providing SNPN information supported by the LTE. Here, the bit indicating the type of a procedure of providing SNPN information supported by the UE may be a bit included in a 5GMM capability information element indicating UE capabilities in 5G.

The second identification information may also be information including a meaning indicated by third identification information and a meaning indicated by fourth identification information. The second identification information may also be information including the third identification information and the fourth identification information.

The second identification information may also be information selected or determined based on UE configuration, LTE status, a user policy, and/or a request from an application.

The third identification information is information indicating whether the UE supports acquiring SNPN information via a user plane (UP). The third identification information may also be information indicating that the LTE supports acquiring SNPN information via a user plane or may be information indicating that the UE does not support acquiring SNPN information via a user plane. The third identification information may be realized by a bit indicating whether the UE supports acquiring SNPN information via a user plane. Here, the bit indicating whether the LTE supports acquiring SNPN information via a user plane may be a bit included in a 5GMM capability information element indicating UE capabilities in 5G.

The third identification information may also be information selected or determined based on LTE configuration, LTE status, a user policy, and/or a request from an application.

The fourth identification information is information indicating whether the UE supports acquiring SNPN information via a control plane (CP). The fourth identification information may be information indicating that the LTE supports acquiring SNPN information via a control plane or may be information indicating that the UE does not support acquiring SNPN information via a control plane. The fourth identification information may be realized by a bit indicating whether the LTE supports acquiring SNPN information via a control plane. Here, the bit indicating whether the LTE supports acquiring SNPN information via a control plane may be a bit included in a 5GMM capability information element indicating UE capabilities in 5G.

The fourth identification information may also be information selected or determined based on UE configuration, LTE status, a user policy, and/or a request from an application.

Fifth identification information is information indicating the type of a procedure of providing SNPN information requested by the LTE. The fifth identification information may be information indicating that the UE requests acquisition of SNPN information via a user plane (UP) or may be information indicating that the LTE requests acquisition of SNPN information via a control plane (CP). The fifth identification information may be realized by a bit indicating the type of a procedure of providing SNPN information requested by the LTE. Here, the bit indicating the type of a procedure of providing SNPN information requested by the UE may be a bit included in a 5GS update type information element.

The fifth identification information may also be information selected or determined based on LTE configuration, LTE status, a user policy, and/or a request from an application.

Sixth identification information is information indicating a follow-on request. Here, the sixth identification information may be information indicating a follow-on request pending. Conversely, the sixth identification information may be information indicating no follow-on request pending.

The sixth identification information may also be information indicating whether it is necessary to maintain NAS signaling after the present procedure is completed. Here, the sixth identification information may be information indicating that it is necessary to maintain NAS signaling after the present procedure is completed. Conversely, the sixth identification information may be information indicating that it is not necessary to maintain NAS signaling after the present procedure is completed.

The sixth identification information may be realized by a bit indicating a follow-on request. Here, the bit indicating a follow-on request may be a bit included in a 5G system (5GS) registration type that indicates UE capabilities in 5G.

The sixth identification information may also be information selected or determined based on LTE configuration, LTE status, a user policy, and/or a request from an application.

Eleventh identification information is information indicating whether the network supports registration with which only an onboarding service is available. The eleventh identification information may be information indicating that the network supports registration with which only an onboarding service is available or may be information indicating that the network does not support registration with which only an onboarding service is available. The eleventh identification information may be realized by a bit indicating whether the network supports registration with which only an onboarding service is available. Here, the bit indicating whether the network supports registration with which only an onboarding service is available may be a bit included in a 5GS network feature support information element indicating network capabilities in 5G.

The eleventh identification information may also be information indicating whether registration with which only an onboarding service is available is allowed. The eleventh identification information may be information indicating that registration with which only an onboarding service is available is allowed or may be information indicating that registration with which only an onboarding service is available is not allowed. The eleventh identification information may be realized by a bit indicating whether registration with which only an onboarding service is available is allowed.

The eleventh identification information may also be information that the network selects or determines based on received identification information, information associated with an NSI, network capability information, an operator policy, network status, user registration information, and/or the like.

Twelfth identification information is information indicating the type of a procedure of providing SNPN information supported by the network. The twelfth identification information may be information indicating that the network supports providing SNPN information via a user plane (UP) or may be information indicating that the network supports providing SNPN information via a control plane (CP). The twelfth identification information may be realized by a bit indicating the type of a procedure of providing SNPN information supported by the network. Here, the bit indicating the type of a procedure of providing SNPN information supported by the network may be a bit included in a 5GS network feature support information element indicating network capabilities in 5G.

The twelfth identification information may also be information indicating that SNPN information is provided via a user plane. The twelfth identification information may also be information indicating that provision of SNPN information via a user plane is supported.

The twelfth identification information may also be information indicating that SNPN information is provided via a control plane. The twelfth identification information may also be information indicating that provision of SNPN information via a control plane is supported.

The twelfth identification information may also be information including a meaning indicated by thirteenth identification information and a meaning indicated by fourteenth identification information. The twelfth identification information may be information including the thirteenth identification information and the fourteenth identification information.

The twelfth identification information may also be information that the network selects or determines based on received identification information, information associated with an NSI, network capability information, an operator policy, network status, user registration information, and/or the like.

The thirteenth identification information is information indicating whether the network supports providing SNPN information via a user plane (UP). The thirteenth identification information may be information indicating that the network supports providing SNPN information via a user plane or may be information indicating that the network does not support providing SNPN information via a user plane. The thirteenth identification information may be realized by a bit indicating whether the network supports providing SNPN information via a user plane. Here, the bit indicating whether the network supports providing SNPN information via a user plane may be a bit included in a 5GS network feature support information element indicating network capabilities in 5G.

The thirteenth identification information may also be information indicating that SNPN information is provided via a user plane. The thirteenth identification information may also be information indicating that provision of SNPN information via a user plane is supported.

The thirteenth identification information may also be information that the network selects or determines based on received identification information, information associated with an NSI, network capability information, an operator policy, network status, user registration information, and/or the like.

The fourteenth identification information is information indicating whether the network supports providing SNPN information via a control plane (CP). The fourteenth identification information may be information indicating that the network supports providing SNPN information via a control plane or may be information indicating that the network does not support providing SNPN information via a control plane. The fourteenth identification information may be realized by a bit indicating whether the network supports providing SNPN information via a control plane. Here, the bit indicating whether the network supports providing SNPN information via a control plane may be a bit included in a 5GS network feature support information element indicating network capabilities in 5G.

The fourteenth identification information may also be information indicating that SNPN information is provided via a control plane. The fourteenth identification information may also be information indicating that provision of SNPN information via a control plane is supported.

The fourteenth identification information may also be information that the network selects or determines based on received identification information, information associated with an NSI, network capability information, an operator policy, network status, user registration information, and/or the like.

21st identification information is a cause value indicating a reason why a registration procedure has been rejected. The 21st identification information may be a 5GS session management (5GSM) cause value.

Here, the cause value may indicate that no onboarding service is available. In other words, the cause value may indicate that an onboarding service is not allowed. The cause value may also indicate that registration with which only an onboarding service is available is not allowed.

The cause value may also indicate that the network does not support an onboarding service. The cause value may also indicate that the network does not support registration with which only an onboarding service is available.

The cause value may also indicate that a request for only an onboarding service has been rejected. The cause value may also indicate that a request for registration with which only an onboarding service is available has been rejected.

The 21st identification information may also be information indicating that no onboarding service is available. In other words, the 21st identification information may be information indicating that an onboarding service is not allowed. The 21st identification information may also be information indicating that registration with which only an onboarding service is available is not allowed.

The 21st identification information may also be information indicating that the network does not support an onboarding service. The 21st identification information may also be information indicating that the network does not support registration with which only an onboarding service is available.

The 21st identification information may also be information indicating that a request for only an onboarding service has been rejected. The 21st identification information may also be information indicating that a request for registration with which only an onboarding service is available has been rejected.

The 21st identification information may also be information that the network selects or determines based on received identification information, information associated with an NSI, network capability information, an operator policy, network status, user registration information, and/or the like.

31st identification information is a cause value indicating a reason why a deregistration procedure has been initiated. The 31st identification information may be a 5GS session management (5GSM) cause value.

Specifically, the 31st identification information may be information indicating that provision of SNPN information and/or acquisition of SNPN information has succeeded. Conversely, the 31st identification information may be information indicating that provision of SNPN information and/or acquisition of SNPN information has failed.

The 31st identification information may also be information indicating that provision of SNPN information and/or acquisition of SNPN information has been completed. More specifically, the 31st identification information may be information indicating that provision of SNPN information and/or acquisition of SNPN information has been completed normally. In other words, the 31st identification information may be information indicating that the LTE has acquired SNPN information or may be information indicating that the network has provided SNPN information.

Conversely, the 31st identification information may be information indicating that provision of SNPN information and/or acquisition of SNPN information has failed. More specifically, the 31st identification information may be information indicating that provision of SNPN information and/or acquisition of SNPN information has not been completed normally. In other words, the 31st identification information may be information indicating that the LTE has not been able to acquire SNPN information or may be information indicating that the network has not been able to provide SNPN information.

The 31st identification information may also be information indicating that an onboarding service has been completed. More specifically, the 31st identification information may be information indicating that an onboarding service has been completed normally. Conversely, the 31st identification information may be information indicating that an onboarding service has not been completed normally.

The 31st identification information may be information indicating that no onboarding service is available. In other words, the 31st identification information may be information indicating that an onboarding service is not allowed. The 31st identification information may also be information indicating that registration with which only an onboarding service is available is not allowed.

The 31st identification information may also be information that the network selects or determines based on received identification information, information associated with an NSI, network capability information, an operator policy, network status, user registration information, and/or the like.

41st identification information is information indicating a request for an always-on PDU session. The 41st identification information may be an always-on PDU session requested information element.

The 41st identification information may also be information indicating whether establishment of a PDU session as an always-on PDU session has been requested. For example, the 41st identification information may be information indicating that establishment of a PDU session as an always-on PDU session has been requested. Conversely, the 41st identification information may be information indicating that establishment of a PDU session as an always-on PDU session has not been requested.

The 41st identification information may also be information indicating whether to request establishment of an always-on PDU session. For example, the 41st identification information may be information indicating that establishment of an always-on PDU session is requested. Conversely, the 41st identification information may be information indicating that establishment of an always-on PDU session is not requested.

The 41st identification information may also be information selected or determined based on LTE configuration, LTE status, a user policy, and/or a request from an application. The 41st identification information may also be information selected or determined based on a control message and/or information transmitted and/or received in another procedure such as a registration procedure.

42nd identification information is information indicating a request for an onboarding service. The 42nd identification information may be information indicating a request to establish a PDU session for an onboarding service.

The 42nd identification information may also be information indicating whether use of an onboarding service has been requested. For example, the 42nd identification information may be information indicating that use of an onboarding service has been requested. Conversely, the 42nd identification information may be information indicating that use of an onboarding service has not been requested.

The 42nd identification information may also be information indicating whether to request establishment of a PDU session for an onboarding service. For example, the 42nd identification information may be information indicating that establishment of a PDU session for an onboarding service is requested. Conversely, the 42nd identification information may be information indicating that establishment of a PDU session for an onboarding service is not requested.

The 42nd identification information may also be information selected or determined based on LTE configuration, LTE status, a user policy, and/or a request from an application. The 42nd identification information may also be information selected or determined based on a control message and/or information transmitted and/or received in another procedure such as a registration procedure.

51st identification information is information indicating an always-on PDU session. The 51st identification information may be an always-on PDU session indication information element.

The 51st identification information may also be information indicating whether a PDU session is established as an always-on PDU session. For example, the 51st identification information may be information indicating that a PDU session is established as an always-on PDU session. Conversely, the 51st identification information may be information indicating that a PDU session is not established as an always-on PDU session.

The 51st identification information may also be information indicating whether an always-on PDU session can be established. For example, the 51st identification information may be information indicating that it is necessary to establish an always-on PDU session. Conversely, the 51st identification information may be information indicating that establishment of an always-on PDU session is not allowed.

The 51st identification information may also be information that the network selects or determines based on received identification information, information associated with an NSI, network capability information, an operator policy, network status, user registration information, and/or the like. The 51st identification information may also be information selected or determined based on a control message and/or information transmitted and/or received in another procedure such as a registration procedure.

52nd identification information is information indicating an onboarding service. The 52nd identification information may be information indicating that a PDU session to be established is a PDU session for an onboarding service.

The 52nd identification information may also be information indicating whether use of an onboarding service is allowed. For example, the 52nd identification information may be information indicating that use of an onboarding service is allowed. Conversely, the 52nd identification information may be information indicating that use of an onboarding service is not allowed.

The 52nd identification information may also be information indicating whether establishment of a PDU session for an onboarding service is allowed. For example, the 52nd identification information may be information indicating that establishment of a PDU session for an onboarding service is allowed. Conversely, the 52nd identification information may be information indicating that establishment of a PDU session for an onboarding service is not allowed.

The 52nd identification information may also be information that the network selects or determines based on received identification information, information associated with an NSI, network capability information, an operator policy, network status, user registration information, and/or the like. The 52nd identification information may also be information selected or determined based on a control message and/or information transmitted and/or received in another procedure such as a registration procedure.

### 3.2. Description of Procedures Used in Embodiments

Next, procedures used in the embodiments will be described. The procedures used in the embodiments include a registration procedure, a PDU session establishment procedure, and a UE configuration update procedure (generic UE configuration update procedure). Each procedure will be described below.

Each embodiment will be described with respect to a case where the HSS and the UDM, the PCF and the PCRF, the SMF and the PGW-C, and the UPF and the PGW-U are each configured as the same apparatus (i.e., the same piece of physical hardware, the same piece of logical hardware, or the same piece of software) as illustrated in FIG. 2 as an example. However, details described in the present embodiment can also be applied to a case that the apparatuses are configured as different apparatuses (i.e., different pieces of physical hardware, different pieces of logical hardware, or different pieces of software). For example, data may be transmitted and/or received directly between the apparatuses, data may be transmitted and/or received via the N26 interface between the AMF and the MME, or data may be transmitted and/or received via the UE.

### 3.2.1. Registration Procedure

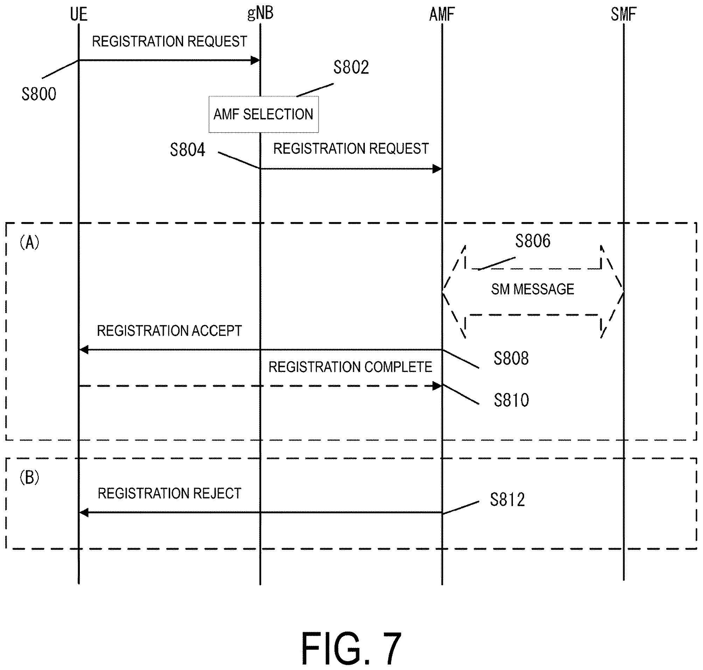

First, a registration procedure will be described using FIG. 7. The registration procedure is a procedure in the 5GS. Hereinafter, the present procedure refers to a registration procedure. A registration procedure is a UE-initiated procedure for registering with the access network_B, the core network_B, and/or the DN. As long as the LTE has not registered with a network, the UE can perform the present procedure at any time such as when power is turned on. In other words, the UE can initiate the present procedure at any time as long as the LTE is in a deregistered state (an RM-DEREGISTERED state). Each of the apparatuses (especially, the UE and the AMF) can transition to a registered state (an RM-REGISTERED state) based on completion of the registration procedure.

The registration procedure may be a procedure for updating location registration information of the LTE in the network, periodically providing a notification of the state of the UE from the UE to the network, and/or updating specific parameters of the UE in the network.

The UE may also initiate a registration procedure in a case that the UE has performed mobility across a TA. In other words, the LTE may initiate a registration procedure in a case that the UE has moved to a TA different from TAs indicated in a stored TA list. The UE may also initiate the present procedure in a case that a running timer has expired. The UE may also initiate a registration procedure in a case that a context of each apparatus needs to be updated due to disconnection or deactivation of a PDU session. The LTE may also initiate a registration procedure in a case that capability information and/or preferences of the UE relating to PDU session establishment has changed. The LTE may also periodically initiate a registration procedure. The LTE may also initiate a registration procedure based on completion of a UE configuration update procedure. The UE can perform a registration procedure at any time without being limited to these.

The UE may also initiate a registration procedure periodically even in a registered state. In other words, the LTE may initiate a registration procedure based on expiration of a timer.

The registration procedure performed based on the mobility of the UE and the registration procedure performed periodically may also be expressed as a registration procedure for mobility and registration update. In other words, the registration procedure for mobility and registration update may be a registration procedure performed based on the mobility of the UE or may be a registration procedure performed periodically. The registration procedure for mobility and registration update may also be a registration procedure performed based on configuration update of the UE. The registration procedure for mobility and registration update may also be a registration procedure performed to establish a communication path for transmitting and/or receiving user data. The registration procedure for mobility and registration update may also be a registration procedure performed based on a request from the network. In other words, the registration procedure for mobility and registration update may be a registration procedure other than an initial registration procedure. Hereinafter, the registration procedure for mobility and registration update may be referred to as the present procedure.

Each step of the registration process will be described below. The registration procedure described below may be an initial registration procedure or a registration procedure for mobility and registration update.

First, the UE transmits a registration request message to the AMF (S800) (S802) (S804) to initiate the registration procedure. Specifically, the UE transmits an RRC message including a registration request message to the 5G AN (or the gNB) (S800). The registration request message is a NAS message. The RRC message may be a control message transmitted and/or received between the UE and the 5G AN (or the gNB). The NAS message is processed in the NAS layer and the RRC message is processed in the RRC layer. The NAS layer is a layer above the RRC layer.

Here, the UE may transmit a registration request message and/or an RRC message including one or more pieces of identification information out of at least the first to sixth identification information. More specifically, the UE can transmit a registration request message and/or an RRC message including one or more pieces of identification information out of at least the first to sixth identification information and may also transmit a control message different from such messages, for example, a control message of a layer below the RRC layer (e.g., the MAC layer, the RLC layer, or the PDCP layer), including the one or more pieces of identification information. By transmitting such identification information, the UE may indicate that the UE supports each function or may indicate the request of the LTE. In a case that a plurality of pieces of identification information are transmitted and/or received, two or more of the plurality of pieces of identification information may be configured as one or more pieces of identification information. Information indicating support for each function and information indicating a request to use each function may be transmitted and/or received with the same piece of identification information or may be transmitted and/or received as different pieces of identification information.

The LTE may also incorporate one or more pieces of identification information out of the first to sixth identification information into a registration request message in a case that the UE requests an onboarding service. The LTE may also incorporate one or more pieces of identification information out of the first to sixth identification information into a registration request message in a case that the UE requests registration with which only an onboarding service is available. The LTE may also incorporate one or more pieces of identification information out of the first to sixth identification information into a registration request message in a case that the UE requests the use of a procedure of providing SNPN information.

The LTE may also incorporate one or more pieces of identification information out of the first to sixth identification information into a registration request message in a case that the LTE supports an onboarding service. The LTE may also incorporate one or more pieces of identification information out of the first to sixth identification information into a registration request message in a case that the LTE supports a procedure of providing SNPN information.

The LTE may also incorporate one or more pieces of identification information out of the first to sixth identification information into a registration request message in a case that it is necessary to acquire SNPN information. The UE may also incorporate one or more pieces of identification information out of the first to sixth identification information into a registration request message in a case that it is necessary to perform an onboarding service. The UE may also incorporate one or more pieces of identification information out of the first to sixth identification information into a registration request message in a case that it is necessary to perform a procedure of providing SNPN information.

The LTE may also incorporate one or more pieces of identification information out of the first to sixth identification information into a registration request message in a case that the present procedure is a registration procedure for an onboarding service.

The LTE may also incorporate the first identification information into a registration request message in a case that the UE supports registration with which only an onboarding service is available. More specifically, the LTE may incorporate the first identification information indicating that the UE supports registration with which only an onboarding service is available into a registration request message in a case that the LTE supports an onboarding service.

The UE may also incorporate the second identification information indicating the type of a procedure of providing SNPN information supported by the LTE into a registration request message in a case that the LTE supports a procedure of providing SNPN information. More specifically, the LTE may incorporate the second identification information indicating that the LTE supports a procedure of providing SNPN information via a user plane into a registration request message in a case that the LTE supports a procedure of providing SNPN information via a user plane. The LTE may also incorporate the second identification information indicating that the LTE supports a procedure of providing SNPN information via a control plane into a registration request message in a case that the LTE supports a procedure of providing SNPN information via a control plane.

The LTE may also incorporate the third identification information into a registration request message in a case that the LTE supports a procedure of providing SNPN information via a user plane. More specifically, the LTE may incorporate the third identification information indicating that the LTE supports a procedure of providing SNPN information via a user plane into a registration request message in a case that the UE supports a procedure of providing SNPN information via a user plane.

The LTE may also incorporate the fourth identification information into a registration request message in a case that the LTE supports a procedure of providing SNPN information via a control plane. More specifically, the UE may incorporate the fourth identification information indicating that the LTE supports a procedure of providing SNPN information via a control plane into a registration request message in a case that the LTE supports a procedure of providing SNPN information via a control plane.

The UE may also incorporate the fourth identification information indicating that the LTE supports a procedure of providing SNPN information using PCOs or ePCOs into a registration request message in a case that the LTE supports a procedure of providing SNPN information via a control plane. The LTE may also incorporate the fourth identification information indicating that the LTE supports a procedure of providing SNPN information using a URSP into a registration request message in a case that the UE supports a procedure of providing SNPN information via a control plane.

The LTE may also incorporate the fifth identification information into a registration request message in a case that the UE requests the use of a procedure of providing SNPN information. The UE may also incorporate the fifth identification information indicating the type of a procedure of providing SNPN information requested by the LTE into a registration request message in a case that the UE requests the use of a procedure of providing SNPN information. More specifically, the LTE may incorporate the fifth identification information indicating a procedure of providing SNPN information via a user plane into a registration request message in a case that the UE requests the use of a procedure of providing SNPN information via a user plane. The LTE may also incorporate the fifth identification information indicating a procedure of providing SNPN information via a control plane into a registration request message in a case that the UE requests the use of a procedure of providing SNPN information via a control plane.

The LTE may also incorporate the sixth identification information into a registration request message in a case that the present procedure is a registration procedure for an onboarding service. More specifically, the LTE may incorporate the sixth identification information indicating a 'follow-on request pending' into a registration request message in a case that the present procedure is a registration procedure for an onboarding service.

The LTE may also incorporate one or more pieces of identification information out of the first to sixth identification information into a registration request message to indicate, to the network, content indicated by the identification information included in the registration request message. The LTE may also incorporate one or more pieces of identification information out of the first to sixth identification information into a registration request message to request content indicated by the identification information included in the registration request message from the network.

The LTE may also select or determine whether to incorporate one or more pieces of identification information out of the first to sixth identification information into a registration request message based on subscriber information, network status, user registration information, a context held by the UE, and/or the like.

The UE may also initiate a PDU session establishment procedure during a registration procedure by transmitting a registration request message including an SM message (e.g., a PDU session establishment request message) or by transmitting an SM message (e.g., a PDU session establishment request message) together with a registration request message.

In a case of receiving the RRC message including the registration request message, the 5G AN (or the gNB) selects an AMF to which to transfer the registration request message (S802). The 5G AN (or the gNB) can select an AMF based on information included in the registration request message and/or the RRC message. The 5G AN (or the gNB) extracts the registration request message from the received RRC message and transfers the registration request message to the selected AMF (S804).

The AMF may make a first conditional decision in a case that the AMF has received a registration request message. The first conditional decision is a decision as to whether the network (or AMF) is to accept the request of the UE. The AMF initiates a procedure (A) of FIG. 7 in a case that the first conditional decision is true, whereas the AMF initiates a procedure (B) of FIG. 7 in a case that the first conditional decision is false.

The first conditional decision may be made based on reception of a registration request message, each piece of identification information included in the registration request message, subscriber information, network capability information, an operator policy, network status, user registration information, a context held by the AMF, and/or the like. For example, the first conditional decision may be true in a case that the network allows the request of the LTE and may be false in a case that the network does not allow the request of the UE. The first conditional decision may be true in a case that the network with which the UE is to register and/or apparatuses in the network support a function requested by the UE and may be false in a case that they do not support the function requested by the UE. The first conditional decision may be true in a case that the transmitted and/or received identification information is allowed and may be false in a case that the transmitted and/or received identification information is not allowed. The conditions for determining whether the first conditional decision is true or false may not be limited to the conditions described above.

First, the case where the first conditional decision is true will be described. The AMF can first make a fourth conditional decision in the procedure (A) of FIG. 7. The fourth conditional decision is a decision as to whether the AMF is to transmit and/or receive an SM message to and/or from an SMF.

The fourth conditional decision may be made based on whether the AMF has received an SM message. The fourth conditional decision may be made based on whether an SM message is included in the registration request message. For example, the fourth conditional decision may be true in a case that the AMF has received an SM message and/or in a case that an SM message is included in the registration request message and false in a case that the AMF has received no SM message and/or in a case that no SM message is included in the registration request message. The conditions for determining whether the fourth conditional decision is true or false may not be limited to the conditions described above.

The AMF selects an SMF and transmits and/or receives an SM message to and/or from the selected SMF in a case that the fourth conditional decision is true, and on the other hand, does not perform the SMF selection and SM message transmission and/or reception in a case that the fourth conditional decision is false (S806). Even in a case that the fourth conditional decision is true, the AMF may stop the procedure (A) of FIG. 7 in a case that the AMF has received an SM message indicating rejection from the SMF. At this time, the AMF can initiate the procedure (B) of FIG. 7.

The AMF can notify the SMF of identification information received in the registration request message in a case that the AMF has transmitted and/or received an SM message to and/or from the SMF in S806. The SMF can acquire the identification information received from the AMF by transmitting and/or receiving an SM message to and/or from the AMF.

Next, based on reception of the registration request message and/or completion of transmission and/or reception of the SM message to and/or from the SMF, the AMF transmits a registration accept message to the UE via the 5G AN (or the gNB) as a response message to the registration request message (S808). For example, in a case that the fourth conditional decision is false, the AMF may transmit a registration accept message based on receiving the registration request message from the LTE. In a case that the fourth conditional decision is true, the AMF may transmit a registration accept message based on completion of transmission and/or reception of an SM messages to and/or from the SMF. The registration accept message is a NAS message transmitted and/or received over the N1 interface, but is incorporated into an RRC message and transmitted and/or received between the UE and the 5G AN (the gNB).

The AMF may transmit a registration accept message including one or more pieces of identification information out of at least the eleventh to fourteenth identification information. By transmitting such identification information, the AMF may indicate that the network supports each function or may indicate that the request of the UE has been accepted. In a case that a plurality of pieces of identification information are transmitted and/or received, two or more of the plurality of pieces of identification information may be configured as one or more pieces of identification information. Information indicating support for each function and information indicating a request to use each function may be transmitted and/or received with the same piece of identification information or may be transmitted and/or received as different pieces of identification information.

The network may incorporate one or more pieces of identification information out of the eleventh to fourteenth identification information into a registration accept message in a case that the network allows an onboarding service. The network may also incorporate one or more pieces of identification information out of the eleventh to fourteenth identification information into a registration accept message in a case that the network allows registration with which only an onboarding service is available. The network may also incorporate one or more pieces of identification information out of the eleventh to fourteenth identification information into a registration accept message in a case that the network allows the use of a procedure of providing SNPN information.

The network may also incorporate one or more pieces of identification information out of the eleventh to fourteenth identification information into a registration accept message in a case that the network supports an onboarding service. The network may also incorporate one or more pieces of identification information out of the eleventh to fourteenth identification information into a registration accept message in a case that the network supports a procedure of providing SNPN information.

The network may also incorporate one or more pieces of identification information out of the eleventh to fourteenth identification information into a registration accept message in a case that it is possible to provide SNPN information. The network may also incorporate one or more pieces of identification information out of the eleventh to fourteenth identification information into a registration accept message in a case that it is possible to perform an onboarding service. The network may also incorporate one or more pieces of identification information out of the eleventh to fourteenth identification information into a registration accept message in a case that it is possible to perform a procedure of providing SNPN information.

The network may also incorporate the eleventh identification information into a registration accept message in a case that the network supports registration with which only an onboarding service is available. More specifically, the network may incorporate the eleventh identification information indicating that the network supports registration with which only an onboarding service is available into a registration accept message in a case that the network supports an onboarding service.

The network may also incorporate the twelfth identification information indicating the type of a procedure of providing SNPN information supported by the network into a registration accept message in a case that the network supports a procedure of providing SNPN information. More specifically, the network may incorporate the twelfth identification information indicating that the network supports a procedure of providing SNPN information via a user plane into a registration accept message in a case that the network supports a procedure of providing SNPN information via a user plane. The network may also incorporate the twelfth identification information indicating that the network supports a procedure of providing SNPN information via a control plane into a registration accept message in a case that the network supports a procedure of providing SNPN information via a control plane.

The network may also incorporate the thirteenth identification information into a registration accept message in a case that the network supports a procedure of providing SNPN information via a user plane. More specifically, the network may incorporate the thirteenth identification information indicating that the network supports a procedure of providing SNPN information via a user plane into a registration accept message in a case that the network supports a procedure of providing SNPN information via a user plane.

The network may also incorporate the fourteenth identification information into a registration accept message in a case that the network supports a procedure of providing SNPN information via a control plane. More specifically, the network may incorporate the fourteenth identification information indicating that the network supports a procedure of providing SNPN information via a control plane into a registration accept message in a case that the network supports a procedure of providing SNPN information via a control plane.

The network may also incorporate the fourteenth identification information indicating that the network supports a procedure of providing SNPN information using PCOs or ePCOs into a registration accept message in a case that the network supports a procedure of providing SNPN information via a control plane. The network may also incorporate the fourteenth identification information indicating that the network supports a procedure of providing SNPN information using a URSP into a registration accept message in a case that the network supports a procedure of providing SNPN information via a control plane.

The network may also incorporate one or more pieces of identification information out of the eleventh to fourteenth identification information into a registration accept message to indicate, to the UE, content indicated by the identification information included in the registration accept message. The network may also incorporate one or more pieces of identification information out of the eleventh to fourteenth identification information into a registration accept message to allow the UE content indicated by the identification information included in the registration accept message.

The AMF may select or determine which of the eleventh to fourteenth identification information is to be incorporated into a registration accept message based on each piece of received identification information, subscriber information, network capability information, an operator policy, network status, user registration information, a context held by the AMF, and/or the like.

The AMF can transmit a registration accept message including an SM message (e.g., a PDU session establishment accept message) or transmit an SM message (e.g., a PDU session establishment accept message) together with a registration accept message. However, this transmission method may be performed in a case that an SM message (e.g., a PDU session establishment request message) is included in the registration request message and the fourth conditional decision is true. This transmission method may also be performed in a case that an SM message (e.g., a PDU session establishment request message) is included together with the registration request message and the fourth conditional decision is true. By performing such a transmission method, the AMF can indicate that the procedure for SM has been accepted in the registration procedure.

The AMF may indicate that the request of the UE has been accepted by transmitting a registration accept message based on each piece of received identification information, subscriber information, network capability information, an operator policy, network status, user registration information, a context held by the AMF, and/or the like.

The AMF may also transmit a registration accept message including information indicating that a part of the request of the LTE has been rejected or may transmit information indicating that a part of the request of the LTE has been rejected to indicate a reason why a part of the request of the LTE has been rejected. The LTE may also recognize a reason why a part of the request of the LTE has been rejected by receiving information indicating that a part of the request of the LTE has been rejected. The reason for rejection may be information indicating that content indicated by the identification information received by the AMF is not allowed.

The UE receives the registration accept message from the AMF via the 5G AN (the gNB) (S808). By receiving the registration accept message, the UE can recognize that the request of the LTE in the registration request message has been accepted and the content of various identification information included in the registration accept message.

The UE can further transmit a registration complete message to the AMF via the 5G AN (the gNB) as a response message to the registration accept message (S810). In a case that the UE has received an SM message such as a PDU session establishment accept message, the UE may transmit a registration complete message including an SM message such as a PDU session establishment complete message or may incorporate the SM message into the registration complete message to indicate that the procedure for SM has been completed. Here, the registration complete message is a NAS message transmitted and/or received over the N1 interface, but is incorporated into an RRC message and transmitted and/or received between the UE and the 5G AN (the gNB).

The AMF receives the registration complete message via the 5G AN (the gNB) (S810). Each apparatus completes the procedure (A) of FIG. 7 based on transmission and/or reception of the registration accept message and/or the registration complete message.

Next, the case where the first conditional decision is false will be described. In the procedure (B) of FIG. 7, the AMF transmits a registration reject message to the UE via the 5G AN (the gNB) as a response message to the registration request message (S812). Here, the registration reject message is a NAS message transmitted and/or received over the N1 interface, but is incorporated into an RRC message and transmitted and/or received between the UE and the 5G AN (the gNB).

Here, the AMF may transmit a registration reject message including at least the 21st identification information or may transmit the 21st identification information to indicate that the request of the UE has been rejected or to indicate a reason why the request of the UE has been rejected.

The network may incorporate the 21st identification information into a registration reject message in a case that the network does not allow an onboarding service. The network may also incorporate the 21st identification information into a registration reject message in a case that the network does not allow registration with which only an onboarding service is available. The network may also incorporate the 21st identification information into a registration reject message in a case that the network does not allow the use of a procedure of providing SNPN information.

The network may also incorporate the 21st identification information into a registration reject message in a case that the network does not support an onboarding service. The network may also incorporate the 21st identification information into a registration reject message in a case that the network does not support a procedure of providing SNPN information.

The network may also incorporate the 21st identification information into a registration reject message in a case that it is not possible to provide SNPN information. The network may also incorporate the 21st identification information into a registration reject message in a case that it is not possible to perform an onboarding service. The network may also incorporate the 21st identification information into the registration reject message in a case that it is not possible to perform a procedure of providing SNPN information.

The network may also incorporate the 21st identification information into a registration reject message in a case that the network does not support registration with which only an onboarding service is available. More specifically, the network may incorporate the 21st identification information indicating that the network does not support registration with which only an onboarding service is available into a registration reject message in a case that the network does not support registration with which only an onboarding service is available.

The network may also incorporate the 21st identification information indicating that the network does not support an onboarding service into a registration reject message in a case that the network does not support an onboarding service. The network may also incorporate the 21st identification information indicating that the network does not support a procedure of providing SNPN information into a registration reject message in a case that the network does not support a procedure of providing SNPN information.

The network may also incorporate the 21st identification information indicating that the network does not support a procedure of providing requested SNPN information into a registration reject message in a case that the network does not support a procedure of providing requested SNPN information. More specifically, the network may incorporate the 21st identification information indicating that the network does not support a procedure of providing SNPN information via a user plane into a registration reject message in a case that the network does not support a procedure of providing SNPN information via a user plane. The network may also incorporate the 21st identification information indicating that the network does not support a procedure of providing SNPN information via a control plane into a registration reject message in a case that the network does not support a procedure of providing SNPN information via a control plane.

The network may also incorporate the 21st identification information into a registration reject message to indicate, to the LTE, content indicated by the identification information included in the registration reject message. The network may also incorporate the 21st identification information into a registration reject message not to allow the UE content indicated by the identification information included in the registration reject message.

The AMF may select or determine whether at least the 21st identification information is to be incorporated into a registration reject message based on each piece of received identification information, subscriber information, network capability information, an operator policy, network status, user registration information, a context held by the AMF, and/or the like.

The AMF may also transmit a registration reject message to indicate that the request of the LTE in the registration request message has been rejected. The AMF may also transmit a registration reject message including information indicating a reason for rejection or may transmit a reason for rejection to indicate the reason for rejection. The LTE may also recognize a reason why the request of the LTE has been rejected by receiving information indicating the reason why the request of the LTE has been rejected. The reason for rejection may be information indicating that content indicated by the identification information received by the AMF is not allowed.

The UE receives the registration reject message from the AMF via the 5G AN (the gNB) (S812). By receiving the registration reject message, the UE can recognize that the request of the LTE in the registration request message has been rejected and the content of various identification information included in the registration reject message. The UE may also recognize that the request of the LTE has been rejected in a case that the LTE does not receive a registration reject message even in a case that a predetermined period of time has elapsed after transmitting a registration request message. Each apparatus completes the procedure (B) in the present procedure based on transmission and/or reception of the registration reject message.

The procedure (B) of FIG. 7 may be initiated after the procedure (A) of FIG. 7 is stopped. In the procedure (A) of FIG. 7, in a case that the fourth conditional decision is true, the AMF may transmit a registration reject message including an SM message indicating rejection such as a PDU session establishment reject message or may incorporate an SM message indicating rejection into a registration reject message to indicate that the procedure for SM has been rejected. In that case, the UE may also receive a SM message indicating rejection such as a PDU session establishment reject message or may recognize that the procedure for SM has been rejected.

Each apparatus completes the registration procedure based on completion of the procedure (A) or (B) of FIG. 7. Each apparatus may transition to a state in which the UE has registered with the network (an RM_REGISTERED state) based on completion of the procedure (A) of FIG. 7 or may remain in a state in which the UE has not registered with the network (an RM_DEREGISTERED state) or may transition to a state in which the UE has not registered with the network based on completion of the procedure (B) of FIG. 7. The transition of each apparatus to each state may be performed based on completion of the registration procedure or may be performed based on establishment of a PDU session.

Based on completion of the registration procedure, each apparatus may perform processing based on information transmitted and/or received in the registration procedure. For example, each apparatus may recognize a reason why the request of the UE has been rejected in a case that information indicating that a part of the request of the UEs has been rejected has been transmitted and/or received. Each apparatus may also perform the present procedure again or may perform a registration procedure with the core network_B or another cell based on the reason why the request of the UE has been rejected.

Based on completion of the registration procedure, the UE may store the identification information received together with the registration accept message and/or the registration reject message or may recognize the network's decision.

For example, the UE may recognize that an onboarding service is allowed in a case that the UE has received one or more pieces of identification information out of the eleventh to fourteenth identification information. The LTE may also recognize that registration with which only an onboarding service is available is allowed in a case that the UE has received one or more pieces of identification information out of the eleventh to fourteenth identification information. The LTE may also recognize that use of a procedure of providing SNPN information is allowed in a case that the LTE has received one or more pieces of identification information out of the eleventh to fourteenth identification information.

The UE may also recognize that an onboarding service is supported in a case that the LTE has received one or more pieces of identification information out of the eleventh to fourteenth identification information. The UE may also recognize that a procedure of providing SNPN information is supported in a case that the UE has received one or more pieces of identification information out of the eleventh to fourteenth identification information.

The LTE may also recognize that the network can provide SNPN information in a case that the UE has received one or more pieces of identification information out of the eleventh to fourteenth identification information. The UE may also recognize that an onboarding service can be performed in a case that the UE has received one or more pieces of identification information out of the eleventh to fourteenth identification information. The UE may also recognize that a procedure of providing SNPN information can be performed in a case that the UE has received one or more pieces of identification information out of the eleventh to fourteenth identification information.

The UE may also recognize that registration with which only an onboarding service is available is supported in a case that the UE has received the eleventh identification information. More specifically, the UE may recognize that an onboarding service is supported in a case that the UE has received the eleventh identification information indicating that the network supports registration with which only an onboarding service is available.

The UE may also recognize that a procedure of providing SNPN information is supported in a case that the UE has received the twelfth identification information indicating the type of a procedure of providing SNPN information supported by the network. More specifically, the UE may recognize that a procedure of providing SNPN information via a user plane is supported in a case that the UE has received the twelfth identification information indicating that a procedure of providing SNPN information via a user plane is supported. The UE may also recognize that a procedure of providing SNPN information via a control plane is supported in a case that the UE has received the twelfth identification information indicating that a procedure of providing SNPN information via a control plane is supported.

The UE may also recognize that a procedure of providing SNPN information via a user plane is supported in a case that the UE has received the thirteenth identification information. More specifically, the UE may recognize that a procedure of providing SNPN information via a user plane is supported in a case that the UE has received the thirteenth identification information indicating that a procedure of providing SNPN information via a user plane is supported.

The UE may also recognize that a procedure of providing SNPN information via a control plane is supported in a case that the UE has received the fourteenth identification information. More specifically, the UE may recognize that a procedure of providing SNPN information via a control plane is supported in a case that the UE has received the fourteenth identification information indicating that a procedure of providing SNPN information via a control plane is supported.

In a case that the UE has received the fourteenth identification information indicating that a procedure of providing SNPN information using PCOs or ePCOs is supported, the UE may also recognize that a procedure of providing SNPN information via a control plane is supported or may recognize that a procedure of providing SNPN information using PCOs or ePCOs is supported. In a case that the UE has received the fourteenth identification information indicating that a procedure of providing SNPN information using a URSP is supported, the UE may also recognize that a procedure of providing SNPN information via a control plane is supported or may recognize that a procedure of providing SNPN information using a URSP is supported.

In a case that the UE has received one or more pieces of identification information out of the eleventh to fourteenth identification information, the UE may recognize content indicated by the received identification information. In a case that the UE has received one or more pieces of identification information out of the eleventh to fourteenth identification information, the UE may also recognize that content indicated by the identification information included in a registration accept message is allowed.

The UE may also recognize that establishment of a PDU session for a function other than an onboarding service is prohibited in a case that the UE has received one or more pieces of identification information out of the eleventh to fourteenth identification information. The UE may also be configured such that establishment of a PDU session for a function other than an onboarding service is prohibited in a case that the UE has received one or more pieces of identification information out of the eleventh to fourteenth identification information. In other words, the UE may be configured such that a PDU session establishment procedure for a function other than an onboarding service is not initiated in a case that the UE has received one or more pieces of identification information out of the eleventh to fourteenth identification information.

The UE may also recognize that establishment of a PDU session for other than a procedure of providing SNPN information is prohibited in a case that the UE has received one or more pieces of identification information out of the eleventh to fourteenth identification information. The UE may also be configured such that establishment of a PDU session for other than a procedure of providing SNPN information is prohibited in a case that the UE has received one or more pieces of identification information out of the eleventh to fourteenth identification information. In other words, the UE may be configured such that a PDU session establishment procedure for a PDU session for other than a procedure of providing SNPN information is not initiated in a case that the UE has received one or more pieces of identification information out of the eleventh to fourteenth identification information. The UE may also be configured such that a PDU session establishment procedure for other than a procedure of providing SNPN information is not initiated in a case that the UE has received one or more pieces of identification information out of the eleventh to fourteenth identification information.

A period during which establishment of a PDU session for other than a procedure of providing SNPN information is prohibited may be a period managed by a timer. In other words, the UE may be configured such that establishment of a PDU session for other than a procedure of providing SNPN information is not prohibited based on expiration of a timer.

The period during which establishment of a PDU session for other than a procedure of providing SNPN information is prohibited may also be until a new registration procedure and/or deregistration procedure is performed. In other words, the UE may be configured such that establishment of a PDU session for other than a procedure of providing SNPN information is not prohibited based on performing of a new registration procedure and/or deregistration procedure.

The period during which establishment of a PDU session for other than a procedure of providing SNPN information is prohibited may also be until power is turned off and/or a USIM is removed. In other words, the UE may be configured such that establishment of a PDU session for other than a procedure of providing SNPN information is not prohibited based on power off and/or removal of a USIM.

Here, the PDU session for other than a procedure of providing SNPN information may be a normal PDU session. More specifically, the PDU session other than a procedure of providing SNPN information may be a PDU session for transmitting and/or receiving normal user data.

The PDU session for other than a procedure of providing SNPN information may be a PDU session for other than an onboarding service. The PDU session for other than a procedure of providing SNPN information may be a PDU session for a function other than an onboarding service.

For example, the PDU session for other than a procedure of providing SNPN information may be a PDU session for use in IMS services. The PDU session for other than a procedure of providing SNPN information may also be a PDU session for use in emergency services. The PDU session for other than a procedure of providing SNPN information may also be a PDU session for use in LADNs. The PDU session for other than a procedure of providing SNPN information may also be a PDU session for use in CIoT.

In other words, the PDU session for other than a procedure of providing SNPN information may be a PDU session for an IMS service. The PDU session for other than a procedure of providing SNPN information may also be a PDU session for an emergency service. The PDU session for other than a procedure of providing SNPN information may also be a PDU session for an LADN. The PDU session for other than a procedure of providing SNPN information may also be a PDU session for CIoT.

The PDU session establishment procedure for other than a procedure of providing SNPN information may also be a PDU session establishment procedure for an IMS service. The PDU session establishment procedure for other than a procedure of providing SNPN information may also be a PDU session establishment procedure for an emergency service. The PDU session establishment procedure for other than a procedure of providing SNPN information may also be a PDU session establishment procedure for an LADN. The PDU session establishment procedure for other than a procedure of providing SNPN information may also be a PDU session establishment procedure for CIoT.

The PDU session for other than a procedure of providing SNPN information is not limited to the above and may be any PDU session other than PDU sessions established and used for a procedure of providing SNPN information.

The UE may also recognize the type of an allowed procedure of providing SNPN information in a case that the UE has received the twelfth identification information indicating the type of a procedure of providing SNPN information supported by the network. More specifically, the UE may recognize that use of a procedure of providing SNPN information via a user plane is allowed in a case that the UE has received the twelfth identification information indicating that a procedure of providing SNPN information via a user plane is supported. The UE may also recognize that use of a procedure of providing SNPN information via a control plane is allowed in a case that the UE has received the twelfth identification information indicating that a procedure of providing SNPN information via a control plane is supported.

The UE may also recognize that use of a procedure of providing SNPN information via a user plane is allowed in a case that the UE has received the thirteenth identification information. More specifically, the UE may recognize that use of a procedure of providing SNPN information via a user plane is allowed in a case that the UE has received the thirteenth identification information indicating that a procedure of providing SNPN information via a user plane is supported.

The UE may also recognize that use of a procedure of providing SNPN information via a control plane is allowed in a case that the UE has received the fourteenth identification information. More specifically, the UE may recognize that use of a procedure of providing SNPN information via a control plane is allowed in a case that the UE has received the fourteenth identification information indicating that a procedure of providing SNPN information via a control plane is supported.

The UE may also determine whether to establish a PDU session in a case that the UE has received one or more pieces of identification information out of the eleventh to fourteenth identification information. In other words, the UE may determine whether to initiate a PDU session establishment procedure for establishing a PDU session in a case that the UE has received one or more pieces of identification information out of the eleventh to fourteenth identification information.

For example, the UE may initiate a PDU session establishment procedure for establishing a PDU session or establish a PDU session in a case that the UE has received one or more pieces of identification information out of the eleventh to fourteenth identification information. The UE may also initiate a PDU session establishment procedure for establishing a PDU session or establish a PDU session in a case that the UE has received the twelfth identification information indicating that the UE supports a procedure of providing SNPN information via a user plane. The UE may also initiate a PDU session establishment procedure for establishing a PDU session or establish a PDU session in a case that the UE has received the thirteenth identification information.

Conversely, the UE may be configured not to initiate a PDU session establishment procedure for establishing a PDU session or may not establish a PDU session in a case that the UE has received one or more pieces of identification information out of the eleventh to fourteenth identification information. The UE may also be configured not to initiate a PDU session establishment procedure for establishing a PDU session or may not establish a PDU session in a case that the UE has received the twelfth identification information indicating that the UE supports a procedure of providing SNPN information via a control plane. The UE may also be configured not to initiate a PDU session establishment procedure for establishing a PDU session or may not establish a PDU session in a case that the UE has received the fourteenth identification information.

The UE may also initiate a PDU session establishment procedure in a case that the UE has received the fourteenth identification information indicating that the UE supports a procedure of providing SNPN information using PCOs or ePCOs. Conversely, the UE may not initiate a PDU session establishment procedure in a case that the UE has received the fourteenth identification information indicating that the UE supports a procedure of providing SNPN information using a URSP.

In other words, the UE may initiate a PDU session establishment procedure in a case that a procedure of providing SNPN information using PCOs or ePCOs is supported and/or allowed. Conversely, the UE may not initiate a PDU session establishment procedure in a case that a procedure of providing SNPN information using a URSP is supported and/or allowed.

The UE may also initiate a PDU session establishment procedure in a case that the UE performs a procedure of providing SNPN information using PCOs or ePCOs. Conversely, the UE may not initiate a PDU session establishment procedure in a case that the LTE performs a procedure of providing SNPN information using a URSP.

Here, the PDU session may be a PDU session used in a procedure of providing SNPN information. In other words, the PDU session may be a PDU session for use in a procedure of providing SNPN information. The PDU session may also be a PDU session for a procedure of providing SNPN information.

The PDU session may also be a PDU session used in an onboarding service. In other words, the PDU session may be a PDU session for use in onboarding services. The PDU session may also be a PDU session for an onboarding service.

The PDU session establishment procedure may also be a PDU session establishment procedure for use in a procedure of providing SNPN information. The PDU session establishment procedure may also be a PDU session establishment procedure for a procedure of providing SNPN information. The PDU session establishment procedure may also be a PDU session establishment procedure for establishing a PDU session for use in a procedure of providing SNPN information. The PDU session establishment procedure may also be a PDU session establishment procedure for a procedure of providing SNPN information.

The PDU session establishment procedure may also be a PDU session establishment procedure for use in onboarding services. The PDU session establishment procedure may also be a PDU session establishment procedure for an onboarding service. The PDU session establishment procedure may also be a PDU session establishment procedure for establishing a PDU session for use in onboarding services. The PDU session establishment procedure may also be a PDU session establishment procedure for an onboarding service.

The UE may also start a timer in a case that the UE has received one or more pieces of identification information out of the eleventh to fourteenth identification information. The UE may also initiate a deregistration procedure based on expiration of the timer.

The network may also start a timer in a case that the network has transmitted one or more pieces of identification information out of the eleventh to fourteenth identification information. The network may also initiate a deregistration procedure based on expiration of the timer.

Here, the timer may be a timer that indicates a validity period of registration with which only an onboarding service is available. In other words, the timer may be a timer that indicates a time limit within which a procedure of providing SNPN information can be performed.

The UE may also be configured such that a NAS signaling connection is not released after the present procedure is completed. More specifically, the UE may be configured such that a NAS signaling connection is not released after the present procedure is completed in a case that the present procedure is a registration procedure for an onboarding service.

In other words, the UE may not release a NAS signaling connection after the present procedure is completed in a case that the present procedure is a registration procedure for an onboarding service. Conversely, the UE may release a NAS signaling connection after the present procedure is completed in a case that the present procedure is not a registration procedure for an onboarding service.

Each apparatus may also be configured such that a NAS signaling connection is not released in a case that the present procedure is a registration procedure for an onboarding service. More specifically, each apparatus may be configured such that a NAS signaling connection is not released after the present procedure is completed in a case that the present procedure is a registration procedure for an onboarding service.

In other words, each apparatus may not release a NAS signaling connection after the present procedure is completed in a case that the present procedure is a registration procedure for an onboarding service. Conversely, each apparatus may release a NAS signaling connection after the present procedure is completed in a case that the present procedure is not a registration procedure for an onboarding service.

The UE may also be configured such that a NAS signaling connection is not released in a case that the UE has transmitted a registration request message including one or more pieces of identification information out of the first to sixth pieces of identification information. More specifically, the UE may be configured such that a NAS signaling connection is not released after the present procedure is completed in a case that the UE has transmitted a registration request message including one or more pieces of identification information out of the first to sixth pieces of identification information.

In other words, the UE may not release a NAS signaling connection after the present procedure is completed in a case that the UE has incorporated one or more pieces of identification information out of the first to sixth identification information into a registration request message. Conversely, the UE may release a NAS signaling connection after the present procedure is completed in a case that the UE has not incorporated one or more pieces of identification information out of the first to sixth identification information into a registration request message.

The UE may also be configured such that a NAS signaling connection is not released in a case that the UE has transmitted a registration request message including the sixth identification information indicating information indicating a follow-on request pending. More specifically, the UE may be configured such that a NAS signaling connection is not released after the present procedure is completed in a case that the UE has transmitted a registration request message including the sixth identification information indicating a follow-on request pending.

In other words, the UE may not release a NAS signaling connection after the present procedure is completed in a case that the UE has incorporated the sixth identification information indicating information indicating a follow-on request pending into a registration request message. Conversely, the UE may release a NAS signaling connection after the present procedure is completed in a case that the UE has incorporated the sixth identification information indicating no follow-on request pending into a registration request message.

The network may also be configured such that a NAS signaling connection is not released in a case that the network has received a registration request message including one or more pieces of identification information out of the first to sixth pieces of identification information. More specifically, the network may be configured such that a NAS signaling connection is not released after the present procedure is completed in a case that the network has received a registration request message including one or more pieces of identification information out of the first to sixth pieces of identification information.

In other words, the network may not release a NAS signaling connection after the present procedure is completed in a case that a registration request message includes one or more pieces of identification information out of the first to sixth identification information. Conversely, the network may release a NAS signaling connection after the present procedure is completed in a case that a registration request message does not include one or more pieces of identification information out of the first to sixth identification information.

The network may also be configured such that a NAS signaling connection is not released in a case that the network has received a registration request message including the sixth identification information indicating information indicating a follow-on request pending. More specifically, the network may be configured such that a NAS signaling connection is not released after the present procedure is completed in a case that the network has received a registration request message including the sixth identification information indicating a follow-on request pending.

In other words, the network may not release a NAS signaling connection after the present procedure is completed in a case that a registration request message includes the sixth identification information indicating information indicating a follow-on request pending. Conversely, the network may release a NAS signaling connection after the present procedure is completed in a case that a registration request message includes the sixth identification information indicating no follow-on request pending.

The UE may also recognize that an onboarding service is not allowed in a case that the UE has received the 21st identification information. The UE may also recognize that registration with which only an onboarding service is available is not allowed in a case that the UE has received the 21st identification information. The UE may also recognize that use of a procedure of providing SNPN information is allowed in a case that the UE has received the 21st identification information.

The UE may also recognize that an onboarding service is not supported in a case that the UE has received the 21st identification information. The UE may also recognize that a procedure of providing SNPN information is not supported in a case that the UE has received the 21st identification information.

The LTE may also recognize that SNPN information cannot be provided and/or acquired in a case that the UE has received the 21st identification information. The UE may also recognize that an onboarding service cannot be performed in a case that the UE has received the 21st identification information. The UE may also recognize that a procedure of providing SNPN information cannot be performed in a case that the UE has received the 21st identification information.

The UE may also recognize that registration with which only an onboarding service is available is not supported in a case that the UE has received the 21st identification information. More specifically, the UE may recognize that registration with which only an onboarding service is available is not supported in a case that the UE has received the 21st identification information indicating that the network does not support registration with which only an onboarding service is available.

The UE may also recognize that an onboarding service is not supported in a case that the UE has received the 21st identification information indicating that an onboarding service is not supported. The UE may also recognize that a procedure of providing SNPN information is not supported in a case that the UE has received the 21st identification information indicating that a procedure of providing SNPN information is not supported.

The UE may also recognize that a procedure of providing requested SNPN information is not supported in a case that the UE has received the 21st identification information indicating that a procedure of providing requested SNPN information is not supported. More specifically, the UE may recognize that a procedure of providing SNPN information via a user plane is not supported in a case that the UE has received the 21st identification information indicating that a procedure of providing SNPN information via a user plane is not supported. The UE may also recognize that a procedure of providing SNPN information via a control plane is not supported in a case that the UE has received the 21st identification information indicating that a procedure of providing SNPN information via a control plane is not supported.

In a case that the UE has received the 21st identification information, the UE may recognize content indicated by the received identification information. In a case that the UE has received the 21st identification information, the UE may also recognize that content indicated by the received identification information is not allowed.

The UE may also add network identification information to a first list in a case that the UE has received the 21st identification information. The UE may also create a first list and add network identification information to the created first list in a case that the UE has received the 21st identification information.

More specifically, the UE may add network identification information to a first list in a case that the UE has received the 21st identification information indicating that a procedure of providing SNPN information is not supported. The UE may also add network identification information to a first list in a case that the UE has received the 21st identification information indicating that an onboarding service is not supported. The UE may also add network identification information to a first list in a case that the UE has received the 21st identification information indicating that the network does not support registration with which only an onboarding service is available.

Here, the network identification information may be information identifying a network in which the UE is currently located. More specifically, in a case that the UE is located in a PLMN, the network identification information may be information identifying the PLMN in which the UE is currently located. Conversely, in a case that the UE is located in an SNPN, the network identification information may be information identifying the SNPN in which the UE is currently located.

For example, in a case that the present procedure is performed in a first network, the network identification information may be information identifying the first network. More specifically, in a case that the present procedure is performed in a first PLMN, the network identification information may be information identifying the first PLMN. In a case that the present procedure is performed in a first SNPN, the network identification information may be information identifying the first SNPN.

A period during which a first list is maintained may be a period managed by a timer. In other words, the UE may release or delete a first list based on expiration of a timer.

The period during which a first list is maintained may also be until a procedure of providing SNPN information is completed. In other words, the UE may release or delete a first list based on completion of a procedure of providing SNPN information.

The period during which a first list is maintained may also be until an onboarding service is completed. In other words, the UE may release or delete a first list based on completion of an onboarding service.

The period during which a first list is maintained may also be until the provision and/or acquisition of SNPN information is completed. In other words, the UE may release or delete a first list based on completion of acquiring SNPN information.

The period during which a first list is maintained may also be until a deregistration procedure and/or second network selection is performed. In other words, the UE may release or delete a first list based on performing of a deregistration procedure and/or second network selection.

The period during which a first list is maintained may also be until power is turned off and/or until a USIM is removed. In other words, the UE may release or delete a first list upon power off and/or removal of a USIM.

The UE may also perform the first network selection again in a case that the UE has received the 21st identification information. The UE may also perform the first network selection again and select a different network than a network in which the UE is currently located in a case that the UE has received the 21st identification information. The UE may also initiate a registration procedure with a new selected network after completing the performing of the first network selection again.

More specifically, the UE may perform the first network selection again in a case that the UE has received the 21st identification information indicating that a procedure of providing SNPN information is not supported. The UE may also perform the first network selection again in a case that the UE has received the 21st identification information indicating that an onboarding service is not supported. The UE may also perform the first network selection again in a case that the UE has received the 21st identification information indicating that the network does not support registration with which only an onboarding service is available.

The UE may also start a timer in a case that the UE has received the 21st identification information. Here, the timer may be a timer that indicates a time limit within which a first list is managed. In other words, the UE may release or delete a first list based on expiration of the timer.

The timer may also be a timer that indicates a time limit within which a registration procedure is prohibited. In other words, the UE may initiate a registration procedure based on expiration of the timer.

A behavior to be performed in a case that each piece of identification information has been received may be performed based on the received identification information. For example, a behavior to be performed in a case that the eleventh identification information has been received may be performed based on the received eleventh identification information. A behavior to be performed in a case that the twelfth identification information has been received may be performed based on the received twelfth identification information. A behavior to be performed in a case that the thirteenth identification information has been received may be performed based on the received thirteenth identification information. A behavior to be performed in a case that the fourteenth identification information has been received may be performed based on the received fourteenth identification information. A behavior to be performed in a case that the 21st identification information has been received may be performed based on the received 21st identification information.

### 3.2.2. PDU Session Establishment Procedure

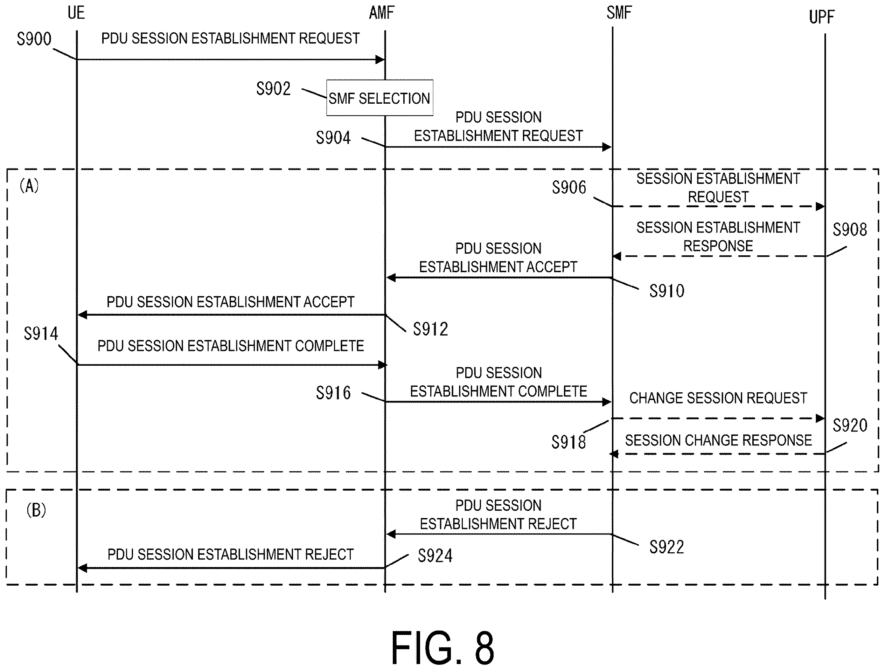

Next, an outline of a PDU session establishment procedure performed to establish a PDU session with a DN will be described using FIG. 8. The PDU session establishment procedure is a procedure in the 5GS. Hereinafter, the present procedure refers to a PDU session establishment procedure. A PDU session establishment procedure is a procedure for each apparatus to establish a PDU session. Each apparatus can initiate a PDU session establishment procedure at an arbitrary time when a registration procedure has been completed and the apparatus has entered a registered state. Each apparatus can also perform a PDU session establishment procedure during a registration procedure. Each apparatus may also establish a PDU session based on completion of a PDU session establishment procedure.

A PDU session establishment procedure may be a UE-initiated procedure that the UE initiates or may be a procedure that is initiated upon request by the UE. In other words, a PDU session establishment procedure may be a UE-requested PDU session establishment procedure. Each apparatus can establish a plurality of PDU sessions by performing a PDU session establishment procedure a plurality of times.

Here, the UE may initiate a PDU session establishment procedure for establishing a PDU session for an onboarding service in a case that a registration procedure for an onboarding service has been completed. The UE may also initiate a PDU session establishment procedure for establishing an always-on PDU session in a case that a registration procedure for an onboarding service has been completed. The UE may also initiate a PDU session establishment procedure for establishing an always-on PDU session as a PDU session for an onboarding service in a case that a registration procedure for an onboarding service has been completed.

The UE may also initiate a PDU session establishment procedure for establishing a PDU session for an onboarding service in a case that registration with which only an onboarding service is available has been completed. The UE may also initiate a PDU session establishment procedure for establishing an always-on PDU session in a case that registration with which only an onboarding service is available has been completed. The UE may also initiate a PDU session establishment procedure for establishing an always-on PDU session as a PDU session for an onboarding service in a case that registration with which only an onboarding service is available has been completed.

The UE may also initiate a PDU session establishment procedure for establishing a PDU session for an onboarding service in a case that the UE has registered with a network for use in onboarding services. The UE may also initiate a PDU session establishment procedure for establishing an always-on PDU session in a case that the UE has registered with a network for use in onboarding services. The UE may also initiate a PDU session establishment procedure for establishing an always-on PDU session as a PDU session for an onboarding service in a case that the UE has registered with a network for use in onboarding services.

First, the UE transmits a NAS message including a PDU session establishment request message to the SMF via the 5G AN (the gNB) and the AMF (S900) (S902) (S904) to initiate a PDU session establishment procedure.

Specifically, the UE transmits a NAS message including a PDU session establishment request message to the AMF via the 5G AN (the gNB) through the N1 interface (S900). The NAS message including the PDU session establishment request message may be an MM message. The MM message may be an uplink NAS transport (LTL NAS TRANSPORT) message. Here, in a case that it is stated that a PDU session establishment request message includes identification information and/or values, this may mean that an MM message including the PDU session establishment request message includes the identification information and/or values.

Here, the UE can transmit a PDU session establishment request message and/or a NAS message including one or more pieces of identification information out of at least the 41st to 42nd identification information and may also transmit a control message different from such messages, for example, a control message of a layer below the RRC layer (e.g., the MAC layer, the RLC layer, or the PDCP layer), including the one or more pieces of identification information. Such identification information may be included in such a message to indicate the request of the UE. In a case that a plurality of pieces of identification information are transmitted and/or received, two or more of the plurality of pieces of identification information may be configured as one or more pieces of identification information.

Specifically, the UE may incorporate the 41st identification information and/or the 42nd identification information into a PDU session establishment request message. The UE may also incorporate a DNN and/or S-NSSAI into an uplink NAS transport message together with the PDU session establishment request message including at least the 41st identification information and/or the 42nd identification information. The UE may also transmit the uplink NAS transport message to the AMF (S900). In other words, the UE may transmit a DNN and/or S-NSSAI to the AMF together with a PDU session establishment request message including the 41st identification information and/or the 42nd identification information. In other words, the UE may transmit a PDU session establishment request message including the 41st identification information and/or the 42nd identification information to the AMF together with a DNN and/or the S-NSSAI.

The UE may also incorporate one or more pieces of identification information out of the 41st to 42nd identification information into a PDU session establishment request message in a case that the UE requests an onboarding service. The UE may also incorporate one or more pieces of identification information out of the 41st to 42nd identification information into a PDU session establishment request message in a case that the UE requests establishment of a PDU session for an onboarding service. The UE may also incorporate one or more pieces of identification information out of the 41st to 42nd identification information into a PDU session establishment request message in a case that the UE requests the use of an onboarding service.

The UE may also incorporate one or more pieces of identification information out of the 41st to 42nd identification information into a PDU session establishment request message in a case that a registration procedure for an onboarding service has been completed. The UE may also incorporate one or more pieces of identification information out of the 41st to 42nd identification information into a PDU session establishment request message in a case that registration with which only an onboarding service is available has been completed.

The UE may also incorporate one or more pieces of identification information out of the 41st to 42nd identification information into a PDU session establishment request message in a case that the UE has registered with a network for use in onboarding services. Here, the network for use in onboarding services may be an SNPN or a PLMN.

The UE may also incorporate one or more pieces of identification information out of the 41st to 42nd identification information into a PDU session establishment request message in a case that it is necessary to acquire SNPN information. The UE may also incorporate one or more pieces of identification information out of the 41st to 42nd identification information into a PDU session establishment request message in a case that it is necessary to perform an onboarding service. The UE may also incorporate one or more pieces of identification information out of the 41st to 42nd identification information into a PDU session establishment request message in a case that it is necessary to perform a procedure of providing SNPN information.

The UE may also incorporate one or more pieces of identification information out of the 41st to 42nd identification information into a PDU session establishment request message in a case that the present procedure is a PDU session establishment procedure for an onboarding service.

The UE may also request establishment of a PDU session for an onboarding service in a case that the present procedure is a PDU session establishment procedure for an onboarding service. The UE may also request establishment of an always-on PDU session in a case that the present procedure is a PDU session establishment procedure for an onboarding service. The UE may also request establishment of an always-on PDU session as a PDU session for an onboarding service in a case that the present procedure is a PDU session establishment procedure for an onboarding service.

The UE may also request establishment of an always-on PDU session as a PDU session for an onboarding service. In this case, the UE may incorporate the 41st identification information into a PDU session establishment request message. More specifically, in this case, the UE may incorporate the 41st identification information indicating that the UE requests establishment of an always-on PDU session into a PDU session establishment request message. In other words, in this case, the UE may incorporate the 41st identification information indicating that the UE has requested establishment of a PDU session as an always-on PDU session into a PDU session establishment request message.

The UE may also incorporate the 42nd identification information into a PDU session establishment request message in a case that the UE requests establishment of a PDU session for an onboarding service. More specifically, in this case, the UE may incorporate the 41st identification information indicating that the UE has requested use of an onboarding service into a PDU session establishment request message. In other words, in this case, the UE may incorporate the 41st identification information indicating that the UE requests establishment of a PDU session for an onboarding service into a PDU session establishment request message.

The UE may also incorporate one or more pieces of identification information out of the 41st to 42nd identification information into a PDU session establishment request message to indicate, to the network, content indicated by the identification information included in the PDU session establishment request message. The UE may also incorporate one or more pieces of identification information out of the 41st to 42nd identification information into a PDU session establishment request message to request content indicated by the identification information included in the PDU session establishment request message from the network.

The UE may also select or determine whether to incorporate one or more pieces of identification information out of the 41st to 42nd identification information into a PDU session establishment request message based on subscriber information, network status, user registration information, a context held by the UE, and/or the like.

In a case of receiving the NAS message including the PDU session establishment request message (S900), the AMF extracts the PDU session establishment request message from the NAS message and selects an SMF as a transfer destination of the PDU session establishment request message (S902). The AMF may select the transfer destination SMF based on each piece of identification information included in the PDU session establishment request message and/or the NAS message, subscriber information, network capability information, an operator policy, network status, user registration information, a context held by the AMF, and/or the like.

The AMF transfers the PDU session establishment request message to the selected SMF via the N11 interface (S904).

In a case of receiving the PDU session establishment request message (S904), the SMF recognizes various identification information included in the PDU session establishment request message. The SMF then makes a third conditional decision. The third conditional decision is for the SMF to determine whether to accept the request of the UE. In the third conditional decision, the SMF determines whether the third conditional decision is true or false. The SMF initiates a procedure (A) of FIG. 8 in a case that the third conditional decision is true and initiates a procedure (B) of FIG. 8 in a case that the third conditional decision is false.

The third conditional decision may be made based on the PDU session establishment request message, each piece of identification information included in the PDU session establishment request message, subscriber information, network capability information, an operator policy, network status, user registration information, a context held by the SMF, and/or the like. For example, the third conditional decision may be true in a case that a network allows the request of the UE. The third conditional decision may be false in a case that a network does not allow the request of the UE. The third conditional decision may also be true in a case that a network to which the UE is connected and/or apparatuses in the network support functionality requested by the UE and false in a case that they do not support the functionality requested by the UE. The third conditional decision may also be true in a case that the transmitted and/or received identification information is allowed and false in a case that the transmitted and/or received identification information is not allowed. The conditions for determining whether the third conditional decision is true or false may not be limited to the conditions described above.

Next, each step in a case that the third conditional decision is true, that is, each step of the procedure (A) of FIG. 8, will be described. The SMF selects a UPF with which to establish a PDU session and transmits a session establishment request message to the selected UPF via the N4 interface (S906) to initiate the procedure (A) of FIG. 8.

Here, the SMF may select one or more UPFs based on each piece of identification information acquired based on reception of a PDU session establishment request message, subscriber information, network capability information, an operator policy, network status, user registration information, a context held by the SMF, and/or the like. In a case that a plurality of UPFs are selected, the SMF may transmit a session establishment request message to each UPF.

The UPF receives the session establishment request message from the SMF via the N4 interface (S906) and creates a context for a PDU session. The UPF transmits a session establishment response message to the SMF via the N4 interface based on reception of the session establishment request message and/or creation of the context for the PDU session (S908).

The SMF receives the session establishment response message from the UPF via the N4 interface as a response message to the session establishment request message (S908). The SMF may perform address allocation of an address to be allocated to the UE based on reception of the PDU session establishment request message, selection of the UPF, reception of the session establishment response message, and/or the like.

The SMF transmits a PDU session establishment accept message to the UE via the AMF based on reception of the PDU session establishment request message, selection of the UPF, reception of the session establishment response message, and/or completion of the address allocation of the address to be allocated to the UE (S910) (S912).

Specifically, in a case that the SMF has transmitted a PDU session establishment accept message to the AMF via the N11 interface (S910), the AMF that has received the PDU session establishment request message transmits a NAS message including the PDU session establishment accept message to the UE via the N1 interface (S912). The PDU session establishment accept message is a NAS message and may be a response message to the PDU session establishment request. The PDU session establishment accept message may also be incorporated into an MM message and transmitted and/or received via the N1 interface. The MM message may also be a NAS message or may be a downlink NAS transport (DL NAS TRANSPORT) message. Here, in a case that it is stated that a PDU session establishment accept message includes identification information and/or values, this may mean that an MM message including the PDU session establishment accept message includes the identification information and/or values. The PDU session establishment accept message may indicate that a PDU session establishment has been accepted.

Here, the SMF and/or the AMF may indicate that the request of the UE in the PDU session establishment request has been accepted by transmitting the PDU session establishment accept message.

The SMF and/or the AMF may also transmit a PDU session establishment accept message including one or more pieces of identification information out of at least the 51st to 52nd identification information. By transmitting such identification information, the SMF and/or the AMF may indicate that the network supports each function or may indicate that the request of the LTE has been accepted. In a case that a plurality of pieces of identification information are transmitted and/or received, two or more of the plurality of pieces of identification information may be configured as one or more pieces of identification information. Information indicating support for each function and information indicating a request to use each function may be transmitted and/or received with the same piece of identification information or may be transmitted and/or received as different pieces of identification information.

The SMF and/or the AMF may also incorporate one or more pieces of identification information out of the 51st to 52nd identification information into a PDU session establishment accept message in a case that the SMF and/or the AMF allows an onboarding service. The SMF and/or the AMF may also incorporate one or more pieces of identification information out of the 51st to 52nd identification information into a PDU session establishment accept message in a case that the SMF and/or the AMF allows establishment of a PDU session for an onboarding service. The SMF and/or the AMF may also incorporate one or more pieces of identification information out of the 51st to 52nd identification information into a PDU session establishment accept message in a case that the SMF and/or the AMF allows use of an onboarding service.

The SMF and/or the AMF may also incorporate one or more pieces of identification information out of the 51st to 52nd identification information into a PDU session establishment accept message in a case that a registration procedure for an onboarding service has been completed. The SMF and/or the AMF may also incorporate one or more pieces of identification information out of the 51st to 52nd identification information into a PDU session establishment accept message in a case that registration with which only an onboarding service is available has been completed.

The SMF and/or the AMF may also incorporate one or more pieces of identification information out of the 51st to 52nd identification information into a PDU session establishment accept message in a case that the UE has registered with a network for use in onboarding services. Here, the network for use in onboarding services may be an SNPN or a PLMN.

The SMF and/or the AMF may also incorporate one or more pieces of identification information out of the 51st to 52nd identification information into a PDU session establishment accept message in a case that it is necessary to provide SNPN information. The SMF and/or the AMF may also incorporate one or more pieces of identification information out of the 51st to 52nd identification information into a PDU session establishment accept message in a case that it is necessary to perform an onboarding service. The SMF and/or the AMF may also incorporate one or more pieces of identification information out of the 51st to 52nd identification information into a PDU session establishment accept message in a case that it is necessary to perform a procedure of providing SNPN information.

The SMF and/or the AMF may also incorporate one or more pieces of identification information out of the 51st to 52nd identification information into a PDU session establishment accept message in a case that the present procedure is a PDU session establishment procedure for an onboarding service.

The SMF and/or the AMF may also indicate establishment of an always-on PDU session as a PDU session for an onboarding service. In this case, the SMF and/or the AMF may incorporate the 51st identification information into a PDU session establishment accept message. More specifically, in this case, the SMF and/or the AMF may incorporate the 51st identification information indicating that it is necessary to establish an always-on PDU session into a PDU session establishment accept message. In other words, in this case, the SMF and/or the AMF may incorporate the 51st identification information indicating that a PDU session is established as an always-on PDU session into a PDU session establishment accept message.

The SMF and/or the AMF may also incorporate the 52nd identification information into a PDU session establishment accept message in a case that the SMF and/or the AMF allows establishment of a PDU session for an onboarding service. More specifically, in this case, the SMF and/or the AMF may incorporate the 51st identification information indicating that use of an onboarding service is allowed into a PDU session establishment accept message. In other words, in this case, the SMF and/or the AMF may incorporate the 51st identification information indicating that establishment of a PDU session for an onboarding service is allowed into a PDU session establishment accept message.

The SMF and/or the AMF may also incorporate one or more pieces of identification information out of the 51st to 52nd identification information into a PDU session establishment accept message to indicate, to the UE, content indicated by the identification information included in the PDU session establishment accept message. The SMF and/or the AMF may also incorporate one or more pieces of identification information out of the 51st to 52nd identification information into a PDU session establishment accept message to indicate, to the UE, content indicated by the identification information included in the PDU session establishment accept message.

The SMF and/or the AMF may also select or determine whether to incorporate one or more pieces of identification information out of the 51st to 52nd identification information into a PDU session establishment accept message based on each piece of received identification information, subscriber information, network capability information, an operator policy, network status, user registration information, a context held by the AMF, and/or the like.

The SMF and/or the AMF can also incorporate a selected and/or allowed PDU session ID into a PDU session establishment accept message. The SMF and/or the AMF can also specify a PDU session type indicating the type of a selected and/or allowed PDU session. One of IPv4, IPv6, IPv4v6, Ethernet, and Unstructured can be specified as the PDU session type as described above. The SMF and/or the AMF can also incorporate the SSC mode of a selected and/or allowed PDU session into a PDU session establishment accept message.

The SMF and/or the AMF can also incorporate an approved QoS rule group into a PDU session establishment accept message. The approved QoS rule group may include one or more QoS rules. The approved QoS rule group may include a plurality of QoS rules in a case that a plurality of QoS flows and/or user plane radio bearers are established in the present procedure. Conversely, the approved QoS rule group may include one QoS rule in a case that only one QoS flow and/or user plane radio bearer is established in the present procedure.

The SMF may also transmit a PDU session establishment accept message including information indicating that a part of the request of the UE has been rejected or may transmit information indicating that a part of the request of the UE has been rejected to indicate a reason why a part of the request of the UE has been rejected. The UE may also recognize a reason why a part of the request of the LTE has been rejected by receiving information indicating that a part of the request of the UE has been rejected. The reason for rejection may be information indicating that content indicated by the identification information received by the SMF is not allowed.

In a case that the SMF and/or the AMF has already established a PDU session for an onboarding service, the SMF and/or the AMF may release the PDU session. More specifically, in a case that the SMF and/or the AMF has already established a PDU session for an onboarding service, the SMF and/or the AMF may also perform local release of the PDU session. The SMF and/or the AMF may proceed with the present procedure in a case that the SMF and/or the AMF has already established a PDU session for an onboarding service.

The SMF and/or the AMF may also release a PDU session for an onboarding service in a case that the present procedure is a PDU session establishment procedure for an onboarding service. More specifically, the SMF and/or the AMF may also perform local release of a PDU session for an onboarding service in a case that the present procedure is a PDU session establishment procedure for an onboarding service. The SMF and/or the AMF may proceed with the present procedure in a case that the present procedure is a PDU session establishment procedure for an onboarding service.

The SMF and/or the AMF may also release an established PDU session in a case that a registration procedure for an onboarding service has been completed. The SMF and/or the AMF may also perform local release of an established PDU session in a case that a registration procedure for an onboarding service has been completed.

The SMF and/or the AMF may also release an established PDU session in a case that registration with which only an onboarding service is available has been completed. The SMF and/or the AMF may also perform local release of an established PDU session in a case that registration with which only an onboarding service is available has been completed.

The SMF and/or the AMF may also release an established PDU session in a case that registration with a network for use in onboarding services has been done. The SMF and/or the AMF may also perform local release of an established PDU session in a case that registration with a network for use in onboarding services has been done.

Here, the established PDU session may be a PDU session for an onboarding service. The established PDU session may also be an always-on PDU session.

The UE receives the PDU session establishment accept message from the SMF (S910) (S912). Specifically, after the PDU session establishment accept message is transmitted from the SMF to the AMF (S910), the UE receives a NAS message including the PDU session establishment accept message from the AMF via the N1 interface (S912). The UE may transmit a PDU session establishment complete message to the SMF via the AMF based on reception of the PDU session establishment accept message and/or the NAS message including the PDU session establishment accept message (S914) (S916). The UE can detect that the request of the UE in the PDU session establishment request has been accepted by receiving the PDU session establishment accept message.

Specifically, the UE transmits a PDU session establishment complete message to the AMF via the N1 interface (S914). In a case of receiving the PDU session establishment complete message from the UE, the AMF transmits the PDU session establishment complete message to the SMF via the N11 interface (S916).

The PDU session establishment complete message that the AMF transmits to the SMF may be a response message to the PDU session establishment accept message that has been transmitted from the SMF to the AMF in S910. The PDU session establishment complete message may be a NAS message. The PDU session establishment complete message may be any message indicating that a PDU session establishment procedure has been completed.

In a case of receiving the PDU session establishment complete message from the AMF via the N11 interface (S916), the SMF can make a second conditional decision. The second conditional decision is to determine the type of a message transmitted and/or received over the N4 interface. In a case that the second conditional decision is true, the SMF transmits a session change request message to the UPF via the N4 interface (S918) and then receives a session change accept message transmitted from the UPF as a response message to the session change request message (S920). In a case that the second conditional decision is false, the SMF transmits a session establishment request message to the UPF via the N4 interface (S918) and then receives a session change accept message transmitted from the UPF as a response message to the session establishment request message (S920).

The second conditional decision may be made based on whether a session over the N4 interface for a PDU session has been established. For example, the second conditional decision may be true in a case that a session over the N4 interface for a PDU session has been established and may be false in a case that a session over the N4 interface for a PDU session has not been established. The conditions for determining whether the second conditional decision is true or false may not be limited to the conditions described above.

Each apparatus completes the procedure (A) in the PDU session establishment procedure based on the transmission and/or reception of the PDU session establishment complete message, the transmission and/or reception of the session change response message, and/or the transmission and/or reception of the session establishment response message. In a case that the procedure (A) in the present procedure has been completed, the UE is in a state in which the PDU session for the DN is established.

Next, each step of procedure (B) in the PDU session establishment procedure will be described. The SMF transmits a PDU session establishment reject message to the UE via the AMF (S922) (S924). Specifically, the SMF transmits a PDU session establishment reject message to the AMF via the N11 interface (S922). In a case of receiving the PDU session establishment request message from the SMF via the N11 interface (S922), the AMF transmits the PDU session establishment reject message to the UE using the N1 interface (S924).

The PDU session establishment reject message may be a NAS message or may be an SM message transmitted from the SMF to the UE. The PDU session establishment reject message may be any message indicating that establishment of the PDU session has been rejected. The PDU session establishment reject message may also be incorporated into an MM message and transmitted and/or received via the N1 interface. The MM message may also be a NAS message or may be a downlink NAS transport (DL NAS TRANSPORT) message. Here, in a case that it is stated that a PDU session establishment reject message includes identification information and/or values, this may mean that an MM message including the PDU session establishment reject message includes the identification information and/or values.

Here, the SMF may also transmit a PDU session establishment reject message to indicate that the request of the UE in the PDU session establishment request has been rejected. The SMF may also transmit a PDU session establishment reject message including information indicating a reason for rejection or may transmit a reason for rejection to indicate the reason for rejection. The UE may also recognize a reason why the request of the UE has been rejected by receiving information indicating the reason why the request of the UE has been rejected. The reason for rejection may be information indicating that content indicated by the identification information received by the SMF is not allowed.

The SMF and/or the AMF may also incorporate one or more pieces of identification information and/or a back-off timer value into a PDU session establishment reject message or may transmit such identification information and/or back-off timer value to indicate that the request of the UE has been rejected or to indicate a reason why the request of the UE has been rejected.

The SMF and/or the AMF may also transmit a back-off timer value to indicate to the LTE to set a back-off timer value to the value to be transmitted or may indicate to the LTE to start a back-off timer set to the transmitted value.

In a case that the SMF and/or the AMF has already established a PDU session for an onboarding service, the SMF and/or the AMF may release the PDU session. More specifically, in a case that the SMF and/or the AMF has already established a PDU session for an onboarding service, the SMF and/or the AMF may also perform local release of the PDU session. The SMF and/or the AMF may also incorporate a cause value into a PDU session establishment reject message in a case that the SMF and/or the AMF has already established a PDU session for an onboarding service.

The SMF and/or the AMF may also release a PDU session for an onboarding service in a case that the present procedure is a PDU session establishment procedure for an onboarding service. More specifically, the SMF and/or the AMF may also perform local release of a PDU session for an onboarding service in a case that the present procedure is a PDU session establishment procedure for an onboarding service. The SMF and/or the AMF may also incorporate a cause value into a PDU session establishment reject message in a case that the present procedure is a PDU session establishment procedure for an onboarding service.

The SMF and/or the AMF may also release an established PDU session in a case that a registration procedure for an onboarding service has been completed. The SMF and/or the AMF may also perform local release of an established PDU session in a case that a registration procedure for an onboarding service has been completed.

The SMF and/or the AMF may also release an established PDU session in a case that registration with which only an onboarding service is available has been completed. The SMF and/or the AMF may also perform local release of an established PDU session in a case that registration with which only an onboarding service is available has been completed.

The SMF and/or the AMF may also release an established PDU session in a case that registration with a network for use in onboarding services has been done. The SMF and/or the AMF may also perform local release of an established PDU session in a case that registration with a network for use in onboarding services has been done.

Here, the established PDU session may be a PDU session for an onboarding service. The established PDU session may also be an always-on PDU session.

Here, the cause value may be a 5GSM cause value. The cause value may also be information indicating that it is not possible to establish a PDU session. The cause value may also be information indicating that establishment of a PDU session is prohibited.

The cause value may be information indicating that it is not possible to establish a PDU session for an onboarding service. The cause value may also be information indicating that establishment of a PDU session for an onboarding service is prohibited.

The SMF and/or the AMF may also select or determine whether to incorporate one or more pieces of identification information into a PDU session establishment reject message based on each piece of received identification information, subscriber information, network capability information, an operator policy, network status, user registration information, a context held by the AMF, and/or the like.

By receiving the PDU session establishment reject message, the UE can recognize that the request of the UE in the PDU session establishment request has been rejected and the content of various identification information included in the PDU session establishment reject message.

Each apparatus completes the PDU session establishment procedure based on completion of the procedure (A) or (B) of FIG. 8. Each apparatus may transition to a state in which a PDU session has been established based on completion of the procedure (A) of FIG. 8 or may recognize that the PDU session establishment procedure has been rejected or may transition to a state in which no PDU session has been established based on completion of the procedure (B) of FIG. 8. The UE can also communicate with the DN using the PDU session established by completing the procedure (A) of FIG. 8.

Based on completion of the PDU session establishment procedure, each apparatus may perform processing based on information transmitted and/or received in the PDU session establishment procedure. For example, each apparatus may recognize a reason why the request of the LTE has been rejected in a case that information indicating that a part of the request of the UEs has been rejected has been transmitted and/or received. Each apparatus may also perform the present procedure again or may perform a PDU session establishment procedure with another cell based on the reason why the request of the UE has been rejected.

Based on completion of the PDU session establishment procedure, the UE may store the identification information received together with the PDU session establishment accept message and/or the PDU session establishment reject message or may recognize the network's decision.

For example, the UE may recognize that an onboarding service is allowed in a case that the UE has received one or more pieces of identification information out of the 51st to 52nd identification information. The UE may also recognize that establishment of a PDU session for an onboarding service is allowed in a case that the UE has received one or more pieces of identification information out of the 51st to 52nd identification information. The UE may also recognize that use of an onboarding service is allowed in a case that the UE has received one or more pieces of identification information out of the 51st to 52nd identification information.

The UE may also recognize that the network can provide SNPN information using a PDU session in a case that the UE has received one or more pieces of identification information out of the 51st to 52nd identification information. The UE may also recognize that an onboarding service can be performed using a PDU session in a case that the UE has received one or more pieces of identification information out of the 51st to 52nd identification information. The UE may also recognize that a procedure of providing SNPN information using a PDU session can be performed in a case that the UE has received one or more pieces of identification information out of the 51st to 52nd identification information.

The UE may also establish a PDU session for an onboarding service in a case that the UE has received a PDU session accept message. The UE may also establish an always-on PDU session in a case that the UE has received a PDU session accept message. The UE may also establish an always-on PDU session as a PDU session for an onboarding service in a case that the UE has received a PDU session accept message.

The UE may also recognize that a PDU session to be established is a PDU session for an onboarding service in a case that the UE has received a PDU session accept message. The UE may also recognize that a PDU session to be established is an always-on PDU session in a case that the UE has received a PDU session accept message.

The UE may also establish a PDU session for an onboarding service in a case that the present procedure is a PDU session establishment procedure for an onboarding service. The UE may also establish an always-on PDU session in a case that the present procedure is a PDU session establishment procedure for an onboarding service. The UE may also establish an always-on PDU session as a PDU session for an onboarding service in a case that the present procedure is a PDU session establishment procedure for an onboarding service.

The UE may also recognize that a PDU session to be established is a PDU session for an onboarding service in a case that the present procedure is a PDU session establishment procedure for an onboarding service. The UE may also recognize that a PDU session to be established is an always-on PDU session in a case that the present procedure is a PDU session establishment procedure for an onboarding service.

The UE may also establish a PDU session for an onboarding service in a case that a registration procedure for an onboarding service has been completed. The UE may also establish an always-on PDU session in a case that a registration procedure for an onboarding service has been completed. The UE may also establish an always-on PDU session as a PDU session for an onboarding service in a case that a registration procedure for an onboarding service has been completed.

The UE may also recognize that a PDU session to be established is a PDU session for an onboarding service in a case that a registration procedure for an onboarding service has been completed. The UE may also recognize that a PDU session to be established is an always-on PDU session in a case that a registration procedure for an onboarding service has been completed.

The UE may also establish a PDU session for an onboarding service in a case that registration with which only an onboarding service is available has been completed. The UE may also establish an always-on PDU session in a case that registration with which only an onboarding service is available has been completed. The UE may also establish an always-on PDU session as a PDU session for an onboarding service in a case that registration with which only an onboarding service is available has been completed.

The UE may also recognize that a PDU session to be established is a PDU session for an onboarding service in a case that registration with which only an onboarding service is available has been completed. The UE may also recognize that a PDU session to be established is an always-on PDU session in a case that registration with which only an onboarding service is available has been completed.

The UE may also establish a PDU session for an onboarding service in a case that the UE has registered with a network for use in onboarding services. The UE may also establish an always-on PDU session in a case that the UE has registered with a network for use in onboarding services. The UE may also establish an always-on PDU session as a PDU session for an onboarding service in a case that the UE has registered with a network for use in onboarding services.

The UE may also recognize that a PDU session to be established is a PDU session for an onboarding service in a case that the UE has registered with a network for use in onboarding services. The UE may also recognize that a PDU session to be established is an always-on PDU session in a case that the UE has registered with a network for use in onboarding services.

The UE may also establish a PDU session for an onboarding service in a case that the UE has received one or more pieces of identification information out of the 51st to 52nd identification information. The UE may also establish an always-on PDU session in a case that the UE has received one or more pieces of identification information out of the 51st to 52nd identification information. The UE may also establish an always-on PDU session as a PDU session for an onboarding service in a case that the UE has received one or more pieces of identification information out of the 51st to 52nd identification information.

The UE may also recognize that a PDU session to be established is a PDU session for an onboarding service in a case that the UE has received one or more pieces of identification information out of the 51st to 52nd identification information. The UE may also recognize that a PDU session to be established is an always-on PDU session in a case that the UE has received one or more pieces of identification information out of the 51st to 52nd identification information.

The UE may also establish an always-on PDU session in a case that the UE has received the 51st identification information. More specifically, the UE may establish an always-on PDU session in a case that the UE has received the 51st identification information indicating that it is necessary to establish an always-on PDU session. The UE may also establish an always-on PDU session in a case that the UE has received the 51st identification information indicating that a PDU session is established as an always-on PDU session.

The UE may also recognize that a PDU session to be established is an always-on PDU session in a case that the UE has received the 51st identification information. More specifically, the UE may recognize that a PDU session to be established is an always-on PDU session in a case that the UE has received the 51st identification information indicating that it is necessary to establish an always-on PDU session. The UE may also recognize that a PDU session to be established is an always-on PDU session in a case that the UE has received the 51st identification information indicating that a PDU session is established as an always-on PDU session.

The UE may also establish a PDU session for an onboarding service in a case that the UE has received the 52nd identification information. More specifically, the UE may establish a PDU session for an onboarding service in a case that the UE has received the 51st identification information indicating that use of an onboarding service is allowed. The UE may also establish a PDU session for an onboarding service in a case that the UE has received the 51st identification information indicating that establishment of a PDU session for an onboarding service is allowed.

The UE may also recognize that a PDU session to be established is a PDU session for an onboarding service in a case that the UE has received the 52nd identification information. More specifically, the UE may recognize that a PDU session to be established is a PDU session for an onboarding service in a case that the UE has received the 51st identification information indicating that use of an onboarding service is allowed. The UE may also recognize that a PDU session to be established is a PDU session for an onboarding service in a case that the UE has received the 51st identification information indicating that establishment of a PDU session for an onboarding service is allowed.

In a case that the UE has received one or more pieces of identification information out of the 51st to 52nd identification information, the UE may recognize content indicated by the received identification information. In a case that the UE has received one or more pieces of identification information out of the 51st to 52nd identification information, the UE may also recognize that content indicated by the identification information included in a PDU session establishment accept message is allowed.

In a case that the UE has received a back-off timer value, the UE may set a back-off timer to the back-off timer value or may initiate a back-off timer set to the received back-off timer value.

The UE may also recognize that establishment of a new PDU session is prohibited based on completion of a PDU session establishment procedure. The UE may also be configured such that establishment of a new PDU session is prohibited based on completion of a PDU session establishment procedure. The UE may also be configured such that transmission of a PDU session establishment request message is prohibited based on completion of a PDU session establishment procedure.

In other words, the UE may be configured such that a new PDU session establishment procedure is not initiated based on completion of a PDU session establishment procedure. The UE may also be configured such that a PDU session establishment request message is not transmitted based on completion of a PDU session establishment procedure.

Specifically, the UE may recognize that establishment of a new PDU session is prohibited in a case that the UE has received a PDU session establishment accept message. The UE may also be configured such that establishment of a new PDU session is prohibited in a case that the UE has received a PDU session establishment accept message. The UE may also be configured such that transmission of a PDU session establishment request message is prohibited in a case that the UE has received a PDU session establishment accept message.

In other words, the UE may be configured such that a new PDU session establishment procedure is not initiated in a case that the UE has received a PDU session establishment accept message. The UE may also be configured such that a PDU session establishment request message is not transmitted in a case that the UE has received a PDU session establishment accept message.

The UE may also recognize that establishment of a new PDU session is prohibited in a case that the present procedure is a PDU session establishment procedure for an onboarding service. The UE may also be configured such that establishment of a new PDU session is prohibited in a case that the present procedure is a PDU session establishment procedure for an onboarding service. The UE may also be configured such that transmission of a PDU session establishment request message is prohibited in a case that the present procedure is a PDU session establishment procedure for an onboarding service.

In other words, the UE may be configured such that a new PDU session establishment procedure is not initiated in a case that the present procedure is a PDU session establishment procedure for an onboarding service. The UE may also be configured such that a PDU session establishment request message is not transmitted in a case that the present procedure is a PDU session establishment procedure for an onboarding service.

A period during which establishment of a new PDU session is prohibited may be a period managed by a timer. In other words, the UE may be configured such that establishment of a new PDU session is not prohibited based on expiration of a timer.

The period during which establishment of a new PDU session is prohibited may also be until a new registration and/or deregistration procedure is performed. In other words, the UE may be configured such that establishment of a new PDU session is not prohibited based on performing of a new registration procedure and/or deregistration procedure.

The period during which establishment of a new PDU session is prohibited may also be until power is turned off and/or a USIM is removed. In other words, the UE may be configured such that establishment of a new PDU session is not prohibited based on power off and/or removal of a USIM.

An area in which establishment of a new PDU session is prohibited may be within the same network. In other words, the UE may be configured such that establishment of a new PDU session is not prohibited based on moving to another network. More specifically, the UE may be configured such that establishment of a new PDU sessions is not prohibited based on moving to another PLMN or another SNPN.

Here, a new PDU session may refer to a PDU session for an onboarding service that is newly established. In other words, a PDU session established by a new PDU session establishment procedure may be a PDU session for an onboarding service.

In a case that it is stated that establishment of a new PDU session is prohibited, establishment of a new PDU session for an onboarding service may be prohibited. In other words, being configured such that a new PDU session establishment procedure is not initiated may indicate being configured such that a PDU session establishment procedure for newly establishing a PDU session for an onboarding service is not initiated.

In a case that the UE has performed the present procedure in a state in which a PDU session for an onboarding service has already been established, the UE may release the PDU session. In other words, in a case that the UE has performed a PDU session establishment procedure for an onboarding service in a state in which a PDU session for an onboarding service has already been established, the UE may release the PDU session.

More specifically, in a case that the UE has performed the present procedure in a state in which a PDU session for an onboarding service has already been established, the UE may perform local release of the PDU session. In other words, in a case that the UE has performed a PDU session establishment procedure for an onboarding service in a state in which a PDU session for an onboarding service has already been established, the UE may perform local release of the PDU session.

The UE may also release a PDU session for an onboarding service in a case that the present procedure is a PDU session establishment procedure for an onboarding service. In other words, the UE may release an established PDU session in a case that the present procedure is a PDU session establishment procedure for an onboarding service.

More specifically, the UE may perform local release of a PDU session for an onboarding service in a case that the present procedure is a PDU session establishment procedure for an onboarding service. In other words, the UE may perform local release of an established PDU session in a case that the present procedure is a PDU session establishment procedure for an onboarding service.

In a case that the UE has performed a new PDU session establishment procedure in a state in which a PDU session for an onboarding service has already been established, the UE may release the PDU session. In other words, in a case that the UE has performed a new PDU session establishment procedure for an onboarding service in a state in which a PDU session for an onboarding service has already been established, the UE may release the PDU session.

More specifically, in a case that the UE has performed a new PDU session establishment procedure in a state in which a PDU session for an onboarding service has already been established, the UE may perform local release of the PDU session. In other words, in a case that the UE has performed a new PDU session establishment procedure for an onboarding service in a state in which a PDU session for an onboarding service has already been established, the UE may perform local release of the PDU session.

The UE may also release an established PDU session in a case that the UE has performed a new PDU session establishment procedure in a state in which a registration procedure for an onboarding service is completed. The UE may also perform local release of an established PDU session in a case that the UE has performed a new PDU session establishment procedure in a state in which a registration procedure for an onboarding service is completed.

The UE may also release an established PDU session in a case that the UE has performed a new PDU session establishment procedure in a state in which registration with which only an onboarding service is available is completed. The UE may also perform local release of an established PDU session in a case that the UE has performed a new PDU session establishment procedure in a state in which registration with which only an onboarding service is available is completed.

The UE may also release an established PDU session in a case that the UE has performed a new PDU session establishment procedure in a state in which the UE has registered with a network for use in onboarding services. The UE may also perform local release of an established PDU session in a case that the UE has performed a new PDU session establishment procedure in a state in which the UE has registered with a network for use in onboarding services.

Here, the established PDU session may be a PDU session for an onboarding service. The established PDU session may also be an always-on PDU session.

### 3.2.3. Deregistration Procedure

Next, a deregistration procedure will be described. Hereinafter, a deregistration procedure is also referred to as the present procedure. A deregistration procedure is a procedure for deregistering the UE, which is a UE or network-initiated procedure that the UE or the network initiates. A deregistration procedure may also be a procedure for changing the state of the UE to a deregistered state.

The UE and the network can perform the present procedure at any time as long as the UE has registered with the network. In other words, the UE and the network can initiate the present procedure at any time as long as the UE is in a registered state. Each of the apparatuses (especially, the UE and the AMF) can transition to a deregistered state based on completion of a registration procedure.

An apparatus in the core network such as the AMF may initiate the present procedure based on update of the network configuration and/or update of the operator policy. A trigger for the present procedure may be detection of the mobility of the UE or may be detection of a state change of the UE, the access network, and/or the core network or may be a state change of a network slice. A trigger for the present procedure may also be reception of a request from the DN and/or the application server of the DN, a change in the network configuration, or a change in the operator policy. A trigger for the present procedure may also be expiration of a running timer. A trigger for the apparatus in the core network to initiate the present procedure is not limited to these. The present procedure may be performed at any time as long as each apparatus is in a state in which it has established a 5GMM context and/or each apparatus is in a state in which it is in a 5GMM connected mode.

A trigger for the present procedure may also be completion of a procedure of providing SNPN information. In other words, a trigger for the present procedure may be completion of providing SNPN information. A trigger for the present procedure may also be completion of an onboarding service.

A trigger for the present procedure may also be expiration of a timer. Here, the timer may be a timer managed by the UE and/or the network. More specifically, the timer may be a timer that indicates a validity period of registration with which only an onboarding service is available. In other words, the timer may be a timer that indicates a time limit within which a procedure of providing SNPN information can be performed.

During the present procedure, each apparatus may transmit and/or receive a message including identification information indicating a reason for deregistration of the UE and/or identification information indicating that network reselection is necessary. Each apparatus may also release the context of the UE or initiate a behavior indicated by the network based on completion of the present procedure.

The UE may recognize a reason for deregistration of the UE based on control information transmitted and/or received through the present procedure. The UE may also release the context of the UE or initiate network reselection upon recognizing a reason for deregistration of the UE. In other words, an apparatus in the core network may allow the UE to recognize a reason for deregistration of the UE by initiating the present procedure and further transmitting a control message and control information of the present procedure to the UE. An apparatus in the core network may also allow the UE to release the context of the UE or to initiate network reselection by allowing the UE to recognize a reason for deregistration of the UE.

The deregistration procedure includes a network-initiated deregistration procedure and a UE-initiated deregistration procedure. The network-initiated deregistration procedure and the UE-initiated deregistration procedure will be described below.

### 3.2.3.1. Network-Initiated Deregistration Procedure

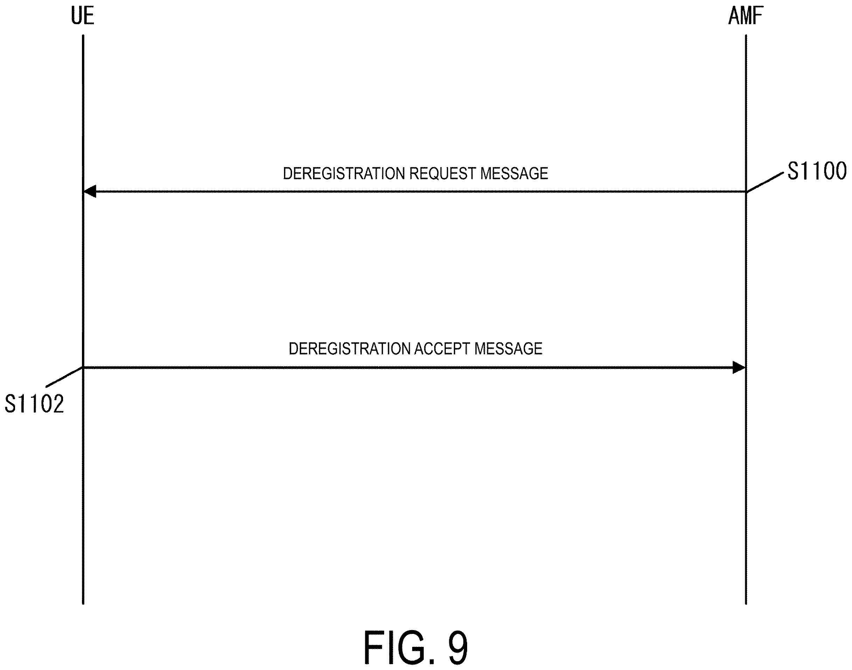

First, the network-initiated deregistration procedure will be described using FIG. 9. Hereinafter, the network-initiated deregistration procedure is also referred to as the present procedure. The network-initiated deregistration procedure is a network-initiated procedure that the network initiates in the deregistration procedure. Each step of the present procedure will be described below.

First, the AMF transmits a deregistration request message to the UE via the 5G AN (or the gNB) (S 1100) to initiate the deregistration procedure.

The AMF may also transmit a registration accept message including at least the 31st identification information. The AMF may also transmit such identification information to indicate a reason for deregistration of the UE or to indicate that network reselection is necessary. Two or more of such pieces of identification information may be configured as one or more pieces of identification information. Information indicating support for each function and information indicating a request to use each function may be transmitted and/or received with the same piece of identification information or may be transmitted and/or received as different pieces of identification information.

The AMF may also incorporate the 31st identification information into a deregistration request message in a case that an onboarding service has been completed. The AMF may also incorporate the 31st identification information into a deregistration request message in a case that a procedure of providing SNPN information has been completed.

The AMF may also incorporate the 31st identification information into a deregistration request message in a case that an onboarding service has not been completed. The AMF may also incorporate the 31st identification information into a deregistration request message in a case that a procedure of providing SNPN information has not been completed.

The AMF may also incorporate the 31st identification information into a deregistration request message in a case that an onboarding service has succeeded. The AMF may also incorporate the 31st identification information into a deregistration request message in a case that a procedure of providing SNPN information has succeeded. The AMF may also incorporate the 31st identification information into a deregistration request message in a case that provision of SNPN information has succeeded.

The AMF may also incorporate the 31st identification information into a deregistration request message in a case that an onboarding service has failed. The AMF may also incorporate the 31st identification information into a deregistration request message in a case that a procedure of providing SNPN information has failed. The AMF may also incorporate the 31st identification information into a deregistration request message in a case that provision of SNPN information has failed.

The AMF may also incorporate the 31st identification information into a deregistration request message in a case that a timer managed by the LTE and/or the network has expired. The AMF may also incorporate the 31st identification information into a deregistration request message in a case that registration with which only an onboarding service is available is no longer valid.

The AMF may also incorporate the 31st identification information into a deregistration request message in a case that it is not possible to provide SNPN information. The AMF may also incorporate the 31st identification information into a deregistration request message in a case that it is not possible to perform an onboarding service. The AMF may also incorporate the 31st identification information into a deregistration request message in a case that it is not possible to perform a procedure of providing SNPN information.

The AMF may also incorporate the 31st identification information indicating that an onboarding service has been completed into a deregistration request message in a case that an onboarding service has been completed. The AMF may also incorporate the 31st identification information indicating that a procedure of providing SNPN information has been completed into a deregistration request message in a case that a procedure of providing SNPN information has been completed.

The AMF may also incorporate the 31st identification information indicating that an onboarding service has not been completed into a deregistration request message in a case that an onboarding service has not been completed. The AMF may also incorporate the 31st identification information indicating that a procedure of providing SNPN information has not been completed into a deregistration request message in a case that a procedure of providing SNPN information has not been completed.

The AMF may also incorporate the 31st identification information indicating that an onboarding service has succeeded into a deregistration request message in a case that an onboarding service has succeeded. The AMF may also incorporate the 31st identification information indicating that a procedure of providing SNPN information has succeeded into a deregistration request message in a case that a procedure of providing SNPN information has succeeded. The AMF may also incorporate the 31st identification information indicating that provision of SNPN information has succeeded into a deregistration request message in a case that provision of SNPN information has succeeded.

The AMF may also incorporate the 31st identification information indicating that an onboarding service has failed into a deregistration request message in a case that an onboarding service has failed. The AMF may also incorporate the 31st identification information indicating that a procedure of providing SNPN information has failed into a deregistration request message in a case that a procedure of providing SNPN information has failed. The AMF may also incorporate the 31st identification information indicating that provision of SNPN information has failed into a deregistration request message in a case that provision of SNPN information has failed.

The AMF may also incorporate the 31st identification information indicating that a timer has expired into a deregistration request message in a case that a timer managed by the UE and/or the network has expired. The AMF may also incorporate the 31st identification information indicating that registration with which only an onboarding service is available is no longer valid into a deregistration request message in a case that registration with which only an onboarding service is available is no longer valid.

The AMF may also incorporate the 31st identification information into a deregistration request message to indicate, to the UE, content indicated by the identification information included in the deregistration request message. The AMF may also incorporate the 31st identification information into a deregistration request message not to allow the UE content indicated by the identification information included in the deregistration request message.

The AMF may select or determine whether to incorporate the 31st identification information into a deregistration request message based on each piece of received identification information, subscriber information, network capability information, an operator policy, network status, user registration information, a context held by the AMF, and/or the like.

The AMF may also indicate a request to release the context of the UE by transmitting a deregistration request message based on each piece of received identification information, subscriber information, network capability information, an operator policy, network status, user registration information, a context held by the AMF, and/or the like.

The UE receives the deregistration request message via the 5G AN (the gNB) (S1100). The UE may recognize a reason for deregistration of the UE or may perform network reselection based on the deregistration request message and/or identification information included in the deregistration request message. Based on the identification information included in the deregistration request message, the UE may also transmit a deregistration accept message to the AMF via the 5G AN (the gNB) as a response message to the deregistration request message (S1102).

In a case that the UE has transmitted a deregistration accept message, the AMF receives the deregistration accept message via the 5G AN (the gNB) (S1102). Each apparatus completes the present procedure based on transmission and/or reception of the deregistration request message and/or the deregistration accept message.

Each processing step shown above that the UE performs based on reception of each piece of identification information may be performed during the present procedure or after the present procedure is completed or may be performed based on completion of the present procedure after the present procedure is completed.

Each apparatus may also perform processing based on information transmitted and/or received in the present procedure, based on completion of the present procedure. For example, each apparatus may release the context of the UE in a case that update information for configuration information has been transmitted and/or received. The UE may also initiate network reselection and/or a registration procedure based on completion of the present procedure in a case that information indicating that it is necessary to perform network reselection and/or a registration procedure has been transmitted and/or received.

The UE may also store identification information received together with a deregistration request message or recognize the network's decision based on completion of the present procedure.

For example, the UE may recognize that an onboarding service has been completed in a case that the UE has received the 31st identification information. The UE may also recognize that a procedure of providing SNPN information has been completed in a case that the UE has received the 31st identification information.

The UE may also recognize that an onboarding service has not been completed in a case that the UE has received the 31st identification information. The UE may also recognize that a procedure of providing SNPN information has not been completed in a case that the UE has received the 31st identification information.

The UE may also determine whether an onboarding service has been completed in a case that the UE has received the 31st identification information. The UE may also determine whether a procedure of providing SNPN information has been completed in a case that the UE has received the 31st identification information.

The UE may also recognize that an onboarding service has succeeded in a case that the UE has received the 31st identification information. The UE may also recognize that a procedure of providing SNPN information has succeeded in a case that the UE has received the 31st identification information. The UE may also recognize that provision and/or acquisition of SNPN information has succeeded in a case that the UE has received the 31st identification information.

The UE may also recognize that an onboarding service has failed in a case that the UE has received the 31st identification information. The UE may also recognize that a procedure of providing SNPN information has failed in a case that the UE has received the 31st identification information. The UE may also recognize that provision and/or acquisition of SNPN information has failed in a case that the UE has received the 31st identification information.

The UE may also determine whether an onboarding service has succeeded or failed in a case that the UE has received the 31st identification information. The UE may also determine whether a procedure of providing SNPN information has succeeded or failed in a case that the UE has received the 31st identification information. The UE may also determine whether provision and/or acquisition of SNPN information has succeeded or failed in a case that the UE has received the 31st identification information.

The UE may also recognize that a timer managed by the UE and/or the network has expired in a case that the UE has received the 31st identification information. The UE may recognize that registration with which only an onboarding service is available is no longer valid in a case that the UE has received the 31st identification information.

The UE may also recognize that it is not possible to provide and/or acquire SNPN information in a case that the UE has received the 31st identification information. The UE may also recognize that it is not possible to perform an onboarding service in a case that the UE has received the 31st identification information. The UE may also recognize that it is not possible to perform a procedure of providing SNPN information in a case that the UE has received the 31st identification information.

The UE may also recognize that an onboarding service has been completed in a case that the UE has received the 31st identification information indicating that an onboarding service has been completed. The UE may also recognize that a procedure of providing SNPN information has been completed in a case that the UE has received the 31st identification information indicating that a procedure of providing SNPN information has been completed.

The UE may also recognize that an onboarding service has not been completed in a case that the UE has received the 31st identification information indicating that an onboarding service has not been completed. The UE may also recognize that a procedure of providing SNPN information has not been completed in a case that the UE has received the 31st identification information indicating that a procedure of providing SNPN information has not been completed.

The UE may also recognize that an onboarding service has succeeded in a case that the UE has received the 31st identification information indicating that an onboarding service has succeeded. The UE may also recognize that a procedure of providing SNPN information has succeeded in a case that the UE has received the 31st identification information indicating that a procedure of providing SNPN information has succeeded. The UE may also recognize that provision and/or acquisition of SNPN information has succeeded in a case that the UE has received the 31st identification information indicating that provision of SNPN information has succeeded.

The UE may also recognize that an onboarding service has failed in a case that the UE has received the 31st identification information indicating that an onboarding service has failed. The UE may also recognize that a procedure of providing SNPN information has failed in a case that the UE has received the 31st identification information indicating that a procedure of providing SNPN information has failed. The UE may also recognize that provision and/or acquisition of SNPN information has failed in a case that the UE has received the 31st identification information indicating that provision of SNPN information has failed.

The UE may also recognize that a timer managed by the UE and/or the network has expired in a case that the UE has received the 31st identification information indicating that a timer has expired. The UE may also recognize that registration with which only an onboarding service is available is no longer valid in a case that the UE has received the 31st identification information indicating that registration with which only an onboarding service is available is no longer valid.

In a case that the UE has received the 31st identification information, the UE may also recognize content indicated by the received identification information. In a case that the UE has received the 31st identification information, the UE may also recognize that content indicated by the received identification information is not allowed.

The UE may also release or delete a first list in a case that the UE has received the 31st identification information. The UE may also remove network identification information from a first list in a case that the UE has received the 31st identification information.

More specifically, the UE may release or delete a first list in a case that the UE has received the 31st identification information indicating that an onboarding service has been completed. The UE may also release or delete a first list in a case that the UE has received the 31st identification information indicating that a procedure of providing SNPN information has been completed.

The UE may also release or delete a first list in a case that the UE has received the 31st identification information indicating that an onboarding service has succeeded. The UE may also release or delete a first list in a case that the UE has received the 31st identification information indicating that a procedure of providing SNPN information has succeeded. The UE may also release or delete a first list in a case that the UE has received the 31st identification information indicating that provision of SNPN information has succeeded.

The UE may also release or delete a first list in a case that an onboarding service has been completed. The UE may also release or delete a first list in a case that a procedure of providing SNPN information has been completed. The UE may also release or delete a first list in a case that acquisition of SNPN information has been completed.

The UE may also release or delete a first list in a case that an onboarding service has succeeded. The UE may also release or delete a first list in a case that a procedure of providing SNPN information has succeeded. The UE may also release or delete a first list in a case that acquisition of SNPN information has succeeded.

Here, the network identification information may be information identifying a network in which the UE is currently located. More specifically, in a case that the UE is located in a PLMN, the network identification information may be information identifying the PLMN in which the UE is currently located. Conversely, in a case that the UE is located in an SNPN, the network identification information may be information identifying the SNPN in which the UE is currently located.

For example, in a case that the present procedure is performed in a first network, the network identification information may be information identifying the first network. More specifically, in a case that the present procedure is performed in a first PLMN, the network identification information may be information identifying the first PLMN. In a case that the present procedure is performed in a first SNPN, the network identification information may be information identifying the first SNPN.

The UE may also perform second network selection in a case that the UE has received the 31st identification information. The UE may also perform second network selection and select a target SNPN in a case that the UE has received the 31st identification information. The UE may also initiate a registration procedure with a new selected network after completing the performing of the second network selection.

More specifically, the UE may perform second network selection in a case that the UE has received the 31st identification information indicating that an onboarding service has been completed. The UE may also perform second network selection in a case that the UE has received the 31st identification information indicating that a procedure of providing SNPN information has been completed.

The UE may also perform second network selection in a case that the UE has received the 31st identification information indicating that an onboarding service has succeeded. The UE may also perform second network selection in a case that the UE has received the 31st identification information indicating that a procedure of providing SNPN information has succeeded. The UE may also perform second network selection in a case that the UE has received the 31st identification information indicating that provision of SNPN information has succeeded.

Conversely, the UE may add network identification information to a first list in a case that the UE has received the 31st identification information. The UE may also create a first list and add network identification information to the created first list in a case that the UE has received the 31st identification information.

More specifically, the UE may add network identification information to a first list in a case that the UE has received the 31st identification information indicating that an onboarding service has not been completed. The UE may also add network identification information to a first list in a case that the UE has received the 31st identification information indicating that a procedure of providing SNPN information has not been completed.

The UE may also add network identification information to a first list in a case that the UE has received the 31st identification information indicating that an onboarding service has failed. The UE may also add network identification information to a first list in a case that the UE has received the 31st identification information indicating that a procedure of providing SNPN information has failed. The UE may also add network identification information to a first list in a case that the UE has received the 31st identification information indicating that provision of SNPN information has failed.

The UE may also add network identification information to a first list in a case that the UE has received the 31st identification information indicating that a timer has expired. The UE may also add network identification information to a first list in a case that the UE has received the 31st identification information indicating that registration with which only an onboarding service is available is no longer valid.

The UE may also add network identification information to a first list in a case that an onboarding service has not been completed. The UE may also add network identification information to a first list in a case that a procedure of providing SNPN information has not been completed. The UE may also add network identification information to a first list in a case that acquisition of SNPN information has not been completed.

The UE may also add network identification information to a first list in a case that an onboarding service has failed. The UE may also add network identification information to a first list in a case that a procedure of providing SNPN information has failed. The UE may also add network identification information to a first list in a case that acquisition of SNPN information has failed.

Here, the network identification information may be information identifying a network in which the UE is currently located. More specifically, in a case that the UE is located in a PLMN, the network identification information may be information identifying the PLMN in which the UE is currently located. Conversely, in a case that the UE is located in an SNPN, the network identification information may be information identifying the SNPN in which the UE is currently located.

For example, in a case that the present procedure is performed in a first network, the network identification information may be information identifying the first network. More specifically, in a case that the present procedure is performed in a first PLMN, the network identification information may be information identifying the first PLMN. In a case that the present procedure is performed in a first SNPN, the network identification information may be information identifying the first SNPN.

The UE may also perform the first network selection again in a case that the UE has received the 31 st identification information. The UE may also perform the first network selection again and select a different network than a network in which the UE is currently located in a case that the UE has received the 31st identification information. The UE may also initiate a registration procedure with a new selected network after completing the performing of the first network selection again.

More specifically, the UE may perform the first network selection again in a case that the UE has received the 31st identification information indicating that an onboarding service has not been completed. The UE may also perform the first network selection again in a case that the UE has received the 31st identification information indicating that a procedure of providing SNPN information has not been completed.

The UE may also perform the first network selection again in a case that the UE has received the 31st identification information indicating that an onboarding service has failed. The UE may also perform the first network selection again in a case that the UE has received the 31st identification information indicating that a procedure of providing SNPN information has failed. The UE may also perform the first network selection again in a case that the UE has received the 31st identification information indicating that provision of SNPN information has failed.

The UE may also perform the first network selection again in a case that the UE has received the 31st identification information indicating that a timer has expired. The UE may also perform the first network selection again in a case that the UE has received the 31st identification information indicating that registration with which only an onboarding service is available is no longer valid.

The UE may also start a timer in a case that the UE has received the 31st identification information. Here, the timer may be a timer that indicates a time limit within which a first list is managed. In other words, the UE may release or delete a first list based on expiration of the timer.

The timer may also be a timer that indicates a time limit within which a registration procedure is prohibited. In other words, the UE may initiate a registration procedure based on expiration of the timer.

A behavior to be performed in a case that each piece of identification information has been received may be performed based on the received identification information. For example, a behavior to be performed in a case that the 31st identification information has been received may be performed based on the received 31st identification information.

In the above procedure, an apparatus in the core network can indicate to the UE to release configuration information that the UE has already applied or indicate to the UE to stop or change a function that the UE is performing by transmitting and/or receiving a deregistration request message.

### 3.2.3.2. UE-Initiated Deregistration Procedure

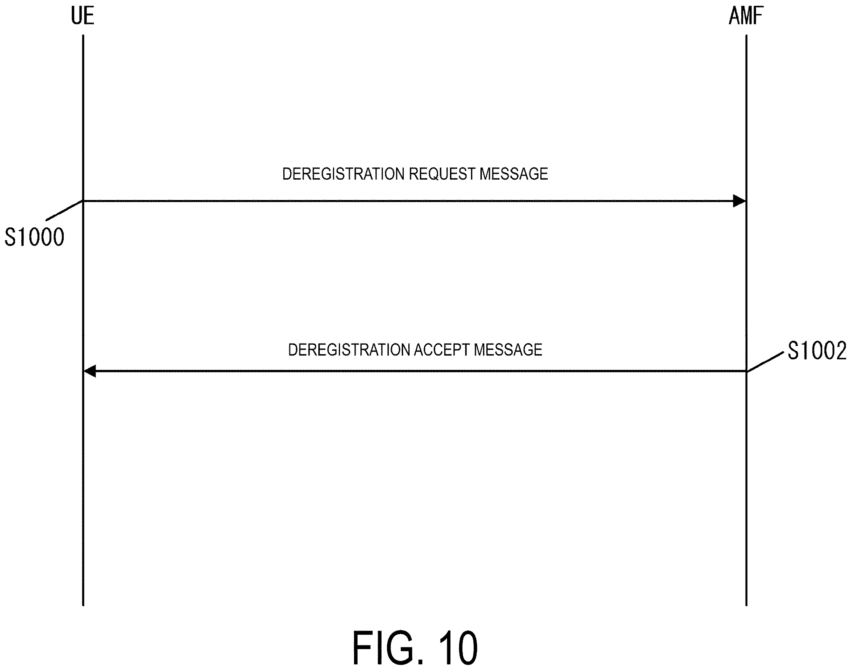

First, the UE-initiated deregistration procedure will be described using FIG. 10. Hereinafter, the UE-initiated deregistration procedure is also referred to as the present procedure. The UE-initiated deregistration procedure is a UE-initiated procedure that the UE initiates in the deregistration procedure. Each step of the present procedure will be described below.

First, the UE transmits a deregistration request message to the AMF via the 5G AN (or the gNB) (S1000) to initiate the deregistration procedure.

The UE may also transmit a registration accept message including at least the 31st identification information. The UE may also transmit such identification information to indicate a reason for deregistration of the UE or to indicate that network reselection is necessary. Two or more of such pieces of identification information may be configured as one or more pieces of identification information. Information indicating support for each function and information indicating a request to use each function may be transmitted and/or received with the same piece of identification information or may be transmitted and/or received as different pieces of identification information.

The UE may also incorporate the 31st identification information into a deregistration request message in a case that an onboarding service has been completed. The UE may also incorporate the 31st identification information into a deregistration request message in a case that a procedure of providing SNPN information has been completed.

The UE may also incorporate the 31st identification information into a deregistration request message in a case that an onboarding service has not been completed. The UE may also incorporate the 31st identification information into a deregistration request message in a case that a procedure of providing SNPN information has not been completed.

The UE may also incorporate the 31st identification information into a deregistration request message in a case that an onboarding service has succeeded. The UE may also incorporate the 31st identification information into a deregistration request message in a case that a procedure of providing SNPN information has succeeded. The UE may also incorporate the 31st identification information into a deregistration request message in a case that provision and/or acquisition of SNPN information has succeeded.

The UE may also incorporate the 31st identification information into a deregistration request message in a case that an onboarding service has failed. The UE may also incorporate the 31st identification information into a deregistration request message in a case that a procedure of providing SNPN information has failed. The UE may also incorporate the 31st identification information into a deregistration request message in a case that provision and/or acquisition of SNPN information has failed.

The UE may also incorporate the 31st identification information into a deregistration request message in a case that a timer managed by the UE and/or the network has expired. The UE may also incorporate the 31st identification information into a deregistration request message in a case that registration with which only an onboarding service is available is no longer valid.

The UE may also incorporate the 31st identification information into a deregistration request message in a case that it is not possible to provide and/or acquire SNPN information. The UE may also incorporate the 31st identification information into a deregistration request message in a case that it is not possible to perform an onboarding service. The UE may also incorporate the 31st identification information into a deregistration request message in a case that it is not possible to perform a procedure of providing SNPN information.

The UE may also incorporate the 31st identification information indicating that an onboarding service has been completed into a deregistration request message in a case that an onboarding service has been completed. The UE may also incorporate the 31st identification information indicating that a procedure of providing SNPN information has been completed into a deregistration request message in a case that a procedure of providing SNPN information has been completed.

The UE may also incorporate the 31st identification information indicating that an onboarding service has not been completed into a deregistration request message in a case that an onboarding service has not been completed. The UE may also incorporate the 31st identification information indicating that a procedure of providing SNPN information has not been completed into a deregistration request message in a case that a procedure of providing SNPN information has not been completed.

The UE may also incorporate the 31st identification information indicating that an onboarding service has succeeded into a deregistration request message in a case that an onboarding service has succeeded. The UE may also incorporate the 31st identification information indicating that a procedure of providing SNPN information has succeeded into a deregistration request message in a case that a procedure of providing SNPN information has succeeded. The UE may also incorporate the 31st identification information indicating that provision of SNPN information has succeeded into a deregistration request message in a case that provision and/or acquisition of SNPN information has succeeded.

The UE may also incorporate the 31st identification information indicating that an onboarding service has failed into a deregistration request message in a case that an onboarding service has failed. The UE may also incorporate the 31st identification information indicating that a procedure of providing SNPN information has failed into a deregistration request message in a case that a procedure of providing SNPN information has failed. The UE may also incorporate the 31st identification information indicating that provision of SNPN information has failed into a deregistration request message in a case that provision and/or acquisition of SNPN information has failed.

The LTE may also incorporate the 31st identification information indicating that a timer has expired into a deregistration request message in a case that a timer managed by the LTE and/or the network has expired. The LTE may also incorporate the 31st identification information indicating that registration with which only an onboarding service is available is no longer valid into a deregistration request message in a case that registration with which only an onboarding service is available is no longer valid.

The LTE may also incorporate the 31st identification information into a deregistration request message to indicate, to the AMF, content indicated by the identification information included in the deregistration request message. The UE may also incorporate the 31st identification information into a deregistration request message not to allow the AMF content indicated by the identification information included in the deregistration request message.

The LTE may select or determine whether to incorporate the 31st identification information into a deregistration request message based on each piece of received identification information, subscriber information, network capability information, an operator policy, network status, user registration information, a context held by the UE, and/or the like.

The UE may also indicate a request to release the context of the UE by transmitting a deregistration request message based on each piece of received identification information, subscriber information, LTE capability information, LTE status, user registration information, a context held by the UE, and/or the like.

The AMF receives the deregistration request message via the 5G AN (the gNB) (S 1000). The AMF may recognize a reason for deregistration of the UE based on the deregistration request message and/or identification information included in the deregistration request message. Based on the identification information included in the deregistration request message, the AMF may also transmit a deregistration accept message to the UE via the 5G AN (the gNB) as a response message to the deregistration request message (S1002).

In a case that the AMF has transmitted a deregistration accept message, the UE receives the deregistration accept message via the 5G AN (the gNB) (S1002). Each apparatus completes the present procedure based on transmission and/or reception of the deregistration request message and/or the deregistration accept message.

Each processing step shown above that the AMF performs based on reception of each piece of identification information may be performed during the present procedure or after the present procedure is completed or may be performed based on completion of the present procedure after the present procedure is completed.

Each apparatus may also perform processing based on information transmitted and/or received in the present procedure, based on completion of the present procedure. For example, each apparatus may release the context of the LTE in a case that update information for configuration information has been transmitted and/or received. The LTE may also initiate network reselection and/or a registration procedure based on completion of the present procedure in a case that information indicating that it is necessary to perform network reselection and/or a registration procedure has been transmitted and/or received.

The UE may also store identification information received together with a deregistration request message or recognize the network's decision based on completion of the present procedure.

For example, the UE may recognize that an onboarding service has been completed in a case that the LTE has transmitted the 31st identification information. The LTE may also recognize that a procedure of providing SNPN information has been completed in a case that the LTE has transmitted the 31st identification information.

The UE may also recognize that an onboarding service has not been completed in a case that the LTE has transmitted the 31st identification information. The LTE may also recognize that a procedure of providing SNPN information has not been completed in a case that the LTE has transmitted the 31st identification information.

The UE may also determine whether an onboarding service has been completed in a case that the LTE has transmitted the 31st identification information. The LTE may also determine whether a procedure of providing SNPN information has been completed in a case that the LTE has transmitted the 31st identification information.

The UE may also recognize that an onboarding service has succeeded in a case that the UE has transmitted the 31st identification information. The UE may also recognize that a procedure of providing SNPN information has succeeded in a case that the UE has transmitted the 31st identification information. The UE may also recognize that provision and/or acquisition of SNPN information has succeeded in a case that the UE has transmitted the 31st identification information.

The UE may also recognize that an onboarding service has failed in a case that the UE has transmitted the 31st identification information. The UE may also recognize that a procedure of providing SNPN information has failed in a case that the UE has transmitted the 31st identification information. The LTE may also recognize that provision and/or acquisition of SNPN information has failed in a case that the UE has transmitted the 31st identification information.

The UE may also determine whether an onboarding service has succeeded or failed in a case that the LTE has transmitted the 31st identification information. The LTE may also determine whether a procedure of providing SNPN information has succeeded or failed in a case that the LTE has transmitted the 31st identification information. The LTE may also determine whether provision and/or acquisition of SNPN information has succeeded or failed in a case that the LTE has transmitted the 31st identification information.

The LTE may also recognize that a timer managed by the LTE and/or the network has expired in a case that the UE has transmitted the 31st identification information. The UE may recognize that registration with which only an onboarding service is available is no longer valid in a case that the UE has transmitted the 31st identification information.

The UE may also recognize that it is not possible to provide and/or acquire SNPN information in a case that the UE has transmitted the 31st identification information. The UE may also recognize that it is not possible to perform an onboarding service in a case that the UE has transmitted the 31st identification information. The UE may also recognize that it is not possible to perform a procedure of providing SNPN information in a case that the LTE has transmitted the 31st identification information.

The UE may also recognize that an onboarding service has been completed in a case that the LTE has transmitted the 31st identification information indicating that an onboarding service has been completed. The LTE may also recognize that a procedure of providing SNPN information has been completed in a case that the UE has transmitted the 31st identification information indicating that a procedure of providing SNPN information has been completed.

The UE may also recognize that an onboarding service has not been completed in a case that the LTE has transmitted the 31st identification information indicating that an onboarding service has not been completed. The LTE may also recognize that a procedure of providing SNPN information has not been completed in a case that the UE has transmitted the 31st identification information indicating that a procedure of providing SNPN information has not been completed.

The UE may also recognize that an onboarding service has succeeded in a case that the LTE has transmitted the 31st identification information indicating that an onboarding service has succeeded. The LTE may also recognize that a procedure of providing SNPN information has succeeded in a case that the UE has transmitted the 31st identification information indicating that a procedure of providing SNPN information has succeeded. The LTE may also recognize that provision and/or acquisition of SNPN information has succeeded in a case that the LTE has transmitted the 31st identification information indicating that provision of SNPN information has succeeded.

The UE may also recognize that an onboarding service has failed in a case that the UE has transmitted the 31st identification information indicating that an onboarding service has failed. The LTE may also recognize that a procedure of providing SNPN information has failed in a case that the LTE has transmitted the 31st identification information indicating that a procedure of providing SNPN information has failed. The UE may also recognize that provision and/or acquisition of SNPN information has failed in a case that the UE has transmitted the 31st identification information indicating that provision of SNPN information has failed.

The LTE may also recognize that a timer managed by the LTE and/or the network has expired in a case that the LTE has transmitted the 31st identification information indicating that a timer has expired. The LTE may also recognize that registration with which only an onboarding service is available is no longer valid in a case that the UE has transmitted the 31st identification information indicating that registration with which only an onboarding service is available is no longer valid.

In a case that the UE has transmitted the 31st identification information, the UE may also recognize content indicated by the transmitted identification information. In a case that the UE has transmitted the 31st identification information, the UE may also recognize that content indicated by the transmitted identification information is not allowed.

The UE may also release or delete a first list in a case that the UE has transmitted the 31st identification information. The LTE may also remove network identification information from a first list in a case that the UE has transmitted the 31st identification information.

More specifically, the UE may release or delete a first list in a case that the UE has transmitted the 31st identification information indicating that an onboarding service has been completed. The UE may also release or delete a first list in a case that the UE has transmitted the 31st identification information indicating that a procedure of providing SNPN information has been completed.

The UE may also release or delete a first list in a case that the UE has transmitted the 31st identification information indicating that an onboarding service has succeeded. The UE may also release or delete a first list in a case that the UE has transmitted the 31st identification information indicating that a procedure of providing SNPN information has succeeded. The UE may also release or delete a first list in a case that the UE has transmitted the 31st identification information indicating that provision of SNPN information has succeeded.

The UE may also release or delete a first list in a case that an onboarding service has been completed. The LTE may also release or delete a first list in a case that a procedure of providing SNPN information has been completed. The UE may also release or delete a first list in a case that acquisition of SNPN information has been completed.

The UE may also release or delete a first list in a case that an onboarding service has succeeded. The LTE may also release or delete a first list in a case that a procedure of providing SNPN information has succeeded. The UE may also release or delete a first list in a case that acquisition of SNPN information has succeeded.

The UE may also release or delete a first list in a case that the UE has received a deregistration accept message. The LTE may also remove network identification information from a first list in a case that the UE has received a deregistration accept message.

Here, the network identification information may be information identifying a network in which the UE is currently located. More specifically, in a case that the UE is located in a PLMN, the network identification information may be information identifying the PLMN in which the UE is currently located. Conversely, in a case that the UE is located in an SNPN, the network identification information may be information identifying the SNPN in which the UE is currently located.

For example, in a case that the present procedure is performed in a first network, the network identification information may be information identifying the first network. More specifically, in a case that the present procedure is performed in a first PLMN, the network identification information may be information identifying the first PLMN. In a case that the present procedure is performed in a first SNPN, the network identification information may be information identifying the first SNPN.

The UE may also perform second network selection in a case that the UE has transmitted the 31st identification information. The UE may also perform second network selection and select a target SNPN in a case that the UE has transmitted the 31st identification information. The UE may also initiate a registration procedure with a new selected network after completing the performing of the second network selection.

More specifically, the UE may perform second network selection in a case that the UE has transmitted the 31st identification information indicating that an onboarding service has been completed. The UE may also perform second network selection in a case that the LTE has transmitted the 31st identification information indicating that a procedure of providing SNPN information has been completed.

The UE may also perform second network selection in a case that the UE has transmitted the 31st identification information indicating that an onboarding service has succeeded. The UE may also perform second network selection in a case that the UE has transmitted the 31st identification information indicating that a procedure of providing SNPN information has succeeded. The LTE may also perform second network selection in a case that the LTE has transmitted the 31st identification information indicating that provision of SNPN information has succeeded.

The UE may also perform second network selection in a case that the UE has received a deregistration accept message. The LTE may also perform second network selection and select a target SNPN in a case that the UE has received a deregistration accept message. The LTE may also initiate a registration procedure with a new selected network after completing the performing of the second network selection.

Conversely, the UE may add network identification information to a first list in a case that the UE has transmitted the 31st identification information. The UE may also create a first list and add network identification information to the created first list in a case that the LTE has transmitted the 31st identification information.

More specifically, the LTE may add network identification information to a first list in a case that the LTE has transmitted the 31st identification information indicating that an onboarding service has not been completed. The LTE may also add network identification information to a first list in a case that the LTE has transmitted the 31st identification information indicating that a procedure of providing SNPN information has not been completed.

The UE may also add network identification information to a first list in a case that the LTE has transmitted the 31st identification information indicating that an onboarding service has failed. The LTE may also add network identification information to a first list in a case that the LTE has transmitted the 31st identification information indicating that a procedure of providing SNPN information has failed. The LTE may also add network identification information to a first list in a case that the UE has transmitted the 31st identification information indicating that provision of SNPN information has failed.

The UE may also add network identification information to a first list in a case that the UE has transmitted the 31st identification information indicating that a timer has expired. The UE may also add network identification information to a first list in a case that the LTE has transmitted the 31st identification information indicating that registration with which only an onboarding service is available is no longer valid.

The UE may also add network identification information to a first list in a case that an onboarding service has not been completed. The LTE may also add network identification information to a first list in a case that a procedure of providing SNPN information has not been completed. The UE may also add network identification information to a first list in a case that acquisition of SNPN information has not been completed.

The UE may also add network identification information to a first list in a case that an onboarding service has failed. The LTE may also add network identification information to a first list in a case that a procedure of providing SNPN information has failed. The UE may also add network identification information to a first list in a case that acquisition of SNPN information has failed.

The UE may also add network identification information to a first list in a case that the UE has received a deregistration accept message. The UE may also create a first list and add network identification information to the created first list in a case that the UE has received a deregistration accept message.

Here, the network identification information may be information identifying a network in which the UE is currently located. More specifically, in a case that the UE is located in a PLMN, the network identification information may be information identifying the PLMN in which the UE is currently located. Conversely, in a case that the UE is located in an SNPN, the network identification information may be information identifying the SNPN in which the UE is currently located.

For example, in a case that the present procedure is performed in a first network, the network identification information may be information identifying the first network. More specifically, in a case that the present procedure is performed in a first PLMN, the network identification information may be information identifying the first PLMN. In a case that the present procedure is performed in a first SNPN, the network identification information may be information identifying the first SNPN.

The UE may also perform the first network selection again in a case that the UE has transmitted the 31st identification information. The UE may also perform the first network selection again and select a different network than a network in which the UE is currently located in a case that the UE has transmitted the 31st identification information. The UE may also initiate a registration procedure with a new selected network after completing the performing of the first network selection again.

More specifically, the UE may perform the first network selection again in a case that the LTE has transmitted the 31st identification information indicating that an onboarding service has not been completed. The LTE may also perform the first network selection again in a case that the LTE has transmitted the 31st identification information indicating that a procedure of providing SNPN information has not been completed.

The UE may also perform the first network selection again in a case that the UE has transmitted the 31st identification information indicating that an onboarding service has failed. The UE may also perform the first network selection again in a case that the UE has transmitted the 31st identification information indicating that a procedure of providing SNPN information has failed. The UE may also perform the first network selection again in a case that the UE has transmitted the 31st identification information indicating that provision of SNPN information has failed.

The UE may also perform the first network selection again in a case that the UE has transmitted the 31st identification information indicating that a timer has expired. The UE may also perform the first network selection again in a case that the UE has transmitted the 31st identification information indicating that registration with which only an onboarding service is available is no longer valid.

The UE may also perform the first network selection again in a case that the UE has received a deregistration accept message. The LTE may also perform the first network selection again and select a different network than a network in which the UE is currently located in a case that the LTE has received a deregistration accept message. The LTE may also initiate a registration procedure with a new selected network after completing the performing of the first network selection again.

The UE may also start a timer in a case that the UE has transmitted the 31st identification information. The UE may also start a timer in a case that the UE has received a deregistration accept message.

Here, the timer may be a timer that indicates a time limit within which a first list is managed. In other words, the UE may release or delete a first list based on expiration of the timer.

The timer may also be a timer that indicates a time limit within which a registration procedure is prohibited. In other words, the UE may initiate a registration procedure based on expiration of the timer.

A behavior to be performed in a case that each piece of identification information has been transmitted may be performed based on the transmitted identification information. For example, a behavior to be performed in a case that the 31st identification information has been transmitted may be performed based on the transmitted 31st identification information.

In the above procedure, an apparatus in the core network can indicate to the LTE to release configuration information that the LTE has already applied or indicate to the UE to stop or change a function that the UE is performing by transmitting and/or receiving a deregistration request message.

### 4. First Embodiment

Next, a first embodiment will be described. Hereinafter, the first embodiment will be referred to as the present embodiment. In the present embodiment, a LTE performs a first procedure.

The LTE may also determine whether to perform the first procedure based on configuration information of the LTE, information received from the network, the mode of the UE, and/or capability information of the UE.

### 4.1. First Procedure

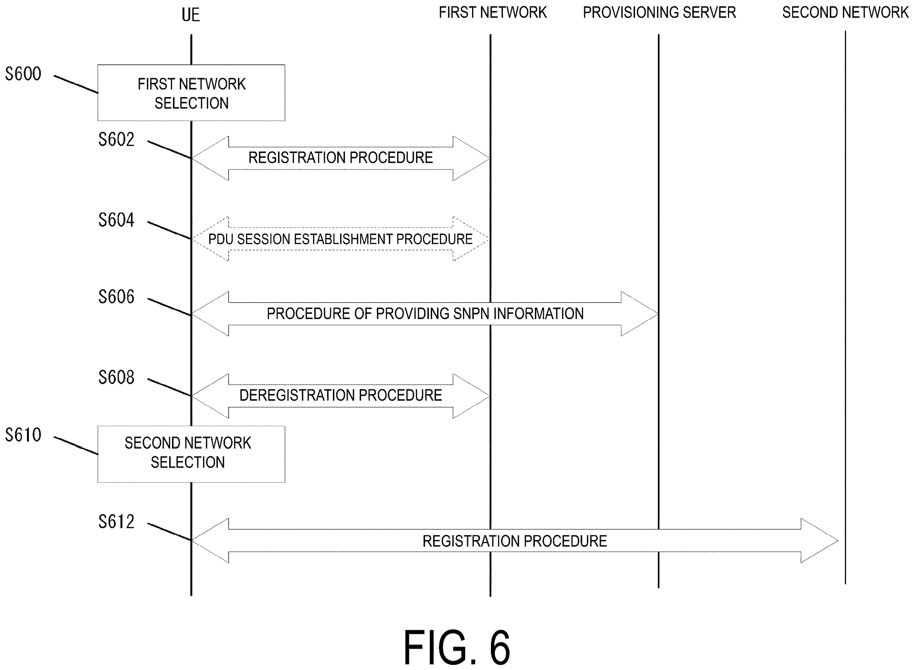

Next, the first procedure will be described using FIG. 6. Hereinafter, the first procedure is referred to as the present procedure. In the first procedure, first, the UE performs first network selection (S600). Then, based on the first network selection, the UE connects to the selected first network and initiates a registration procedure with the first network (S602). Each apparatus then performs a registration procedure with the first network based on initiation of the registration procedure.

In other words, the LTE may perform a registration procedure for an onboarding service after connecting to the selected first network. In other words, each apparatus may perform a registration procedure for an onboarding service after the UE connects to the first network. The registration procedure for an onboarding service may be referred to as a registration procedure for onboarding or an onboarding registration procedure.

Here, the first network may be an onboarding network. The first network may also be an SNPN or a PLMN. The first network may also be an onboarding SNPN (O-SNPN) or an onboarding PLMN (O-PLMN).

An SNPN selection process may be performed in a case that the LTE performs first network selection. In other words, the UE may perform an SNPN selection process in a case of selecting a first network.

A PLMN selection process may also be performed in a case that the LTE performs first network selection. In other words, the UE may perform a PLMN selection process in a case of selecting a first network.

An onboarding network selection process may also be performed in a case that the UE performs first network selection. In other words, the UE may perform an onboarding network selection process in a case of selecting a first network.

The LTE may also perform a PLMN selection process in a case that no first network is found in an SNPN selection process.

The LTE may also perform an SNPN selection process in a case that no first network is found in a PLMN selection process.

The UE may also select a PLMN as a first network in a PLMN selection process. Specifically, the UE may select a PLMN as a first network in the PLMN selection process and transmit a registration request message to the first network.

The UE may also select an SNPN as a first network in an SNPN selection process. Specifically, the UE may select an SNPN as a first network in the SNPN selection process and transmit a registration request message to the first network.

The LTE may also select an SNPN or a PLMN as a first network in an SNPN selection process. Specifically, the LTE may select an SNPN or a PLMN as a first network in the SNPN selection process and transmit a registration request message to the first network.

Here, the UE may determine which of an SNPN and a PLMN to select as a first network based on information that has been configured in advance.

The LTE may also select a PLMN or an SNPN as a first network in a PLMN selection process. Specifically, the LTE may select a PLMN or an SNPN as a first network in the PLMN selection process and transmit a registration request message to the first network.

The LTE may also select a PLMN or an SNPN as a first network in an onboarding network selection process. Specifically, the LTE may select a PLMN or an SNPN as a first network in an onboarding network selection process and transmit a registration request message to the first network.

Here, the UE may perform an SNPN selection process in a case of selecting a first network, and in a case that no first network is found in the SNPN selection process, perform a PLMN selection process, select a PLMN as a first network in the PLMN selection process, and transmit a registration request message to the first network.

Here, the UE may also perform an PLMN selection process in a case of selecting a first network, and in a case that no first network is found in the PLMN selection process, perform an SNPN selection process, select an SNPN as a first network in the SNPN selection process, and transmit a registration request message to the first network.

Here, the UE may perform an SNPN selection process in a case of selecting a first network, select an SNPN or a PLMN as a first network in the SNPN selection process, and transmit a registration request message to the first network.

Here, the UE may also perform a PLMN selection process in a case of selecting a first network, select a PLMN or an SNPN as a first network in the PLMN selection process, and transmit a registration request message to the first network.

Here, the LTE may perform an onboarding network selection process in a case of selecting a first network, select a PLMN or an SNPN as a first network in the onboarding network selection process, and transmit a registration request message to the first network.

Here, the UE may perform an SNPN selection process in a case that the first network is an SNPN. The UE may also perform a PLMN selection process in a case that the first network is a PLMN. Specifically, the UE may perform an SNPN selection process and transmit a registration request message to a first network in a case that the first network is an SNPN. The UE may also perform a PLMN selection process and transmit a registration request message to a first network in a case that the first network is a PLMN.

The UE may also determine whether a first network is an SNPN or a PLMN based on information received from an RRC layer below a NAS layer. In other words, the UE may determine whether a first network is an SNPN or a PLMN in a case that the UE has received information from the RRC layer below the NAS layer.

The LTE may also determine that a first network is an SNPN based on information indicating an SNPN received from the RRC layer below the NAS layer. In other words, the UE may determine that a first network is an SNPN in a case that the UE has received information indicating an SNPN from the RRC layer below the NAS layer.

The LTE may also determine that a first network is an SNPN based on information received from the RRC layer below the NAS layer, the information indicating that an SNPN is available. In other words, the UE may determine that a first network is an SNPN in a case that the UE has received information from the RRC layer below the NAS layer, the information indicating that an SNPN is available.

The LTE may also determine that a first network is an SNPN based on information received from the RRC layer below the NAS layer, the information indicating that no PLMN is available. In other words, the LTE may determine that a first network is an SNPN in a case that the UE has received information from the RRC layer below the NAS layer, the information indicating that no PLMN is available.

The LTE may also determine that a first network is a PLMN based on information indicating a PLMN received from the RRC layer below the NAS layer. In other words, the UE may determine that a first network is a PLMN in a case that the UE has received information indicating a PLMN from the RRC layer below the NAS layer.

The LTE may also determine that a first network is a PLMN based on information received from the RRC layer below the NAS layer, the information indicating that a PLMN is available. In other words, the UE may determine that a first network is a PLMN in a case that the UE has received information from the RRC layer below the NAS layer, the information indicating that a PLMN is available.

The LTE may also determine that a first network is a PLMN based on information received from the RRC layer below the NAS layer, the information indicating that no SNPN is available. In other words, the UE may determine that a first network is a PLMN in a case that the UE has received information from the RRC layer below the NAS layer, the information indicating that no SNPN is available.

Here, the RRC layer of the NAS layer may be referred to as a layer below a NAS layer or may be referred to as a lower layer.

The UE may also determine whether a first network is an SNPN or a PLMN based on information that has been configured in advance. In other words, the UE may determine whether a first network is an SNPN or a PLMN in a case that the UE holds information that has been configured in advance.

The LTE may also determine that a first network is an SNPN based on information that has been configured in advance, the information indicating an SNPN. In other words, the LTE may determine that a first network is an SNPN in a case that information indicating an SNPN has been configured in advance.

The LTE may also determine that a first network is an SNPN based on information that has been configured in advance, the information indicating that an SNPN is available. In other words, the UE may determine that a first network is an SNPN in a case that information indicating that an SNPN is available has been configured in advance.

The LTE may also determine that a first network is an SNPN based on information that has been configured in advance, the information indicating that no PLMN is available. In other words, the UE may determine that a first network is an SNPN in a case that information indicating that no PLMN is available has been configured in advance.

The LTE may also determine that a first network is a PLMN based on information that has been configured in advance, the information indicating a PLMN. In other words, the LTE may determine that a first network is a PLMN in a case that information indicating a PLMN has been configured in advance.

The LTE may also determine that a first network is a PLMN based on information that has been configured in advance, the information indicating that a PLMN is available. In other words, the UE may determine that a first network is a PLMN in a case that information indicating that a PLMN is available has been configured in advance.

The LTE may also determine that a first network is a PLMN based on information that has been configured in advance, the information indicating that no SNPN is available. In other words, the UE may determine that a first network is a PLMN in a case that information indicating that no SNPN is available has been configured in advance.

Here, the information that has been configured in advance may be referred to as previously configured information or preconfigured information.

Here, the UE may perform a registration procedure for an onboarding service in an SNPN access operation mode in a case that the UE performs an SNPN selection process in a case of performing first network selection. In other words, the UE may transmit a registration request message to a first network in the SNPN access operation mode in a case that the UE performs an SNPN selection process in a case of performing first network selection.

Here, the UE may perform a registration procedure for an onboarding service in a mode other than the SNPN access operation mode in a case that the LTE performs a PLMN selection process in a case of performing first network selection. In other words, the UE may transmit a registration request message to a first network in a mode other than the SNPN access operation mode in a case that a PLMN selection process is performed in a case that the LTE performs first network selection.

Here, the UE may perform a registration procedure for an onboarding service in the SNPN access operation mode in a case that the LTE performs an onboarding network selection process in a case of performing first network selection. In other words, the UE may transmit a registration request message to a first network in the SNPN access operation mode in a case that the UE performs an onboarding network selection process in a case of performing first network selection.

The UE may also perform a registration procedure for an onboarding service in a mode other than the SNPN access operation mode in a case that the LTE performs an onboarding network selection process in a case of performing first network selection. In other words, the LTE may transmit a registration request message to a first network in a mode other than the SNPN access operation mode in a case that the LTE performs an onboarding network selection process in a case of performing first network selection.

The UE may also perform a registration procedure for an onboarding service in an onboarding network access operation mode in a case that the UE performs an onboarding network selection process in a case of performing first network selection. In other words, the LTE may transmit a registration request message to a first network in the onboarding network access operation mode in a case that the LTE performs an onboarding network selection process in a case of performing first network selection.

Here, the UE may operate in the SNPN access operation mode in a case that an SNPN selection process is performed in a case that the LTE performs first network selection. Specifically, the LTE may operate in the SNPN access operation mode and perform a registration procedure for an onboarding service in a case that an SNPN selection process is performed in a case that the UE performs first network selection. In other words, the UE may operate in the SNPN access operation mode and transmit a registration request message to a first network in a case that an SNPN selection process is performed in a case that the LTE performs first network selection.

Here, the UE may not operate in the SNPN access operation mode in a case that a PLMN selection process is performed in a case that the LTE performs first network selection. Specifically, the UE may perform a registration procedure for an onboarding service rather than operating in the SNPN access operation mode in a case that a PLMN selection process is performed in a case that the UE performs first network selection. In other words, the UE may transmit a registration request message to a first network rather than operating in the SNPN access operation mode in a case that a PLMN selection process is performed in a case that the LTE performs first network selection.

Here, the UE may operate in the SNPN access operation mode in a case that an onboarding network selection process is performed in a case that the LTE performs first network selection. Specifically, the UE may operate in the SNPN access operation mode and perform a registration procedure for an onboarding service in a case that an onboarding network selection process is performed in a case that the LTE performs first network selection. In other words, the UE may operate in the SNPN access operation mode and transmit a registration request message to a first network in a case that an onboarding network selection process is performed in a case that the LTE performs first network selection.

The UE may also not operate in the SNPN access operation mode in a case that an onboarding network selection process is performed in a case that the LTE performs first network selection. Specifically, the LTE may perform a registration procedure for an onboarding service rather than operating in the SNPN access operation mode in a case that an onboarding network selection process is performed in a case that the LTE performs first network selection. In other words, the LTE may transmit a registration request message to a first network rather than operating in the SNPN access operation mode in a case that an onboarding network selection process is performed in a case that the LTE performs first network selection.

The UE may also operate in the onboarding network access operation mode in a case that an onboarding network selection process is performed in a case that the LTE performs first network selection. Specifically, the UE may operate in the onboarding network access operation mode and perform a registration procedure for an onboarding service in a case that an onboarding network selection process is performed in a case that the LTE performs first network selection. In other words, the LTE may operate in the onboarding network access operation mode and transmit a registration request message to a first network in a case that an onboarding network selection process is performed in a case that the UE performs first network selection.

Here, a registration procedure for an onboarding service may be a registration procedure implemented in the first network. A registration procedure for an onboarding service may also be a registration procedure for performing registration with which only an onboarding service is available to the LTE. A registration procedure for an onboarding service may also be a registration procedure for performing registration with which an onboarding service can be performed. A registration procedure for an onboarding service may also be a registration procedure performing registration with which a procedure of providing SNPN information can be performed.

In other words, each apparatus may be able to use only an onboarding service in a case that a registration procedure for an onboarding service has been completed normally. Each apparatus may also be able to perform an onboarding service in a case that a registration procedure for an onboarding service has been completed normally. Each apparatus may also be able to perform a procedure of providing SNPN information in a case that a registration procedure for an onboarding service has been completed normally.

The UE may then initiate a PDU session establishment procedure in the first network based on completion of the registration procedure (S604). Each apparatus may perform a PDU session establishment procedure in the first network in a case that the PDU session establishment procedure has been initiated.

In other words, the UE may perform a PDU session establishment procedure in the first network after completing the registration procedure for an onboarding service. In other words, each apparatus may perform a PDU session establishment procedure in the first network after completing the registration procedure for an onboarding service.

Next, each apparatus performs a procedure for providing SNPN information based on completion of the registration procedure and/or completion of a PDU session establishment procedure (S606). Next, each apparatus performs a deregistration procedure with the first network based on completion of the procedure for providing SNPN information (S608).

Then, the UE performs second network selection based on completion of the deregistration procedure (S610). Then, based on the second network selection, the UE connects to the selected second network and initiates a registration procedure (S612). Each apparatus then performs a registration procedure in the second network based on initiation of the registration procedure. The above completes the first procedure.

Here, the first network may be an SNPN or a PLMN. The first network may also be a network for use in onboarding services.

The second network may also be an SNPN. The second network may also be a network that the UE has attempted to connect to. The second network may also be a target SNPN.

The second network may also be a different network than the first network. Conversely, the second network may be the same network as the first network.

Here, the network for use in onboarding services may be a network for each apparatus to perform an onboarding service. In other words, the network for use in onboarding services may be a network for each apparatus to perform a procedure of providing SNPN information. The network for use in onboarding services may also be an onboarding network.

The network for use in onboarding services may also be a network that restricts use of services other than onboarding services. The network for use in onboarding services may also be a network with which only an onboarding service is available. The network for use in onboarding services may be realized by an SNPN or a PLMN.

The procedure of providing SNPN information may also be implemented between the UE and a provisioning server. Here, the provisioning server may be present in the first network. The provisioning server may also be present in the second network. Conversely, the provisioning server may be present in a network different from the first and second networks.

The PDU session establishment procedure may also be a procedure for establishing a PDU session for a procedure of providing SNPN information. In other words, a PDU session establishment procedure may be a procedure for establishing a PDU session used in a procedure of providing SNPN information. The PDU session establishment procedure may also be a procedure for establishing a PDU session for use in onboarding services. The PDU session establishment procedure may also be a procedure for establishing a PDU session used in the onboarding service.

The PDU session establishment procedure may also be a procedure for establishing a PDU session for an onboarding service. In the PDU session establishment procedure, each apparatus may also establish a PDU session for an onboarding service.

Here, the UE may determine whether to perform a PDU session establishment procedure based on identification information transmitted and/or received in a registration procedure. For example, the UE may initiate a PDU session establishment procedure in a case that the LTE has recognized in a registration procedure that use of a procedure of providing SNPN information is allowed. More specifically, the UE may initiate a PDU session establishment procedure in a case that the LTE has recognized in a registration procedure that use of a procedure of providing SNPN information via a user plane is allowed. The UE may also initiate a PDU session establishment procedure in a case that the LTE has recognized that use of a procedure of providing SNPN information using PCOs or ePCOs is allowed.

Conversely, the UE may not initiate a PDU session establishment procedure in a case that the LTE has recognized in a registration procedure that use of a procedure of providing SNPN information via a control plane is allowed. More specifically, the UE may not initiate a PDU session establishment procedure in a case that the UE has recognized in a registration procedure that use of a procedure of providing SNPN information using a URSP is allowed.

The UE may also establish a PDU session for an onboarding service in a PDU session establishment procedure.

The LTE may also release the PDU session for an onboarding service in a case of moving to another network. In other words, the LTE may release the PDU session for an onboarding service in a case of moving to another network after completing a PDU session establishment procedure.

The UE may also perform local release of the PDU session for an onboarding service in a case of moving to another network. In other words, the LTE may perform local release of the PDU session for an onboarding service in a case of moving to another network after completing a PDU session establishment procedure.

The LTE may also release the PDU session for an onboarding service in a case of moving to the EPS. In other words, the LTE may release the PDU session for an onboarding service in a case of moving to the EPS after completing a PDU session establishment procedure.

The LTE may also perform local release of the PDU session for an onboarding service in a case of moving to the EPS. In other words, the LTE may perform local release of the PDU session for an onboarding service in a case of moving to the EPS after completing a PDU session establishment procedure.

The LTE may also not map the PDU session for an onboarding service to a PDN connection in a case of moving to the EPS. In other words, the LTE may be configured not to map the PDU session for an onboarding service to a PDN connection in a case of moving to the EPS after completing a PDU session establishment procedure.

The UE may also not establish a PDN connection corresponding to the PDU session for an onboarding service in the EPS in a case of moving to the EPS. In other words, the UE may be configured not to establish a PDN connection corresponding to the PDU session for an onboarding service in the EPS in a case of moving to the EPS after completing a PDU session establishment procedure.

The LTE may also release the PDU session for an onboarding service in a case of moving to another PLMN or another SNPN. In other words, the UE may release the PDU session for an onboarding service in a case of moving to another PLMN or another SNPN after completing a PDU session establishment procedure.

The UE may also perform local release of the PDU session for an onboarding service in a case of moving to another PLMN or another SNPN. In other words, the UE may perform local release of the PDU session for an onboarding service in a case of moving to another PLMN or another SNPN after completing a PDU session establishment procedure.

Also, in a case of moving to another PLMN or another SNPN, the UE may not move the PDU session for an onboarding service to the new PLMN or the new SNPN. In other words, the UE may be configured not to, in a case of moving to another PLMN or another SNPN after completing a PDU session establishment procedure, move the PDU session for an onboarding service to the new PLMN or the new SNPN.

Also, in a case of moving to another PLMN or another SNPN, the LTE may not incorporate information associated with the PDU session for an onboarding service into a registration request message in a registration procedure performed in the new PLMN or the new SNPN. In other words, the LTE may be configured not to, in a case of moving to another PLMN or another SNPN after completing a PDU session establishment procedure, incorporate information associated with the PDU session for an onboarding service into a registration request message in a registration procedure performed in the new PLMN or the new SNPN.

Here, the information associated with the PDU session may be S-NSSAI associated with the PDU session. The information associated with the PDU session may also be mapped S-NSSAI associated with the PDU session. The information associated with the PDU session may also be a DNN associated with the PDU session or a PDU session ID that identifies the PDU session.

Here, the release of a PDU session for an onboarding service may be realized by performing a PDU session release procedure or by performing local release of the PDU session. In other words, each apparatus may release a PDU session for an onboarding service by performing a PDU session release procedure. Each apparatus may also release a PDU session for an onboarding service by performing local release of the PDU session for the onboarding service.

The PDU session release procedure may also be a LTE-requested PDU session release procedure or a network-requested PDU session release procedure.

The UE transmits a PDU SESSION RELEASE REQUEST message to the SMF in a case that the PDU session release procedure is a UE-requested PDU session release procedure. The SMF then receives the PDU session release request from the UE. The SMF transmits a PDU SESSION RELEASE COMMAND message to the UE after receiving the PDU session release request message. The UE then receives the PDU SESSION RELEASE COMMAND message from the SMF. The UE transmits a PDU SESSION RELEASE COMPLETE message to the SMF after receiving the PDU SESSION RELEASE COMMAND message. Finally, the SMF receives the PDU SESSION RELEASE COMPLETE message from the UE.

Conversely, the SMF transmits a PDU SESSION RELEASE COMMAND message to the UE in a case that the PDU session release procedure is a network-requested PDU session release procedure. The UE then receives the PDU SESSION RELEASE COMMAND message from the SMF. The UE transmits a PDU SESSION RELEASE COMPLETE message to the SMF after receiving the PDU SESSION RELEASE COMMAND message. Finally, the SMF receives the PDU SESSION RELEASE COMPLETE message from the UE.

A deregistration procedure may also be performed based on completion of a procedure of providing SNPN information. Specifically, each apparatus may perform a deregistration procedure based on completion of a procedure of providing SNPN information. Each apparatus may also perform a deregistration procedure based on the success of a procedure of providing SNPN information.

The deregistration procedure may also be performed after completing a procedure of providing SNPN information. Specifically, each apparatus may perform a deregistration procedure after completing a procedure of providing SNPN information. Each apparatus may also perform a deregistration procedure after the procedure of providing SNPN information succeeds.

Conversely, the deregistration procedure may be performed not based on completion of a procedure of providing SNPN information. Specifically, each apparatus may perform a deregistration procedure based on expiration of a timer. Each apparatus may also perform a deregistration procedure based on the failure of a procedure of providing SNPN information.

The deregistration procedure may also be performed prior to completion of a procedure of providing SNPN information. Specifically, each apparatus may perform a deregistration procedure in a case that a timer has expired. Each apparatus may also perform a deregistration procedure in a case that a procedure of providing SNPN information has failed.

The deregistration procedure may also be a UE-initiated deregistration procedure in a case that a procedure of providing SNPN information has been completed. In other words, each apparatus may perform a UE-initiated deregistration procedure in a case that a procedure of providing SNPN information has been completed.

The deregistration procedure may also be a UE-initiated deregistration procedure in a case that a procedure of providing SNPN information has succeeded. In other words, each apparatus may perform a LTE-initiated deregistration procedure in a case that a procedure of providing SNPN information has succeeded.

The deregistration procedure may be a UE-initiated deregistration procedure in a case that an onboarding service has been completed. In other words, each apparatus may perform a UE-initiated deregistration procedure in a case that an onboarding service has been completed.

The deregistration procedure may also be a UE-initiated deregistration procedure in a case that an onboarding service has succeeded. In other words, each apparatus may perform a UE-initiated deregistration procedure in a case that an onboarding service has succeeded.

The deregistration procedure may also be a UE-initiated deregistration procedure in a case that a timer managed by the UE has expired. In other words, each apparatus may perform a UE-initiated deregistration procedure in a case that a timer managed by the UE has expired.

Conversely, the deregistration procedure may be a network-initiated deregistration procedure in a case that a procedure of providing SNPN information has not been completed. In other words, each apparatus may perform a network-initiated deregistration procedure in a case that a procedure of providing SNPN information has not been completed.

The deregistration procedure may also be a network-initiated deregistration procedure in a case that a procedure of providing SNPN information has failed. In other words, each apparatus may perform a network-initiated deregistration procedure in a case that a procedure of providing SNPN information has failed.

The deregistration procedure may also be a network-initiated deregistration procedure in a case that an onboarding service has not been completed. In other words, each apparatus may perform a network-initiated deregistration procedure in a case that an onboarding service has not been completed.

The deregistration procedure may also be a network-initiated deregistration procedure in a case that an onboarding service has failed. In other words, each apparatus may perform a network-initiated deregistration procedure in a case that an onboarding service has failed.

The deregistration procedure may also be a network-initiated deregistration procedure in a case that a timer managed by the network has expired. In other words, each apparatus may perform a network-initiated deregistration procedure in a case that a timer managed by the network has expired.

The deregistration procedure may also be a network-initiated deregistration procedure in a case that registration with which only an onboarding service is available is no longer valid. In other words, each apparatus may perform a network-initiated deregistration procedure in a case that registration with which only an onboarding service is available is no longer valid.

Each apparatus may also not perform subsequent procedures in a case that the performing of the procedures in the first procedure has failed. In this case, each apparatus may perform processing based on information included in a control message based on the failure of the performing of the procedures or may perform processing based on information included in a control message to complete the first procedure.

Specifically, in a case that a registration reject message has been transmitted and/or received in a registration procedure, the LTE may perform processing based on information included in the registration reject message or may perform processing based on information included in the registration reject message to complete the first procedure.

Each apparatus may also perform the first procedure again from the beginning in a case that the performing of the procedures in the first procedure has failed. In this case, each apparatus may perform processing based on information included in a control message based on the failure of the performing of the procedures or may perform the first procedure again from the beginning after performing processing based on information included in a control message.

Specifically, in a case that a registration reject message has been transmitted and/or received in a registration procedure, the LTE may perform processing based on information included in the registration reject message or may perform the first network selection again after performing processing based on information included in the registration reject message.

The UE may also be configured not to move to the EPS in a case that a registration procedure for an onboarding service has been completed. The UE may also configure information indicating that the S 1 mode is not supported in capability information of the S 1 mode in a case that a registration procedure for an onboarding service has been completed.

The UE may also be configured not to be able to move to the EPS in a case that registration with which only an onboarding service is available has been completed. The UE may also configure information indicating that the S1 mode is not supported in the capability information of the S 1 mode in a case that registration with which only an onboarding service is available has been completed.

The UE may also be configured not to be able to move to the EPS in a case that the LTE has registered with the network for use in onboarding services. The LTE may also configure information indicating that the S 1 mode is not supported in the capability information of the S 1 mode in a case that the UE has registered with the network for use in onboarding services.

### 5. Modifications

A program that runs on an apparatus according to the present invention may be a program that controls a central processing unit (CPU) or the like to allow a computer to function to implement the functions of the embodiments according to the present invention. The program or information handled by the program is stored temporarily in a volatile memory such as a random access memory (RAM), a nonvolatile memory such as a flash memory, a hard disk drives (HDD), or other storage device systems.

A program for implementing the functions of the embodiments according to the present invention may be recorded in a computer-readable recording medium. The functions may be implemented by a computer system reading and executing the program recorded on the recording medium. The "computer system" referred to here is a computer system built in an apparatus and includes hardware such as an operating system and peripheral devices. The "computer-readable recording medium" may be a semiconductor recording medium, an optical recording medium, a magnetic recording medium, a medium that dynamically holds a program for a short period of time, or other computer-readable recording media.

The functional blocks or the various features of each apparatus used in the embodiments described above can each be implemented or performed on an electric circuit, for example, an integrated circuit or a plurality of integrated circuits. Electric circuits designed to perform the functions described herein may each be a general purpose processor, a digital signal processor (DSP), an application specific integrated circuit (ASIC), a field programmable gate array (FPGA) or other programmable logic devices, discrete gates or transistor logic, discrete hardware components, or a combination thereof. The general purpose processor may be a microprocessor or may be a known processor, controller, microcontroller, or state machine. The electric circuits described above may include digital circuits or analog circuits. In a case that an integrated circuit technology that replaces the current integrated circuits emerges due to advances in semiconductor technology, one or more aspects of the present invention can use new integrated circuits based on the technology.

The present invention is not limited to the above embodiments. The embodiments have been described with respect to examples of apparatuses, but the present invention is not limited to the examples and can be applied to terminal apparatuses or communication apparatuses of stationary or non-mobile electronic equipment installed indoors and outdoors such as AV equipment, kitchen equipment, cleaning/washing equipment, air-conditioning equipment, office equipment, vending machines, or other household equipment.

Although embodiments of the present invention have been described above in detail with reference to the drawings, the specific configurations thereof are not limited to those of the embodiments and also include designs or the like without departing from the spirit of the present invention. The present invention can also be modified in various ways within the scope indicated by the claims and embodiments obtained by appropriately combining the technical means disclosed in the different embodiments are also included in the technical scope of the present invention. Configurations in which elements which are described in the above embodiments and exhibit the same effects are replaced with each other are also included in the technical scope of the present invention.

### Cross-Reference to Related Application

The application claims the benefit of priority of Japanese Patent Application No. 2021-066220 filed on April 9, 2021, the entire content of which is incorporated herein by reference.

### Reference Signs List

1 Mobile communication system
5 PDN_A
6 DN A
10 UE_A
30 PGW-U
32 PGW-C
35 SGW
40 MME
45 eNB
50 HSS
60 PCRF
80 Access network_A (E-UTRAN)
90 Core network_A
120 Access network_B (5G AN)
122 gNB
130 UPF
132 SMF
140 AMF
150 UDM
160 PCF
190 Core network _B

## Claims

1. A User Equipment (LTE) comprising:
a controller, wherein
the controller is configured to:
select a Stand-alone Non-Public Network (SNPN) for an onboarding service in a case of operating in an SNPN access mode; and
perform a registration procedure for an onboarding service.

2. The LTE according to claim 1, the UE further comprises a transmission and/or reception unit,
wherein the transmission and/or reception unit is configured to transmit, in the registration procedure, a registration request message including information relating to onboarding, the information indicating a requested type of the registration procedure.

3. A communication control method performed by a User Equipment (UE), the communication control method comprising:
selecting a Stand-alone Non-Public Network (SNPN) for an onboarding service in a case of operating in an SNPN access mode; and
performing a registration procedure for an onboarding service.
